(19) Europäisches Patentamt

European Patent Office

Office européen des brevets

(11) **EP 1 622 009 A1**

(12) **EUROPEAN PATENT APPLICATION**

(43) Date of publication:
**01.02.2006 Bulletin 2006/05**

(51) Int Cl.:
***G06F 9/44*** *(2006.01)*

(21) Application number: **04291918.3**

(22) Date of filing: **27.07.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicants:
• **TEXAS INSTRUMENTS INCORPORATED Dallas Texas 75265 (US)**
• **TEXAS INSTRUMENTS FRANCE 06271 Villeneuve Loubet Cedex, Nice (FR)**

(72) Inventors:
• **Badl, Eric 06800 Cagnes sur Mer (FR)**
• **Peltier, Mikael 35770 Vern-sur-Seiche (FR)**
• **Cabillic, Gilbert 35530 Brece (FR)**

• **Chauvel, Gerard 292 chemin du valbosquet 06600-Antibes (FR)**
• **D'Inverno, Dominique 06270 Valleneuve-Loubert (FR)**
• **Kuusela, Maija 06370 Mouans Sartoux (FR)**
• **Lasserre, Serge 83600 Frjus (FR)**
• **Lesot, Jean-Philippe 35370 Etrellas (FR)**
• **Majoul, Salam 35000 Rennes (FR)**
• **Mequin, Jacques 06800 Cagnes sur Mer (FR)**

(74) Representative: **Holt, Michael Texas Instruments Limited, European Patents Department (MS 13), PO Box 5069 Northampton NN4 7ZE (GB)**

(54) **JSM architecture and systems**

(57) A JSM system and components including various apparatus and methods are described herein.

EP 1 622 009 A1

EP 1 622 009 A1

**Description**

JSM architecture and systems, and Java-related apparatus and methods are proposed and disclosed herein.

DESCRIPTION OF DRAWINGS

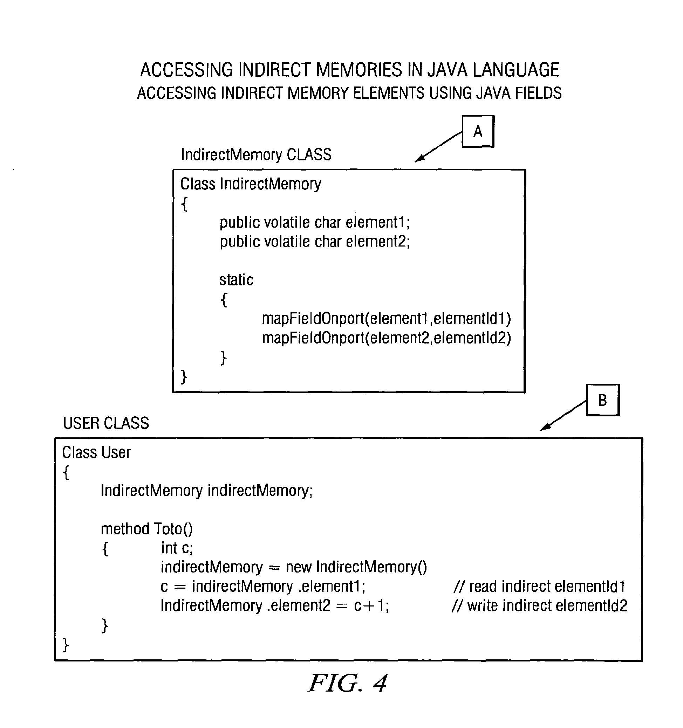

Figures 1-5 relate to accessing indirect memories in the Java language.
Figures 6-8 relate to control flow graph construction using a JSM processor.
Figures 9-12 relate to a dynamic memory translation algorithm.
Figures13-14 relate to an automatic bytecode operand load in a register for usequence.
Figures 15-16 relate to an automatic bytecode operand manipulation in a register for usequence.
Figures 17-20 relate to a ramset oscillations management algorithm for stack based memory block algorithms.
Figures 21-24 relate to save and restore context with a stack based memory blocks management.
Figures 25-27 relate to using a temporary scratchpad with a stack based memory blocks management.
Figures 28-30 relate to an M-bit instruction set size machine on JSM.
Figure 31 relates to using trampoline to remove a usequence local RAM size limitation.
Figure 32 relates to a thread context switch algorithm on JSM base on save and restore context commands.
Figures 33-38 relate to dynamic fixing of memory views.
Figure 39 relates to re-execution of a hardcoded BC usequenced.
Figure 40 relates to a PACK instruction.

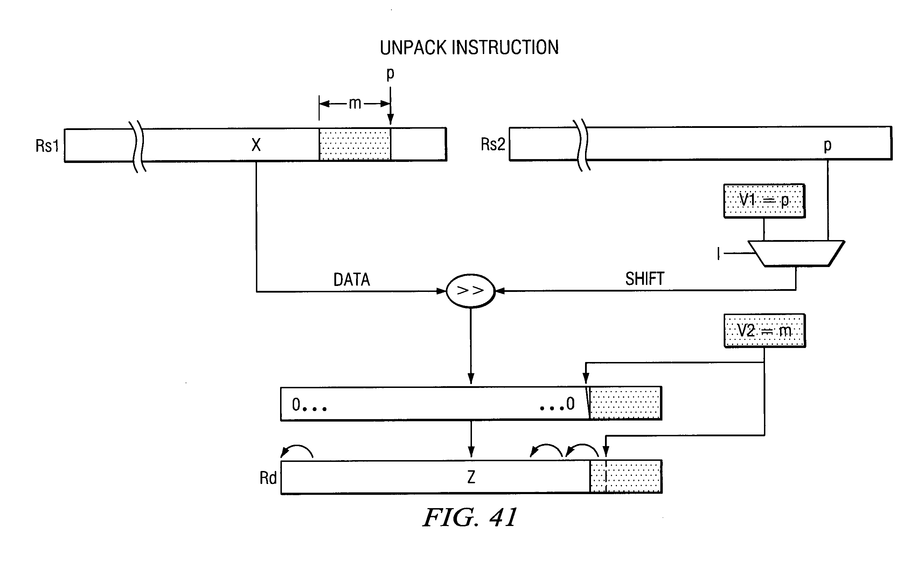

Figure 41 relates to an UNPACK instruction.
Figure 42 relates to a CMPAL instruction.
Figure 43 relates to an LLD instruction.
Figure 44 relates to a DMA construction.
Figures 45-46 relate to a dynamic compiler resolution.
Figure 47 relates to data and runtime monitoring and analysis for compilation.
Figure 48 relates to OS treatment activation.
Figures 49-50 relate to JSM and MPU interrupt management.
Figures 51-52 relate to Java thread abstraction.
Figures 53-58 relate to supporting interrupts in Java.
Figure 59 relates to wide support for micro sequences.
Figures 60-62 relate to adaptable dynamic compiler resolution.
Figure 63 relates to micro stack software use.
Figure 64 relates to multiple object representation.
Figures 65-67 relate to virtual memory in Java.
Figures 68-69 relate to ISR design in Java.
Figures 70-72 relate to a system call design in Java.
Figures 73-77 relate to a nested object approach.

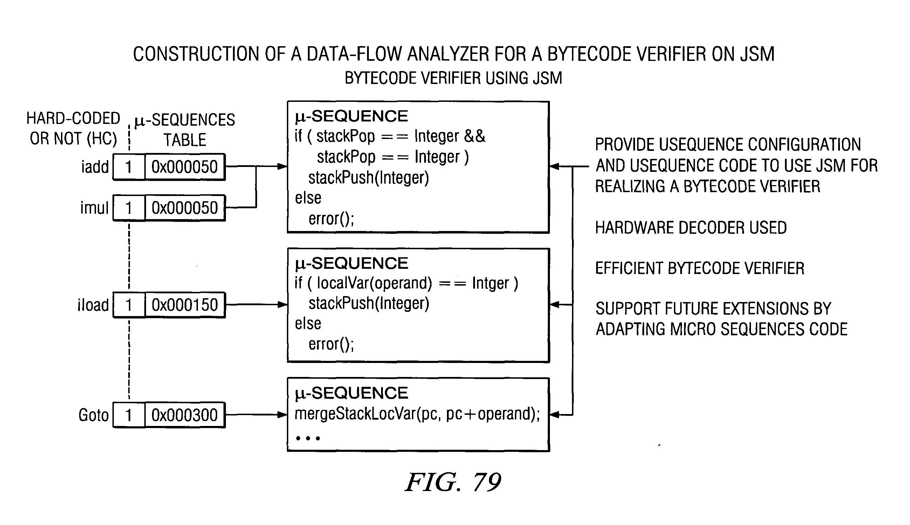

Figures 78-79 relate to construction of a data-flow analyzer for a bytecode verifier on JSM.
Figures 80-81 relate to a merge of compiler and VM actions into one instruction.
Figure 82 relates to a system to disable a wide hardware decoding bytecode prefix.
Figure 83 relates to a wide micro sequence system.
Figures 84-85 relate to splitting the execution of floating point arithmetic operations between hardware and software.

DETAILED DESCRIPTION

I. ACCESSING INDIRECT MEMORIES IN JAVA LANGUAGE

Java bytecode does not enable access to indirect memories. Lots of indirect memories exist: input/output device memory, flash memory card, hard disk, specific non-addressable memory banks, and so on. An indirect memory is accessed using specific data (for example I/O port addresses for I/O memories), in contrast to a direct memory which uses a pointer to access memory. So, the processor uses a different address resolution. For example, to access an I/O memory, a "Read" is done using an "IN"- based processor instruction and a "Write" is done using an "OUT"-based processor instruction. For a disk access, other data are needed to identify the good sectors to be accessed by the processor.
We propose three solutions to access an indirect memory using Java language: 1) Using a native API interface to mask the memory access; 2) using Java fields as indirect memory elements (the mapping is done directly by the JVM Java virtual machine); and 3) using Java arrays to provide an abstraction of a memory for a contiguous set of memory elements. Solutions 2 and 3 rely on an extension of some bytecodes (getfield/putfield based opcodes for solution 2 and astore/aload opcodes for solution 3). Other solutions provides a high granularity support for these memories (like disk write and disk read), but not the disk sector write or read, or ioport write/read. Compared to other solutions, we provide ways to fully manipulate in Java indirect memories. Our first solution comprises using a specific native API to mask the use of the explicit code to access the indirect memory. That solution is not JVM-dependent, in the sense that it relies on an API implementation and not on a bytecode semantic change. Of course, the processor that executes the native API must have access to the indirect memory.

The second solution comprises mapping indirect memory elements to object fields. In this case, the JVM is in charge of making a specific treatment for field access. The solution is generic to any kind of JVM object representations. Compared to the first solution, it avoids call to native methods (first solution), and in the context of JSM architecture where the access could be done in usequences, our process decreases the number of JSM interruptions to the MPU. We increase the overall parallelism of the processor; increase the response time of the application; and decrease the energy consumption of the platform.

The third solution comprises mapping indirect memory elements using an array of objects. In this case, the JVM is in charge of making a specific treatment for arrays and object access. The solution is generic to any kind of JVM object representations. It provides the same advantage as the second solution. We increase the overall parallelism of the processor; increase the response time of the application; and decrease the energy consumption of the platform. Moreover it provides an easy way to the user to manage a very specific memory in a high level way.

1. Memories

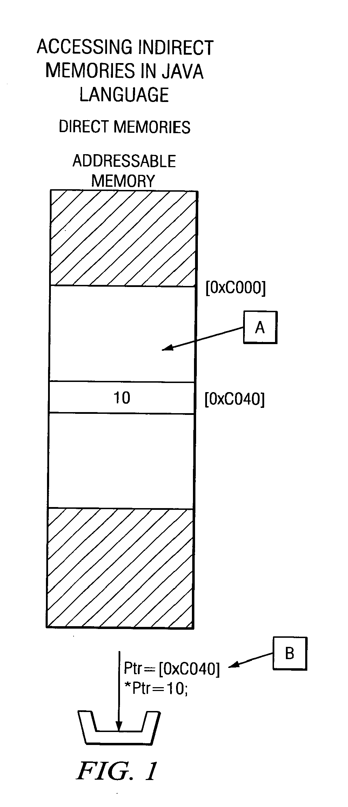

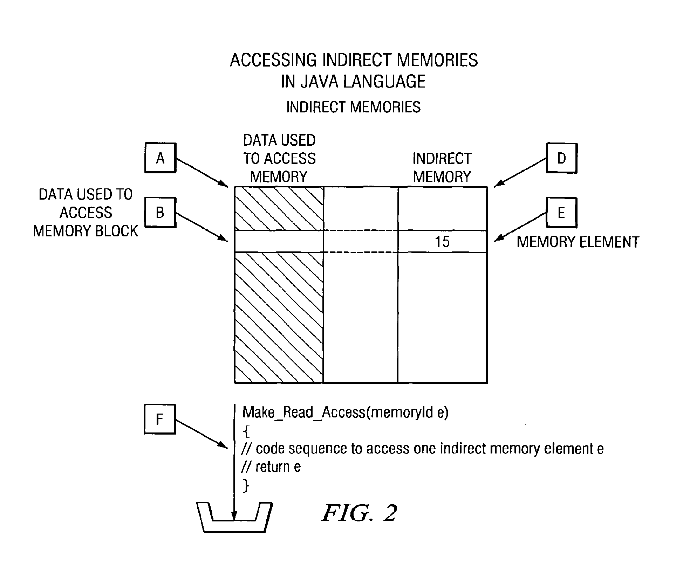

Two kinds of memory exist. In Figure 1, a direct memory (block A) is accessed directly by the CPU using pointers (block B). In contrast, in Figure 2, indirect memories (block D) are not accessed directly by pointers, but by using a specific sequence of instructions using other data (block A). We call these data metadata. Thus, to access one element, the sequence used by the CPU (block F) must use the metadata associated with that element to make the access. So, for example, to access an element of value 15 in the figure (block E), the CPU must use the metadata (block B).

For indirect memories, we make the hypothesis that a unique identifier can be associated with each element of the memory. We denote that identifier by euid (element unique identifier).

We present a way to access these memories most transparently in Java language.

2. Approaches

2.1 Using Specific Native API's for Access

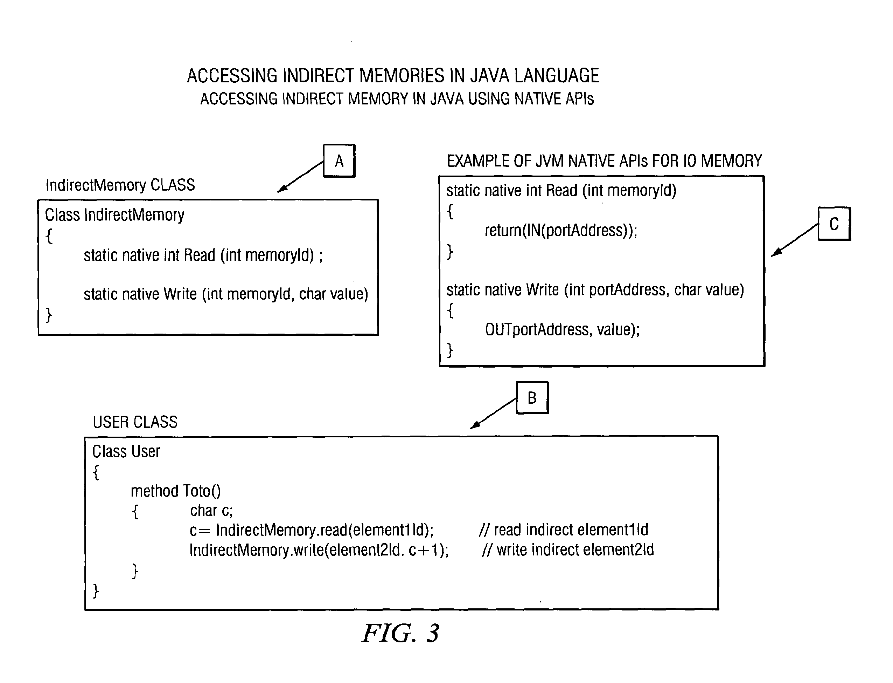

The first solution is based on the use of native APIs to mask the code sequence that makes the real access and the use of metadata. In Figure 3, block A describes the generic prototype of such methods. Thus, for each access of an element using its euid, a Read or Write method is used by the User program (see block B). These methods are realized in native language and, for example in the context of a device input/output memory, use (see block C) low-level "IN" and "OUT" instructions. Of course, the signature of the native methods must be in accordance with the element characteristics of the indirect memory (can be char, unsigned char, short, unsigned short, etc.), so the signature of the native Java methods must use Java language types that are adapted to indirect memory element features. Moreover, in the figure, native methods are declared to static to simplify the access to the methods, but it is not necessary. Thus (see block B), the user can use methods read or write to access the indirect memory. This solution enables the full masking of the indirection for accessing the indirect memory to a user class.

2.2 Using Java Fields

The second solution relies on mapping static fields directly on indirect memory elements with a modification of the JVM for getfield and putfield based opcodes (in Java every field is accessed using getfield and putfield based bytecode). The approach is to define a class (block A) which defines fields that represent indirect memory elements. Like the prior solution, according to the element data features (can be char, unsigned char, short, unsigned short, etc.), the Java language type used for these fields must be adapted to indirect memory data features. Before using the field, a correspondence between the field and the indirect memory element port must be done. In our case, a static constructor is used to set the address of the field to a specific euid port (using a mapFieldOnport like method). So, when a user class accesses these fields (for example class User (block B)), a getfield bytecode is used when reading a field from an IndirectMemory class and a putfield bytecode is used when writing to an IndirectMemory field.

Our solution relies here on a JVM extension because the JVM is then in charge of implementing the getfield or putfield based opcodes. Thus, when a getfield or a getfield is done on a field mapped on an indirect memory element, the JVM generates the code sequence to access the element "IN" low-level instruction. Compared to the previous solution, the access is done directly inside the opcode without any method invocation. Thus, the indirect memory access performance is increased. At last it is very easy for a user to access indirect memory elements when they are not too many.

2.3 Using Java Arrays

The third solution relies on a full mapping in Java of the indirect memory. The approach is to manage the memory directly by a Java array. Each access on an array element is translated into astore/aload based bytecodes. Thus, the JVM is in charge of extending the astore/aload opcodes with the corresponding code sequence needed to access the indirect memory element.

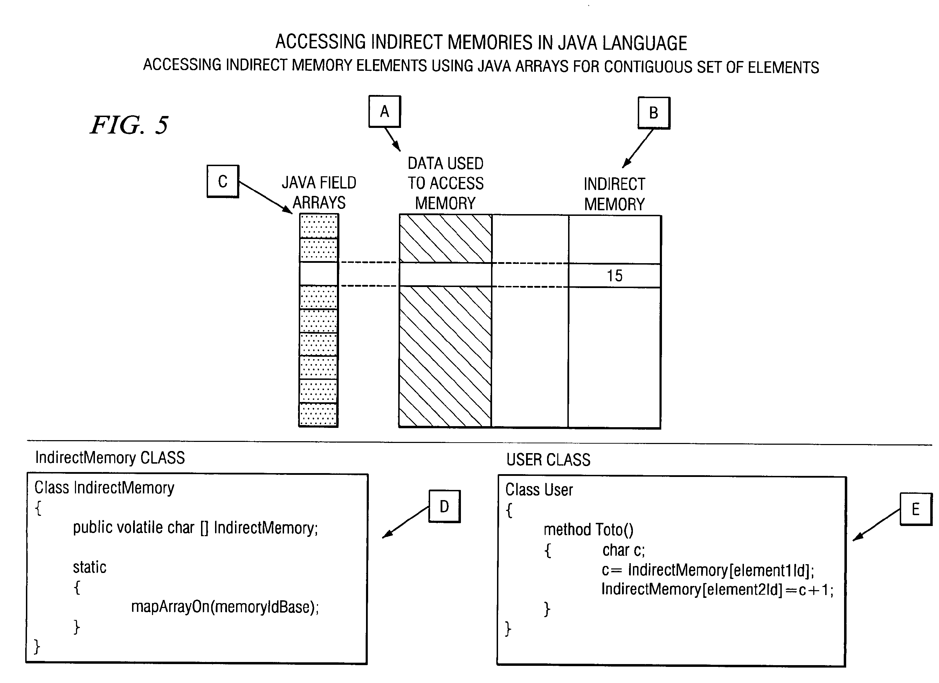

In Figure 5, the memory is represented by an indirect memory class where an array of basic elements is declared (block D). Within that class, a call to a method "mapArrayOn" is done to map physically the array of objects on the indirect memory elements by corresponding each array entry to one element of the indirect memory. By the way, the User accesses the indirect memory by accessing the Java array entries (see block E).
The JVM is in charge of extending the astore/aload based opcodes to the appropriate code sequence of the indirect memory. Of course, the element of the Java array (can be char, unsigned char, short, unsigned short, etc.), must be adapted to indirect memory data features. For each array element (block C), the JVM determines the associated metadata of the indirect memory (block A) used to finally access the indirect memory (block B). Note that a combination of method 3.2 and 3.3 is possible.

II. CONTROL FLOW GRAPH CONSTRUCTION USING A JSM PROCESSOR

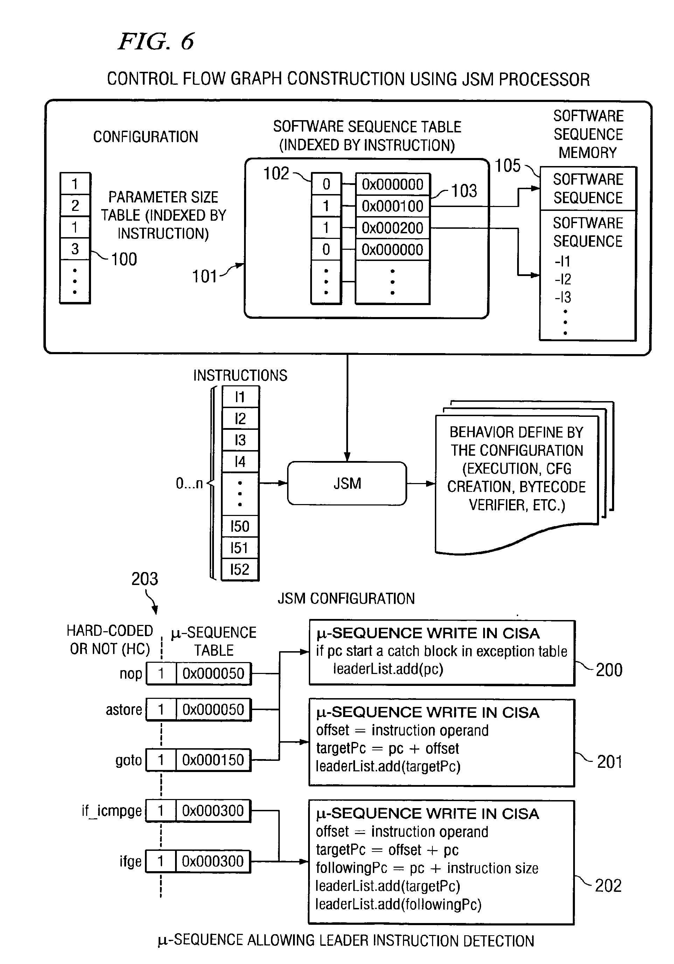

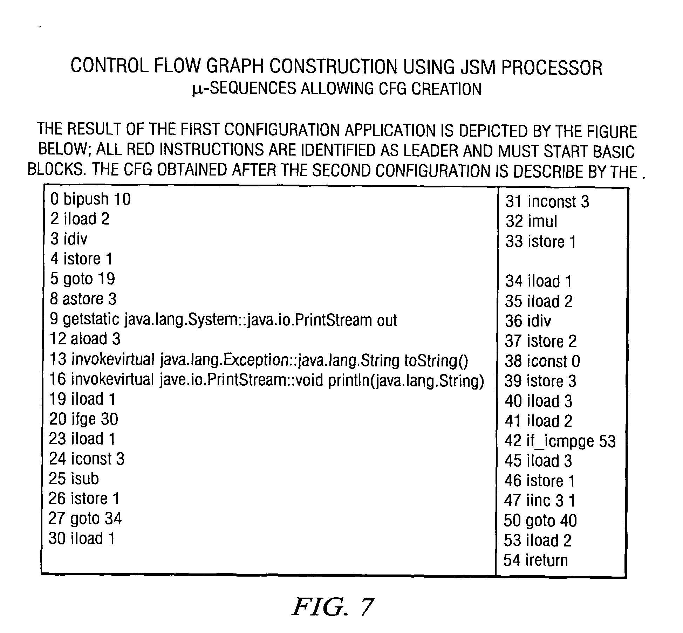

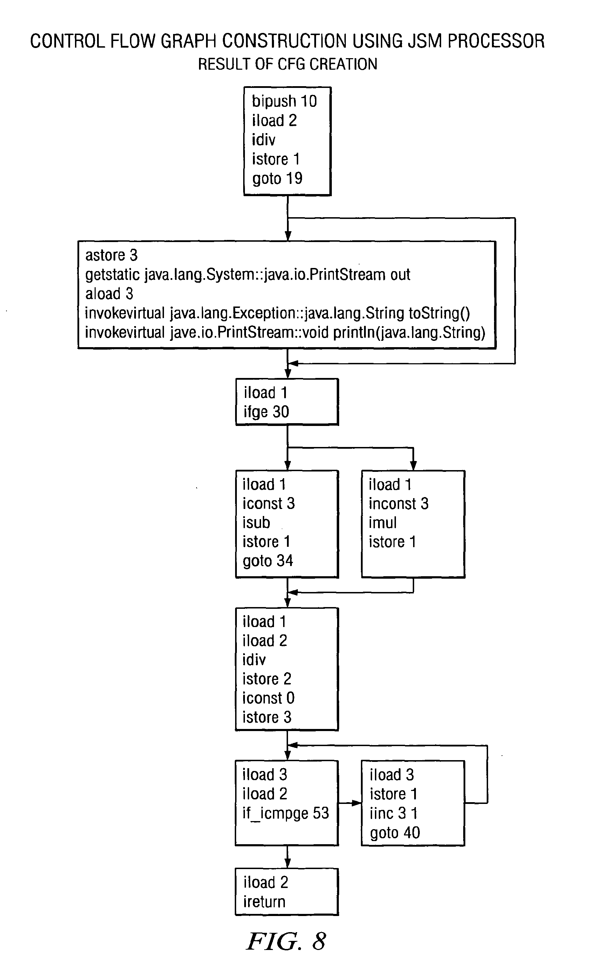

During the compiler design stage, a representation must be built of how a program uses available resources and what the paths are that can be taken when a program is executed. This representation is called a Control Flow Graph (hereafter, CFG) and is used to realize analysis in order to optimize the code of a program. Consequently, CFG construction is one of the obligatory steps when designing and executing a compiler. The execution of this mandatory step consumes time and consequently penalizes the application execution time. In the case of an Ahead-In-Time compiler, the CFG construction increases the application startup time and with a Dynamic Adaptive Compiler this step penalizes the application execution time. We propose a novel way to construct a CFG with a close integration of software and hardware features in order to create in one or several passes the CFG of a program.
Our solution comprises using JSM specific resources (pipeline, PC management and μsequences) to build the CFG. Our approach is to have a particular μsequences configuration with their code to make a CFG construction. In the context of JSM, we can support a CFG building of any 8-bit machine. Our solution can be applied with any processor supporting μsequences (that can be more or less than 8 bits machine code). Other solutions are based on a pure software approach that uses an interpretation loop to scan the program in a linear fashion in order to build the CFG. Our solution uses the JSM hardware resources to build the CFG, thus the CFG creation is more readily useful.
Thanks to the use of JSM Hardware resources, in particular the instruction hardware decoding of JSM, we obtain a significant improvement of performance by integrating hardware and software approaches. Using our solution, the execution time of the CFG construction is minimal for JSM and provides more CPU for other tasks in the system. Thanks to the hardware and software deep integration, the energy consumption during the CFG building is minimal for JSM. CFG building algorithm designers need concentrate only on the work that must be done in function of the input language, for instance with Java, program counters are automatically managed by JSM, users have direct access to operand instruction, etc. We show that we can use JSM not only to execute bytecodes but also in other ways thanks to the μsequence concept. In the context of JSM, we can support a CFG building of any 8-bit machine code. Our solution can be applied with any processor supporting μsequences (that can be more or less than 8 bits of machine code). The approach is detailed in Figures 6 - 8.

III. DYNAMIC MEMORY TRANSLATION ALGORITHM

The address generator of processors provides a fixed addressable mode generally using byte or word addressing. When writing a piece of software that addresses a memory that is not byte or word addressable, the address translation is not managed inside the piece of code, but another representation is used to adapt the software to the low level memory representation. For example, for a display device driver, if the pixel has a size of 4 bits and if the memory is byte addressable, the software coded in a high level language like C or Java will not use an internal representation of 1 pixel but a block of 4 pixels.
We propose a generic software solution allowing one to manage dynamically the address translation of an n -byte based addressable contiguous virtual memory zone to an m-bit based addressable physical memory representation while preserving data values. Taking as inputs both the virtual and the physical address spaces, the size of an addressable data unit of the virtual space and that of the physical space, the translation algorithm fills the physical space with values coming from the virtual memory while taking account of the address mode of the target.

The proposed algorithm is generic in the sense that no restriction is made on the size of an addressable data unit in both virtual and physical memory spaces. We just assume that the number of meaningful bits of an addressable data unit of the virtual space is lower or equal to the size of an addressable data unit of the physical space. It is the responsibility of the software using this algorithm to guaranty that values from the virtual memory can be contained by a smaller representation in the physical memory. Hence, we guaranty that data values will not be lost when translated.

The proposed algorithm does not depend on a particular application. It is generic and can be applied to any piece of software requiring such address translation. It can be used, for instance, in the context of a device driver (display, audio, mouse, pointing device, etc. ) and for the management of protocol network stack layers. The translation algorithm is very flexible, so it can be used for experimentation and rapid prototyping namely in the absence of a dedicated hardware address translation.

The translation algorithm takes five inputs: VS ( the virtual address space); PS ( the physical address space); V_UNIT_SIZE (the number of bits size of an addressable data unit of the virtual space); P_UNIT_SIZE (the number of bits size of an addressable data unit of the physical space); and DATA_SIZE (the total size of data in the virtual space). For each data unit of the virtual address space, the algorithm performs a copy of its value into the physical address space while taking into account the address mode of the target space. The algorithm that we propose is generic in the sense that no restriction is made on V_UNIT_SIZE and P_UNIT_SIZE values. We just assume that the number of meaningful bits of an addressable data unit of the virtual space is lower or equal to P_UNIT_SIZE. It is the responsibility of the software using this algorithm to ensure that values from the virtual memory can be contained by a smaller representation in the physical memory. Hence, we ensure that data value will not be lost when translated.

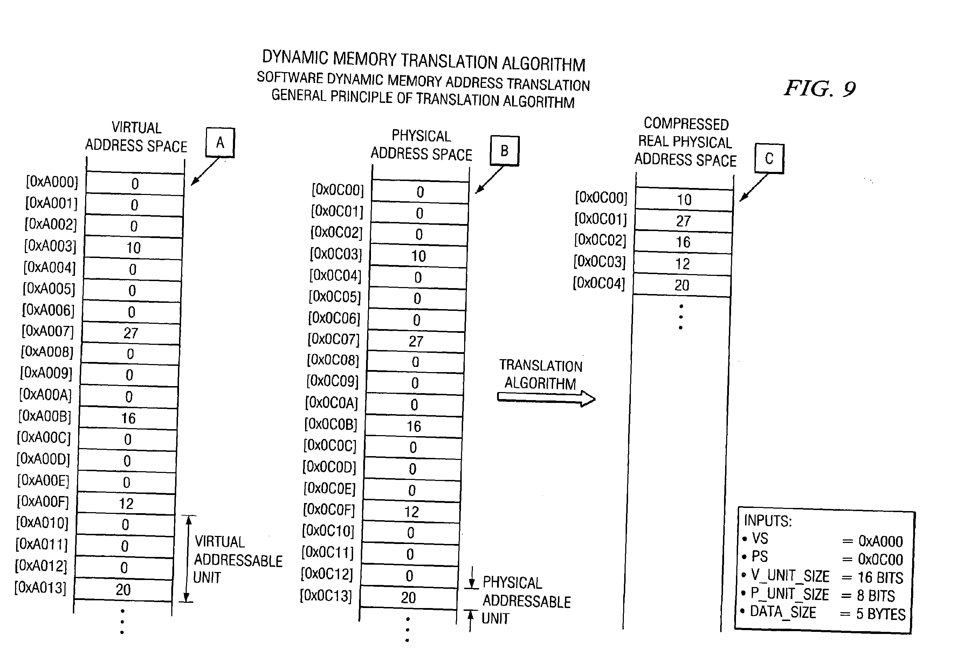

Reference is made to Figures 9-12. Figure 9 illustrates the translation of a virtual memory zone starting at address VS = 0xA000 (bloc k A) into a physical memory starting at address PS = 0x0C00 (block B). In this example, we consider that the size of an addressable data unit of the virtual space (V_UNIT_SIZE) is 32 bits; the size of an addressable data unit of the physical space (P_UNIT SIZE) is 8 bits; and the total size of data to be translated (DATA_SIZE) is 20 bytes. Note that view B in the figure is only representative because the target real memory is the compressed one (block C). After translation, only the meaningful bits of each addressable data unit in the virtual space are kept.

The algorithm allows the target memory to be filled, byte by byte, with values coming from the virtual memory. Figure 9 shows a simple case where V_UNIT_SIZE> P_UNIT_SIZE and P_UNIT_SIZE is equal to the number of bits in one byte. As no restriction is made on V_UNIT_SIZE and P_UNIT_SIZE values, some cases are illustrated in the following section.

1. Case study

In the following, we use BYTE_SIZE to designate the number of bits contained in one byte (here 8). We show how to fill byte by byte the target memory by data coming from the virtual one.

1.1. V_UNIT_SIZE >= P_UNIT_SIZE

Two cases are distinguished.

1.1.1 P_UNIT_SIZE mod BYTE_SIZE = 0

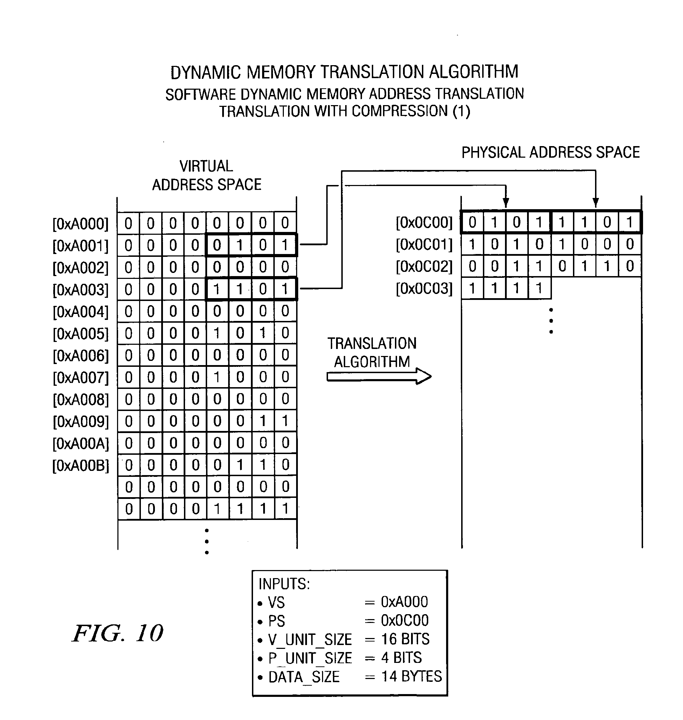

This case is illustrated in Figure 10 with V_UNIT _SIZE = 16 and P_UNIT_SIZE = 4. In the following, we use "series_of_bits" to refer to the series of bits contained in a virtual addressable data unit that will be copied into the physical address space. It contains the least significant P_UNIT_SIZE bits of the virtual data unit. We use "current_byte" to refer to the byte in the physical address space that will be filled by the current series_of_bits. In Figure 10, the byte located at address 0×0C00 contains two series of bits: the first (red-circled area) comes from the virtual data unit at address 0×A000 and the second one (blue-circled area) comes from the virtual data unit located at 0×A002.

1.1.2 P_UNIT_SIZE mod BYTE_SIZE # 0

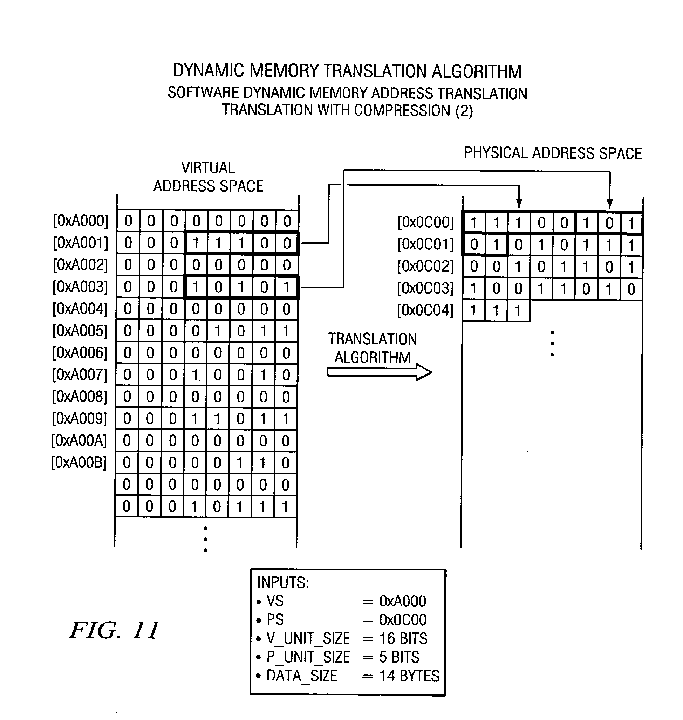

Figure 11 illustrates this situation in which V_UNIT_SIZE = 16 and P_UNIT_SIZE = 5. In this case, bits from a virtual data unit cannot always be copied into one byte of the physical memory space. As shown in the figure, the first byte of the physical memory, located at address 0x0C00, contains the five least significant bits of the data unit located at address 0xA000 in the virtual space (red-circled bits in the figure) followed by only three bits of the second data unit of the virtual space (blue-circled bits in the figure). The two remaining bits are copied into the next byte located at address 0x0C01 of the physical space. So, a series of bits can be either copied entirely in one byte or truncated. In the latter case, only some bits are copied into the current byte and the remaining ones are copied into the next byte. In order to manage this case, we need the following data: truncated (a flag indicating whether the series_of_bits is truncated or not), initially set to false; #empty (the number of empty bits to be filled in the current_byte), initially set to BYTE_SIZE; #copied (the number of bits of the data that can be copied into the current_byte); and #remaining (the number of bits that cannot be copied into the current_byte but will be copied into the next byte).

1.2 V_UNIT_SIZE < P_UNIT_ SIZE

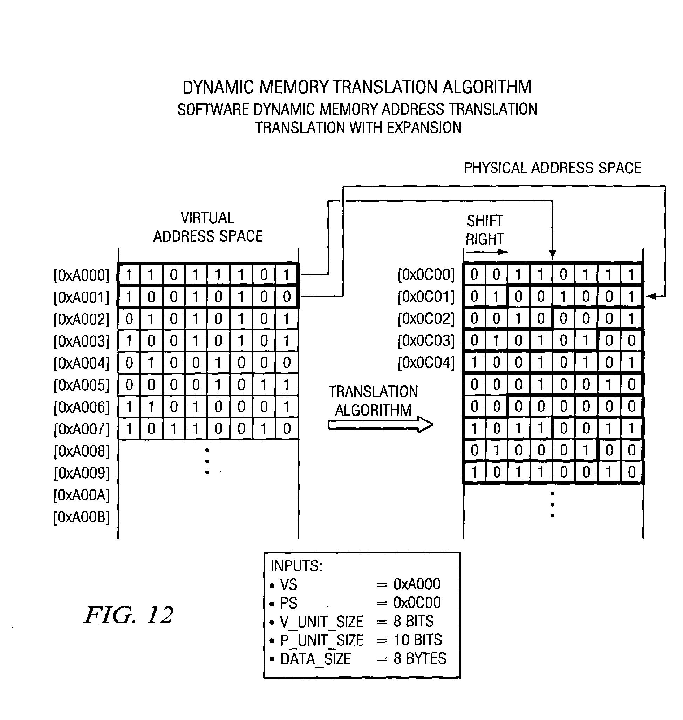

This case is illustrated in Figure 12, with V_UNIT_SIZE = 8 and P _UNIT_SIZE = 10. Here, each series_of_bits contains more bits than a virtual data unit can provide. The least significant 8 bits comes from the virtual space and the most significant two bits are filled with zero value.

2. Algorithm

In order to simplify the algorithm, we have omitted details about sequence of bit-operations (shift, and) allowing to get the series_of_bits nor that allowing to copy some bits into a byte at a given position.

```
while there are bytes in the target space to be filled do
current_byte ← 0;
        #empty ← BYTE_SIZE;
        truncated ← false;
    while #empty > 0 and virtual space contains more data units do
            if not truncated then
                    get from the virtual space the series_of_bits to be copied;
                    update #copied and #remaining according to #empty and
P_UNIT_SIZE;
copy into current_byte the most significant #copied bits
from series_of_bits;
```

#empty ← #empty - #copied;

if #remaining > 0 then

truncated ← true;

//here #empty is necessarily 0;

else // series_of_bits is truncated

copy into current_byte the least significant #remaining bits

from series_of_bits;

#empty ← # empty - #remaining;

truncated ← false;


IV. AUTOMATIC BYTECODE OPERAND LOAD IN A REGISTER FOR USEQUENCE

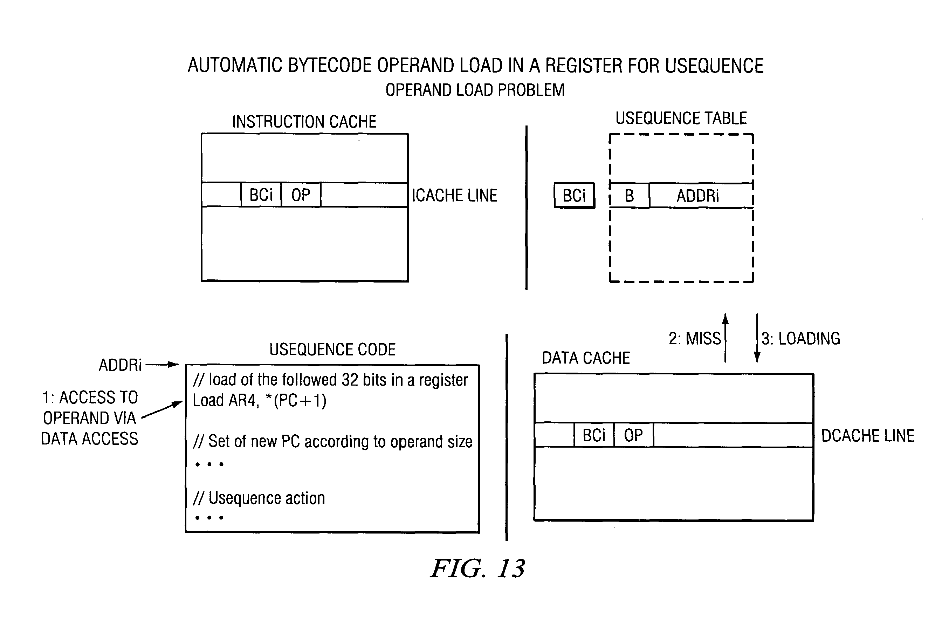

Reference is made to Figures 13 - 14. A usequence is written in CISA code. If the usequence needs to access the operand associated to a bytecode, the only way to access the operand is to make in CISA an access using the PC register. That introduces a cache miss in the data cache, eventually a load of an entry in the cache for a data which is available in the instruction cache of JSM. For example, on Figure 13, the bytecode (BCi) and the operand (OP) is present inside the instruction cache line. If we suppose that BCi is usequenced, the usequence table indicates the address of the code of the usequence to execute (ADDRi). If that usequence needs to load the operand (see usequence code), it is going to make a load using the PC pointer as a base address (step 1). Thus (Step 2) a data cache miss is made and after the resolution, according to the cache allocation policy, a cache line is allocated (step 3). After these steps, the data is loaded inside the register (in the example AR4). At last, the usequence needs to set the new PC value according to the size of the operand.

To avoid that problem, we designed in JSM a mechanism when entering a usequence to automatically load a register with the operand of the bytecode if there is one and taking into account the size of the operand. The operand can be of a size of one byte, a short (2 bytes), or a word (4 bytes). During the loading, the PC is automatically adjusted to its new value according to the size of the operand. That suppresses extra data cache miss to access the operand. That mechanism is controlled by one attribute in each usequence table entries which indicates the size of the operand. All entries of that table can be dynamically programmed, thus the flexibility of JSM is ensured.

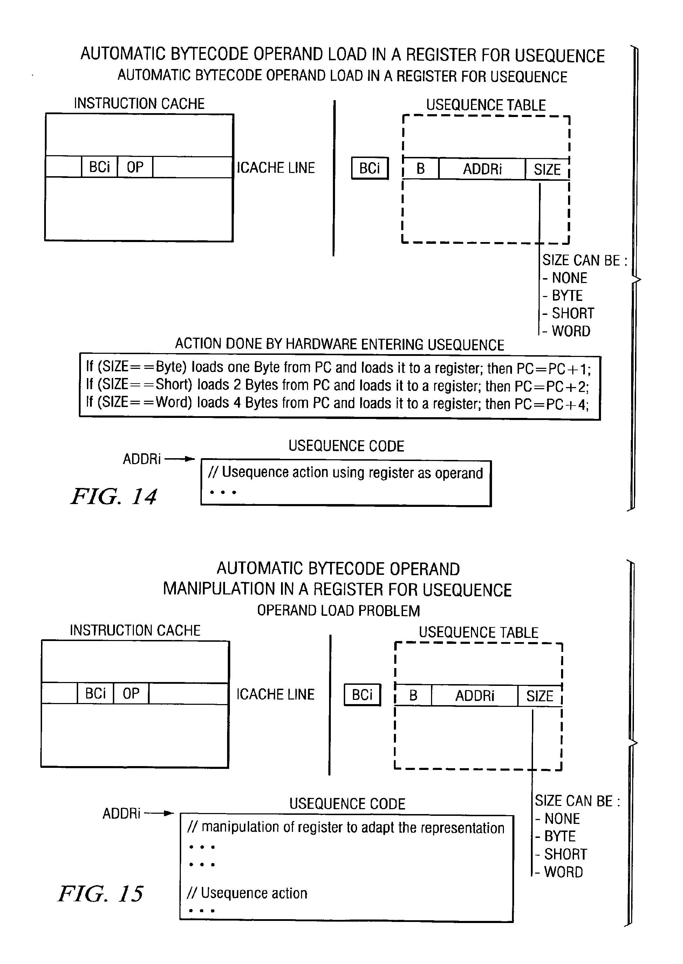

In Figure 14, we describe the mechanism. As in Figure 13, the bytecode (BCi) and the operand (OP) is present inside the instruction cache line. If we suppose that BCi is usequenced, the usequence table indicates the address of the code of the usequence to execute (ADDRi). The new attribute *SIZE* added indicates the size of the operand to load in a register. That size can be 0 (if no operand), *Byte* if operand is a byte, *Short* if operand is 2 bytes or *Word* if the operand is 4 bytes. After the loading, the PC is incremented according to the size of the operand (+1 for a byte, +2 for a short, +4 for a word). In the figure, a pseudo algorithm of the action done by the hardware is described. Moreover, the code of the usequence called when executing BCi bytecode is shown: no memory load using PC code is present.

Making an automatic load of the operand of a bytecode in a register, our solution suppresses cache misses when accessing an operand of an opcode in a usequence. Thus, the performance is increased and the energy consumption is decreased. We also suppress the load of an entry of a data cache, thus avoiding an extra cache pollution due to operand fetch. Our solution enables the PC to adapt automatically to its next correct value, thus it suppresses the code inside the usequence to do that job (i.e. minimization of code size of usequences). Thanks to the ability to dynamically set the attribute in the usequence table to control the mechanism, our solution is very flexible because it doesn't impose a fixed size of the operand; and the attributes can be dynamically set.


V. AUTOMATIC BYTECODE OPERAND MANIPULATION IN A REGISTER FOR USEQUENCE

Reference is made to Figures 15 - 16. A usequence is written in CISA code. If the usequence uses the operand associated to a bytecode, after its loading a manipulation of the operand is required to adapt it for further treatments. That introduces for each usequence using a operand extra code inside the usequence. That code takes processor cycles to be executed and requires the use of eventual registers for making the transformation. For example, on Figure 15, the bytecode (BCi) and the operand (OP) is present inside the instruction cache line. If we suppose that BCi is usequenced, the usequence table indicates the address of the code of the usequence to execute (ADDRi). If that usequence needs to load the operand (see usequence code) it is going to make a load using the PC pointer as a base address (step 1). Thus (step 2) a data cache miss is made and after the resolution, according to the cache allocation policy, a cache line is allocated (step 3). After these steps, the data is loaded inside the register (in the example AR4). At last, the usequence needs to set the new PC value according to the size of the operand.

To avoid that problem, we designed in JSM a mechanism associated with the load of the operand in a register when entering a usequence. That mechanism realizes a manipulation of the data in two ways. First, the sign of the operand is taken into account to make a sign extension or not of the register according to the size of the operand. Secondly, a left shift of 2 bits can be made if required to adapt the operand value.

In the context of Java bytecode usequences that suppresses extra manipulation code required to adapt the data to its correct usable representation. That mechanism is controlled by a set of attributes in the usequence table which indicates the sign and the shift to make or not after the load. All entries of that table can be dynamically programmed, thus the flexibility of JSM is ensured.

Making an automatic transformation during the load of the operand of a bytecode in a register, our solutions uppresses CISA codes in a usequence to make the transformation if the transformation to make is a sign extension or/and a left shift by 2 bits. That suppression of code provides a minimization of the code size of the usequence; increases the performance of the usequence; minimizes the energy consumption of the usequence; and preserves the use of registers loads. Thanks to the ability to dynamically set the attributes of the usequence table to control the mechanism, our solution is very flexible because it doesn't impose a fixed transformation of the data (sign and shift); and the attributes can be dynamically set.

To avoid that problem, we designed in JSM a mechanism when entering a usequence to automatically load a register with the operand of the bytecode if there is one and taking into account the size of the operand. The operand can be of a size of one byte, a short (2 bytes), or a word (4 bytes). During the loading, the PC is automatically adjusted to its new value according to the size of the operand. That suppresses extra data cache miss to access the operand.

That mechanism is controlled by one attribute in each usequence table entries which indicates the size of the operand. All entries of that table can be dynamically programmed, thus the flexibility of JSM is ensured.

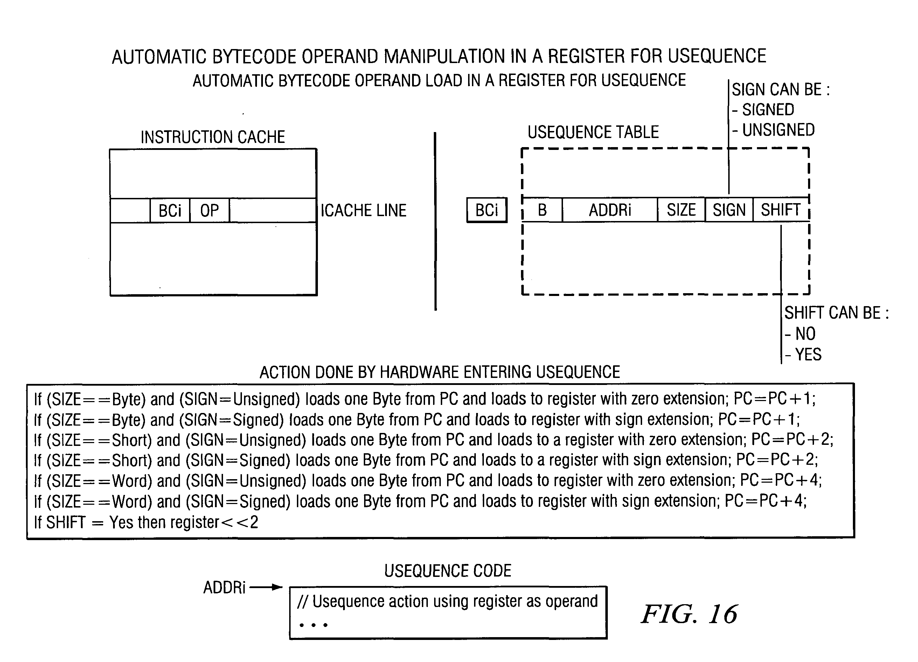

In Figure 16, we describe the mechanism. As in Figure 15, the bytecode (BCi) and the operand (OP) is present inside the instruction cache line. If we suppose that BCi is usequenced, the usequence table indicates the address of the code of the usequence to execute (ADDRi). The new attribute *SIZE* added indicates the size of the operand to load in a register. That size can be 0 (if no operand), *Byte* if operand is a byte, *Short,* if operand is 2 bytes or *Word* if the operand is 4 bytes. After the loading, the PC is incremented according to the size of the operand (+1 for a byte, +2 for a short, +4 for a word). In the figure, a pseudo algorithm of the action done by the hardware is described. Moreover, the code of the usequence called when executing BCi bytecode is shown: no memory load using PC code is present.

## VI. RAMSET OSCILLATIONS MANAGEMENT ALGORITHM FOR STACK BASED MEMORY BLOCK ALGORITHMS

A Stack Based Memory Block management is a frequently used allocation scheme for software purposes. The main characteristic is that read/write accesses are only done in the top memory block. The management of Java local variables, which are part of a Stack frame in a Java runtime (Java Virtual Machine, compiler, etc.) is a Stack Based Memory Block. In typical processor architectures running Java applications, such management is achieved with an important cost in terms of performance and energy consumption

Our other approach provides an efficient way to use a D-Ramset for realizing a Stack Based Memory Block management. When applications push a memory block, the D-Ramset could be full. When the D-Ramset is full, a new mapping of the D-Ramset is accomplished by cleaning the previous one in external memory and allocating a new page. When applications pop a memory block, the D-Ramset could be empty. When the D-Ramset is empty, the previous mapping must be restored, and policy switched to cache. In spite of its optimal behavior, this approach does not handle oscillations provoked by applications pushing and popping just at the limit full/empty of the D-Ramset, causing number of D-Ramset cleaning/flushing and remapping. In the Java world, the oscillations could be provoked by numerous invocations and returns of methods just at a moment when the D-Ramset is near full. Such behavior decreases dramatically the performance and the energy consumption of the overall system by provoking useless memory transfer.

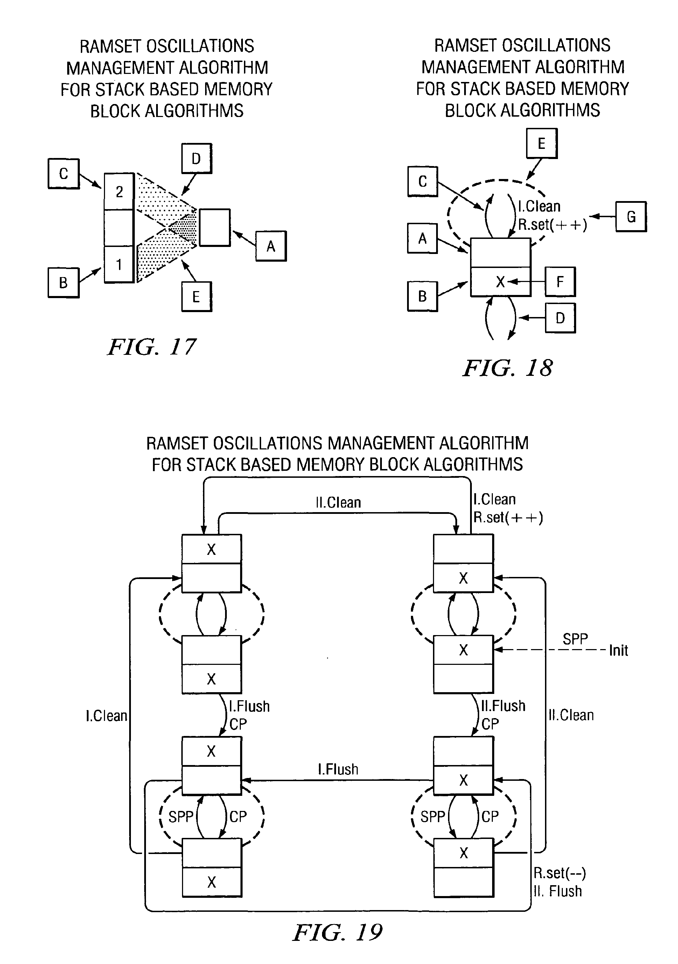

Our approach here, however, provides a way to organize D-Ramset, and to issue appropriate commands on D-Ramset to minimize the cost of oscillations. By logically dividing the D-Ramset into two sub-pages, the algorithm always locates the oscillation inside the D-Ramset, avoiding costly cleaning/flushing and remapping D-Ramset. The algorithm is very small, it could be implemented by an 8-states automat with 2 events (push and pop) and 8 commands on D-Ramset during transitions. Reference is made to Figures 17 - 20.

This solution enables to run efficiently (in term of performance and energy) Java applications on generally all processors with a D-ramset and especially the JSM architecture. This solution is orthogonal with well structured Java frame. For the JSM architecture, a very efficient way to organize Java frame in sub-pages, or in local memory, or in common memory, is described as follows: The LV (Local Variables) register points on the first Java Local Variables. Local variables are placed in increasing addresses (local variables number 0 at address LV + 0, local variables number 1 at address LV + 4, local variables number n at address LV + 4n). Java frame meta-data are placed in decreasing addresses (the first meta-data word at address LV - 4, the second at address LV - 8, the $n^{th}$ at address LV - 4(n+1)). This allows very efficient direct access to Java frame meta-data by usequences. Each Java frame is placed in decreasing order: inside a Java frame, if the register LV contain an address a and there is an invocation of a method which need $x$ local variables, the new address contained in LV for the next Java frame is a - 4n - 4x (with n the number of Java frame meta-data in words). This allows very efficient computation of the next LV when invoking a method because 4n is a JVM constant and 4x a well known value associated with the invoked method. Other solutions do not try to avoid oscillation at the limit of a D-Ramset.

The main advantages of our solution are: Avoid completely small oscillations in D-Ramset limit (small oscillations is oscillations with amplitude less or equal than the half of the D-Ramset size); optimize large oscillation in D-Ramset limit (large oscillations with amplitude greater than the half of the D-Ramset size); by avoiding oscillations, we decrease number of D-Ramset cleanings, decrease number of D-Ramset flushings, and decrease number of D-Ramset mappings; by decreasing cleanings and flushing, we decrease memory transfer between D-Ramset and external memory; by decreasing number of cleaning/flushing and mapping, and by decreasing memory transfer, we increase overall system performance and decrease energy consumption of the system; very small algorithm, less than 32-Bytes of tables and few line of codes; very efficient Java frame meta-data during Java method execution; very efficient computation of a new LV value when invoking Java method.

## VII. SAVE AND RESTORE CONTEXT WITH A STACK BASED MEMORY BLOCKS MANAGEMENT

A Stack Based Memory Block management is a frequently used allocation scheme for software purposes. The management of Java local variables, which are part of a Stack frame in a Java runtime (Java Virtual Machine, compiler, etc.) is a Stack Based Memory Block. Our other approach entitled "Ramset oscillations management algorithm for Stack Based Memory Block algorithms," named SBMBA, describes an efficient way to use a D-Ramset for realizing a Stack Based Memory Block management and to issue appropriate commands on D-Ramset to maximize performance and to minimize the energy consumption. Nevertheless, in a multi-threaded environment, a thread execution must be preempted and replaced by another thread execution. If the D-Ramset contains local data to a thread, like stack frame in a Java runtime, the contents of the D-Ramset must be copy back in external memory during a preemption (context saving), and must be replaced by another data local to the new thread with memory transfer (context restoration). These memory transfer cost in term of cycles and energy consumption, and so should be minimal.

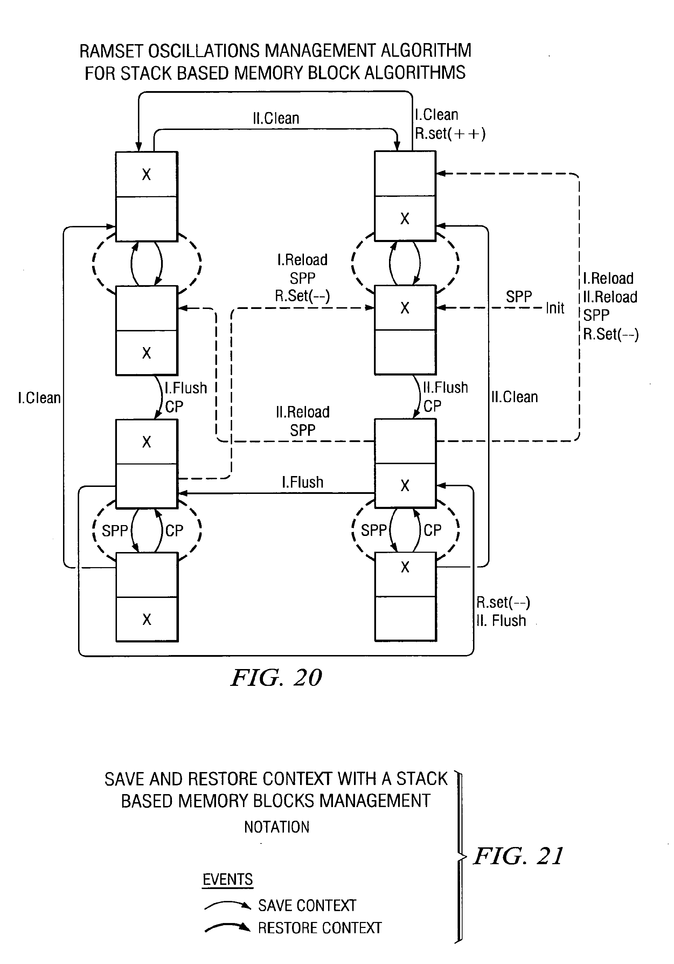

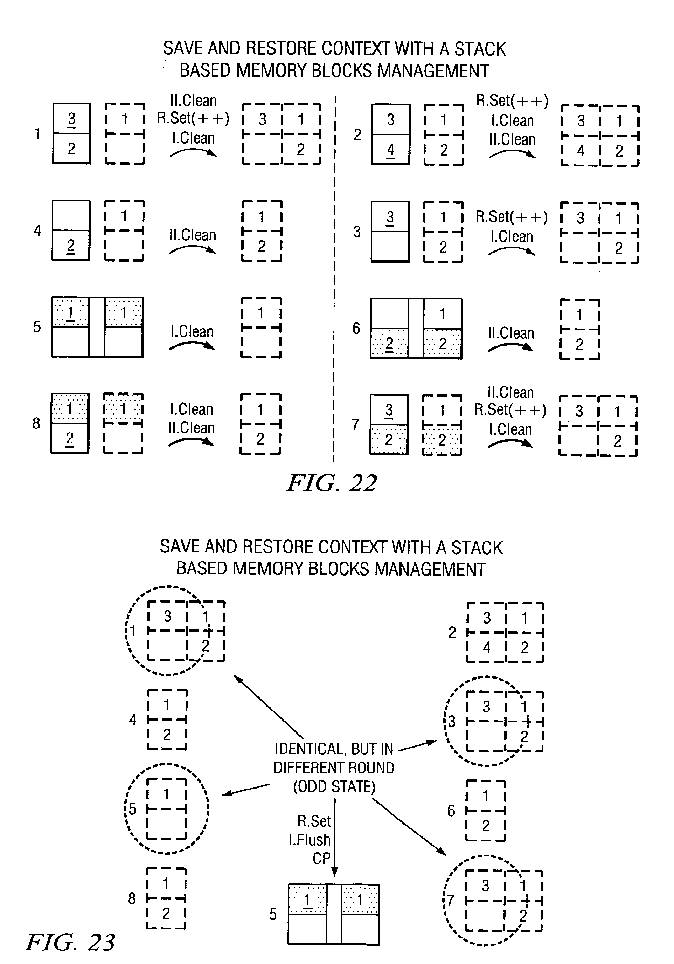

Our approach here provides an efficient way to save into external memory a D-Ramset organized like described in the proposed patent SBMBA by using judiciously the 8-states automat to issue minimal commands to the D-Ramset. Second, our process describes how to restore this previously saved D-Ramset from external memory by setting correctly the 8-states automat. Reference is made to Figures 21 - 24. This solution is advantageous to preempt and restore efficiently (in term of performance and energy) Java threads on generally all processors, and especially the JSM architecture. Other solutions do not used D-Ramset organized like described in our proposed SBMBA approach.

Some main advantages are the following: By allowing the use of a D-Ramset organized like described in proposed patent SBMBA in a multi-threaded environment, inherit all advantages described in the aforementioned approach in a multi-threaded environment instead of a mono-threaded environment. Reduce the number of entries to be cleaned during context saving (divide by 2 in some cases). By decreasing the number of entries to be cleaned: Decrease energy consumption of the system; decrease time to preempt thread. By restoring D-ramset with a cache policy, avoid unnecessary reload of D-Ramset, and so decreasing memory transfer. By decreasing memory transfer: Increase overall system performance; and decrease energy consumption of the system. Very small algorithm, less than 8-bytes of tables and few lines of code.

## VIII. USING TEMPORARY SCRATCHPAD WITH A STACK BASED MEMORY BLOCKS MANAGEMENT

A Stack Based Memory Blocks management is a frequently used allocation scheme for software purposes. The management of Java local variables, which are part of a Stack frame in a Java runtime (Java Virtual Machine, compiler , etc. is a Stack Based Memory Block. The proposed approach entitled "Ramset oscillations management algorithm for Stack Based Memory Block algorithms", named SBMBA, describes an efficient way to use a D-Ramset for realizing a Stack Based Memory Block management and to issue appropriate commands on D-Ramset to maximize performance and to minimize the energy consumption. Nevertheless, the use of D-Ramset to store Stack Based Memory Block disallows the use of a D-Ramset as a Scratchpad memory to make efficient computation. This use of D-Ramset like a temporary Scratchpad memory is a very frequently used behavior in DSP like algorithm implementation. The cohabitation between these two critical uses of the D-Ramset must be judiciously design to minimize memory transfer between D-Ramset and external memory, and so to decrease energy consumption and increase performance.

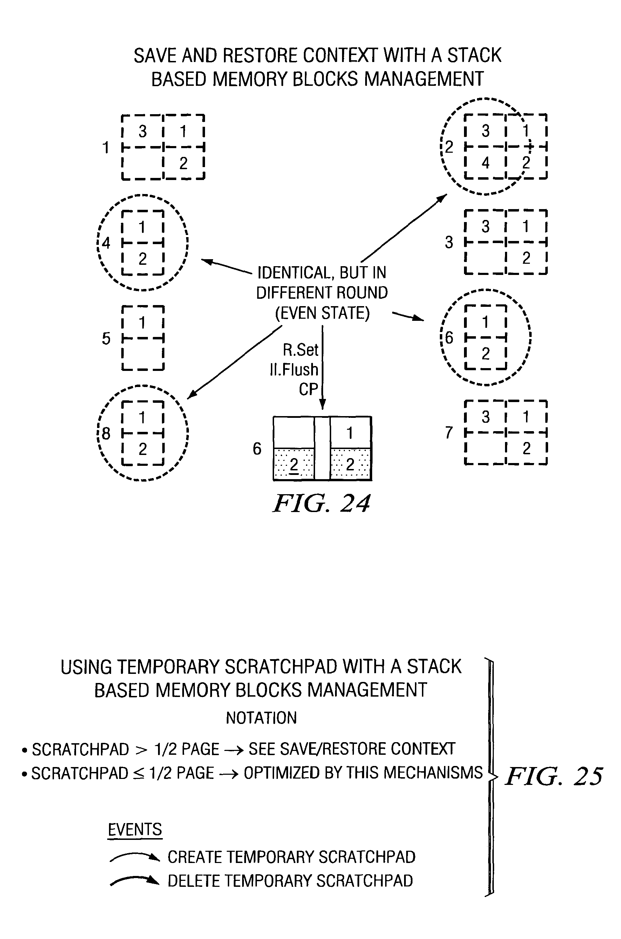

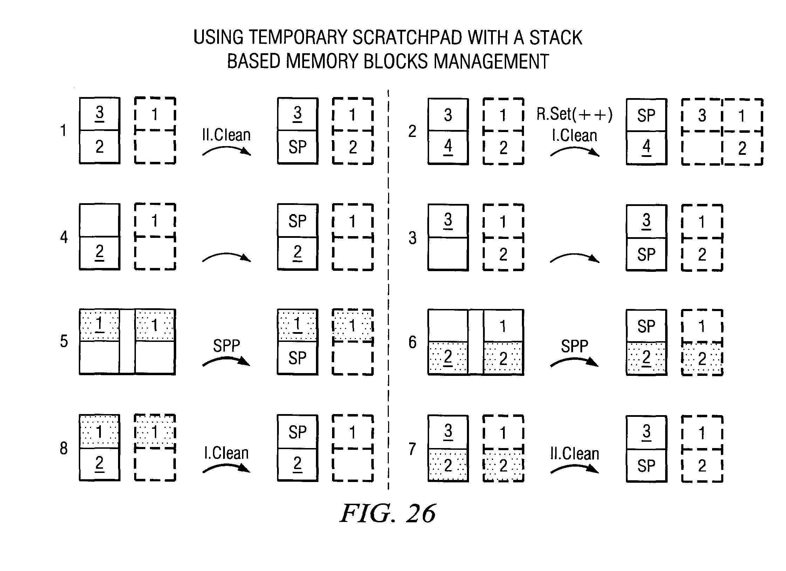

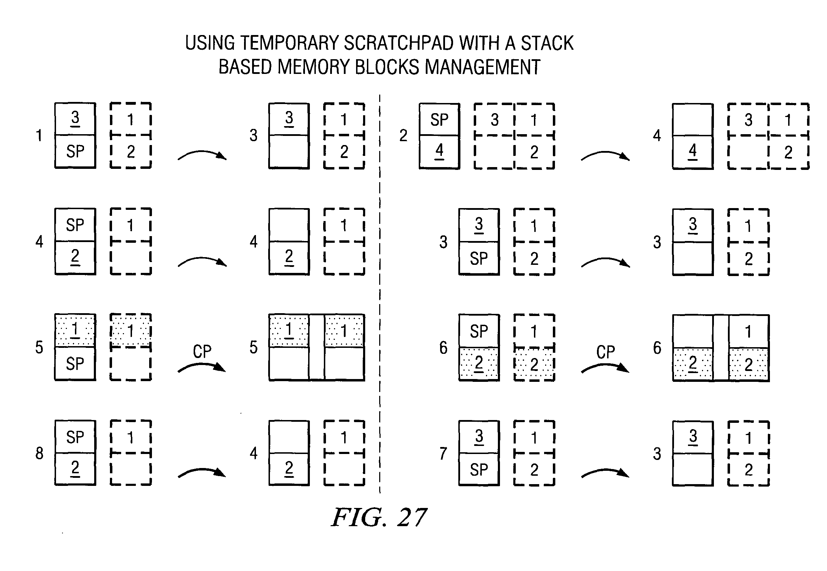

In our process, described with reference to Figures 24 - 27, D-Ramset commands are issued before using it as a temporary Scratchpad memory. These commands are issued according to the 8-states automate described in the proposed SBMBA approach to minimizing memory transfer between D-Ramset and external memory. Our process also describes how to restore the automate state after using the temporary scratchpad memory. So, this process allows the use of the two mechanisms to efficiently shared the D-Ramset.

This solution enables to efficiently use (in term of performance and energy) the D-Ramset either to manage a Stack based Memory Blocks as well as a temporary scratchpad memory on generally all processors with D-Ramset, and especially the JSM architecture. Other solutions do not use D-Ramset organized as described in the proposed SBMBA approach. A main advantage is: By allowing the use of a D-Ramset organized like described in proposed patent SBMBA with the use of a D-Ramset as an temporary Scratchpad memory, inherit all advantages described in the aforementioned patent without lost advantages of using a temporary Scratchpad memory in a D-Ramset.

## IX. M BIT INSTRUCTION SET SIZE MACHINE ON JSM

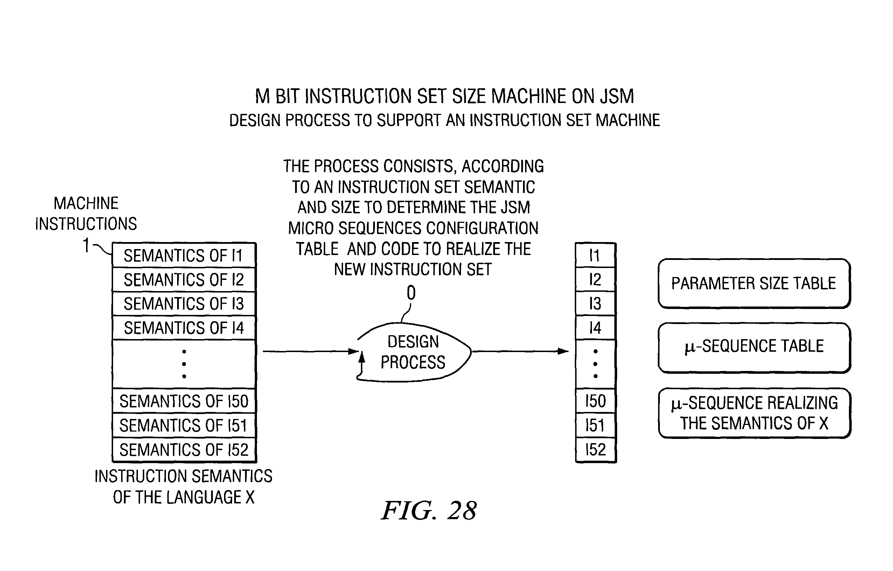

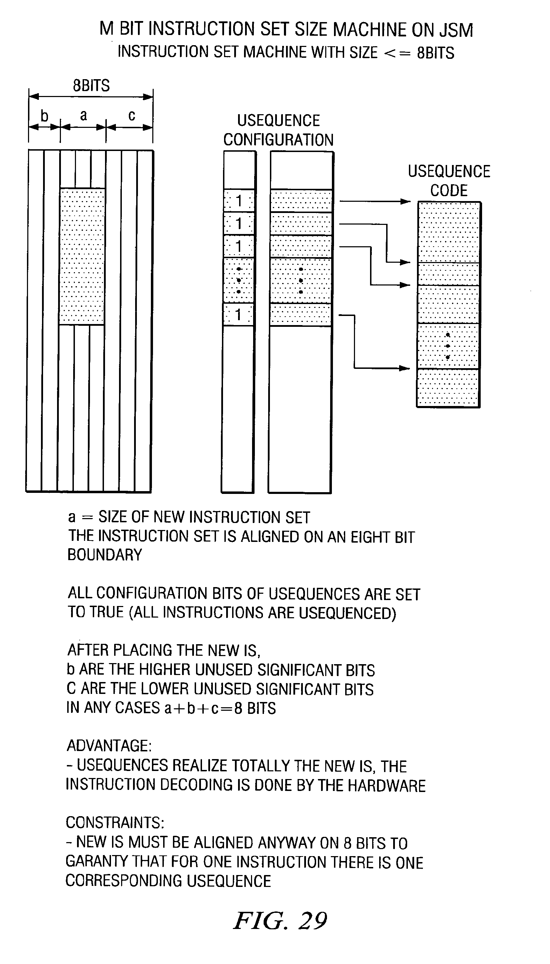

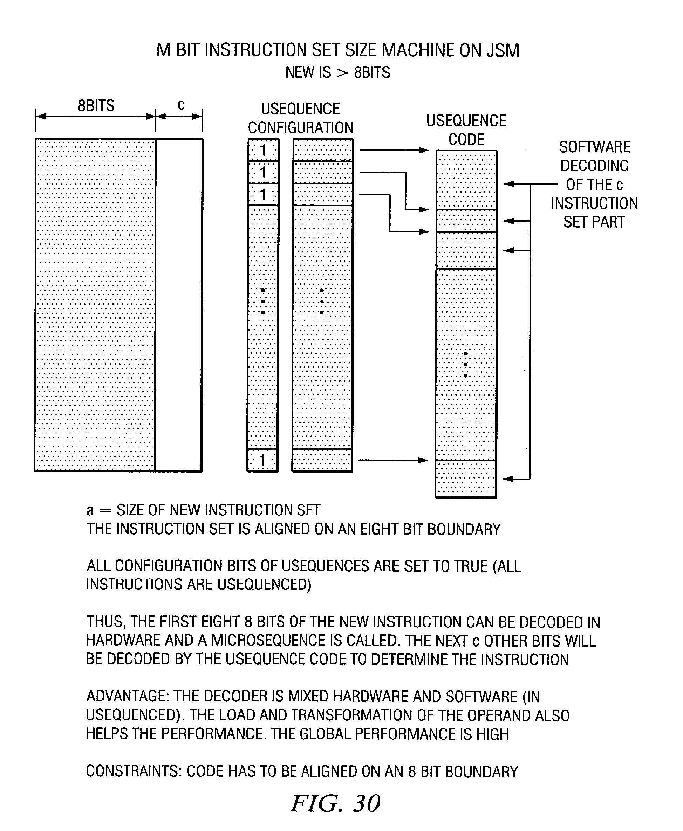

Reference is made to Figures 28 - 30. A processor owns its specific instruction set with a specific size. If another instruction set has to be executed on a processor (an instruction set that can have the same size, a smaller size or a bigger size), the only way to support a new instruction set is to introduce new hardware blocks to support thee instructions or design a software virtual machine on top of a hardware that realizes in software these instructions. The problem is that except for the exe part of the instruction, the decoder of the processor is not use efficiently because the decoder is done in software (for example inside an interpretation loop).

We describe the way to support a M bit instruction set size using JSM hardware resources by an adequate code and configuration of usequences. That way, for an instruction set size smaller or equal to 8 bits, the decoder is totally done by the hardware. If the instruction set is more than 8 bits, the decoder is done by a combination of hardware and software. Of course our approach is still to build a virtual machine, but with a real hardware integration of the decoder part done directly by hardware.

We can do any kind of instruction set for two reasons. First, thanks to the available instruction sets on JSM, we can exprim any kind of instructions, second, thanks to usequences we can change every bytecode semantic. Thus, we can use the JSM hardware to decode bytecode stream and to execute what we want using a usequences coded using JSM instruction set. That methodology is a key point on JSM use. Because we can build any kind of instruction set, we can also realize that way any kind of virtual machine. For example, we believe that technique can be use for building another kind of virtual machine (not Java) like CLR Microsoft runtime.

Other solutions are fully done as virtual machines with no use of processor pipeline decoding. Moreover, to our knowledge, only JSM enables such feature.

JSM pipeline hardware resources are used for any kind of machine instruction with any kind of I instruction set size. It provides another use of micro sequence. It is generic to any virtual machine or instruction set. Machine build with that technique are automatically accelerated comparing to a full software interpretation approach. Performance increased. Energy decreased. Evolution of an instruction set is easy and we can support easily a compatibility between different hardware system platform generations. On JSM the size of the usequenced instruction set is 8bits, but our method can be applied to any kind of size of usequenced instruction set size.

## X. USING TRAMPOLINE TO REMOVE USEQUENCE LOCAL RAM SIZE LIMITATION

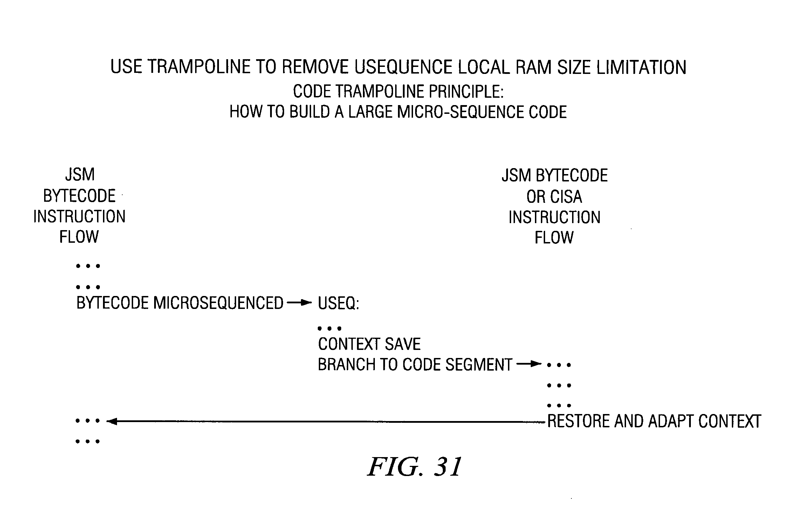

Reference is made to Figure 31. In a JSM/MPU system, and in all systems with similar concepts, the processor executes code in instruction memory (execution mode). But, when the hardware do not want to execute an instruction in hardware (because of complexity, flexibility or efficiency), a usequence is executed instead. This usequence is a sequence of code stored in a local RAM instead of an instruction memory (uSequence mode), see our approach entitled "Mixing pointer counters in a hardware pipeline to support efficient usequence execution " for more details. This local RAM has a limited size. So, the size of all usequence code is constrained by this local RAM. In case of memory shortage, the execution of some instructions must be done on the MPU instead of JSM. The instruction execution on MPU implies a strong latency on the application (mainly communications between processors), a time overhead on the other processor (mainly context switches), and extra energy consumption (mainly due to communications between processors).

The solution to this problem is to use, for long and complex instruction, a special and short usequence named trampoline. After eventually making some job, this trampoline saves JSM context (normal mode and usequence mode) and installs a new context to continue the complex instruction execution in the normal mode (in conventional instruction memory, without local RAM size limitation). At the end of the code, the trampoline is in charge of restoring the right context. The cost of this trampoline is not critical because the instruction executed is long and complex. In any case, this cost small compare to the cost of delegate the execution to the MPU. This solution enables the use of long and complex software instructions on a JSM like system without interrupting the MPU. Other solutions do not used usequence in local RAM to realize instructions.

Some main advantages are: Our solution can decrease in a significant way the number of interruptions from JSM to MPU that are signaled when an instruction cannot be executed in usequence mode because of the size of the local RAM for uSequence. By decreasing the number of interruptions from JSM to MPU: Decrease latencies of instructions executions on JSM (so on application); decrease time overhead due to instruction execution on MPU; decrease energy consumption. By execution the instruction code locally on JSM: Decrease communication between the two processors; avoid command to make coherent data view between the two processors; and decrease energy consumption and efficiency of the overall system.

XI. THREAD CONTEXT SWITCH ALGORITHM ON JSM BASE ON SAVE AND RESTORE CONTEXT COMMANDS

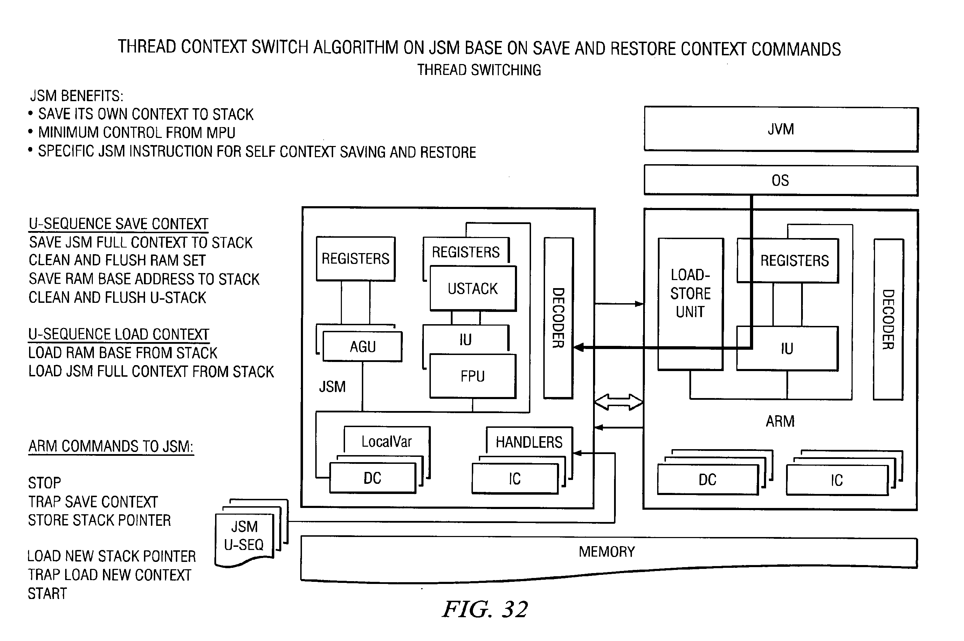

Reference is made to Figure 32. For implementing threads, interrupt service routines, or exception routines, a save and restoration of the processor context has to be done. That context is stored in a memory zone and contains all the state of the processor. Nowadays, contexts have to be saved either by hand or using specific instructions that save all the context in a dedicated predefined memory zone. For JSM, we define a way to save and restore the context on and from the stack managed directly by hardware. We introduce two contexts. Minimal context saves the basic registers (PC, uPC, Status and one general purposed registers that can be used as a software register), and Full context contains all the registers Ri and ARi of JSM.

Using the stack to store the context is very simple and the only information required for the context switch is the address of the top of the stack. Address calculation of the stack is directly managed by hardware, so no address computation is needed. Moreover using minimal save/restore context commands enables the way to make fast context switch that can be used for interrupt handlers of fast system calls.

In other solutions, the save and restore context is done by saving/restoring each register using load/store instructions. The target address memory has to be managed by hand also. At last, there is no distinction between Minimum and Full context in other architectures. JSM stack management is used for context saving and restoration. Very simple way to make a switch. Address calculation done by hardware. Stack pointer address is the context address. JSM store/restoration context is capable because the stack is managed by the hardware. Two kind of contexts are provided by the instructions: Minimal and Full context. Minimal context contains the minimum required registers (PC, uPC and status) and one other general purpose registers that can be used as a software register to store/restore a value very quickly using the context switch. Minimal context provides a way to make very fast context switch on JSM to make fast system calls, thread switch, or fast interrupt service routines.

XII. Dynamic Fixing of Memory Views

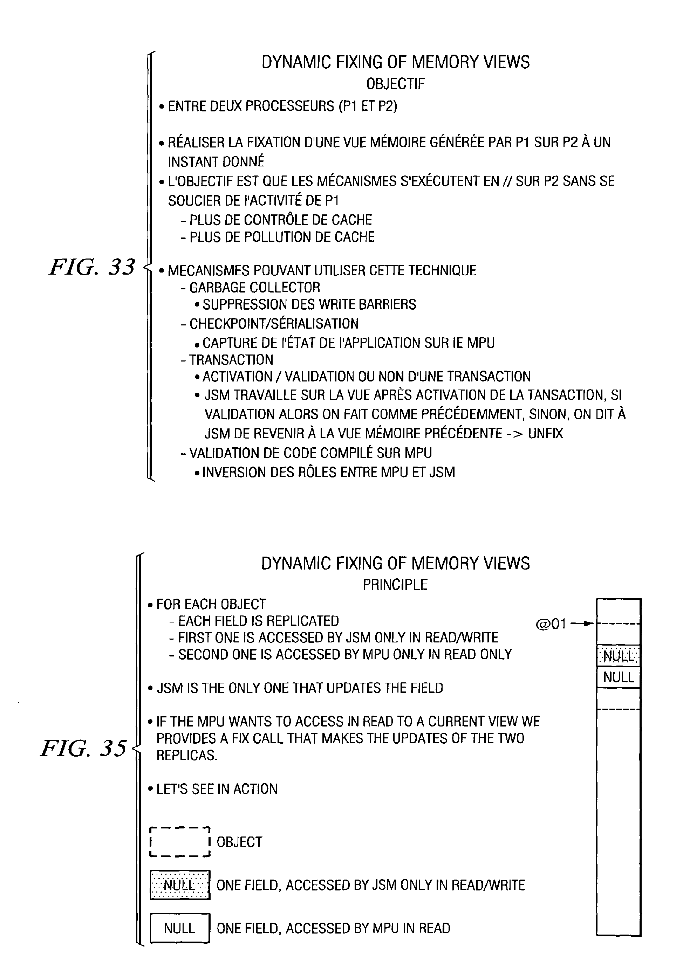

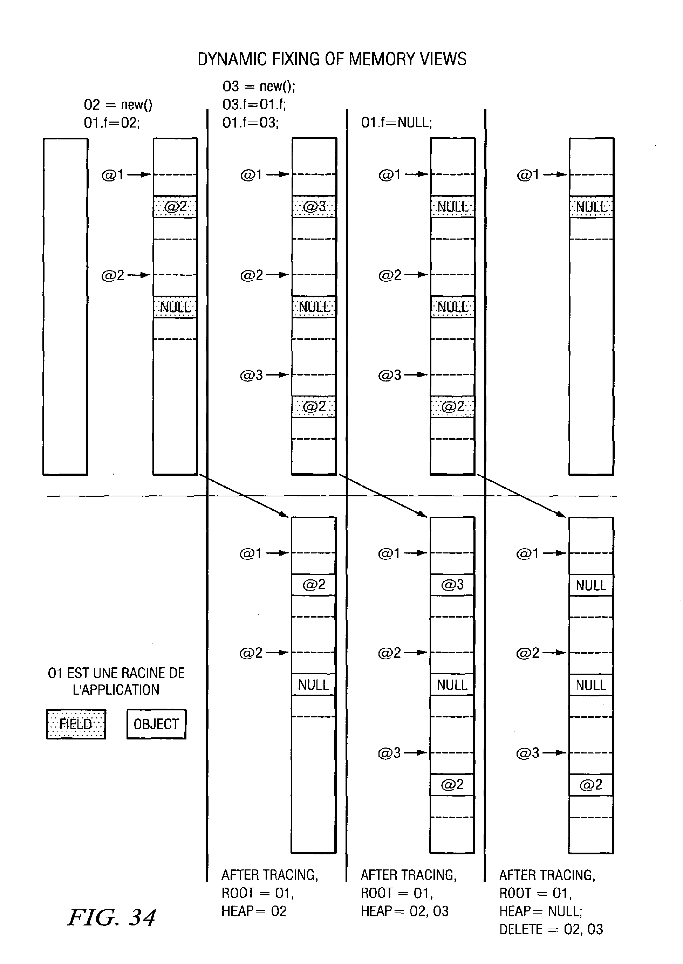

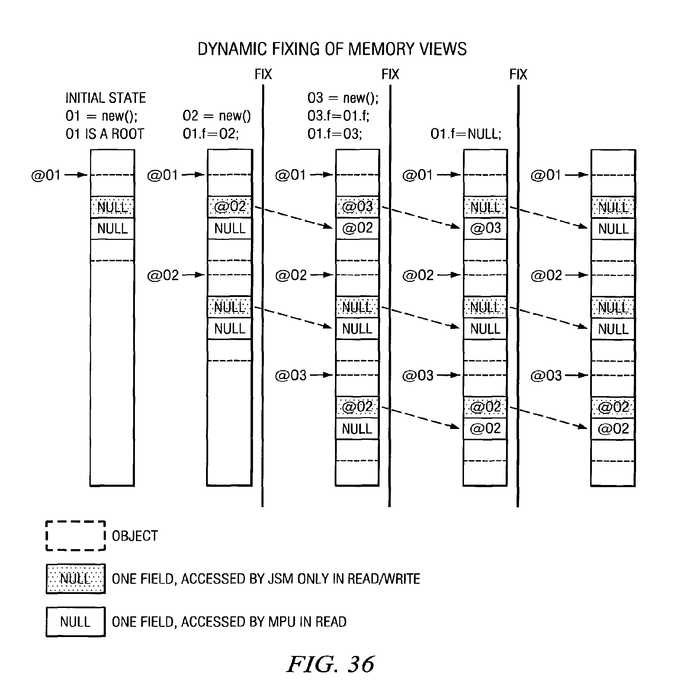

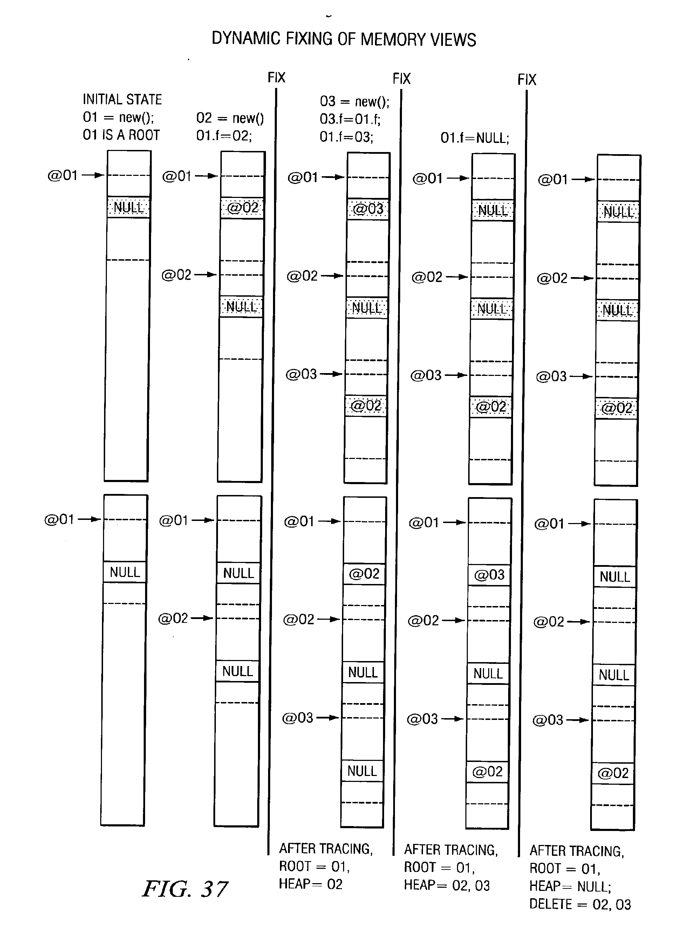

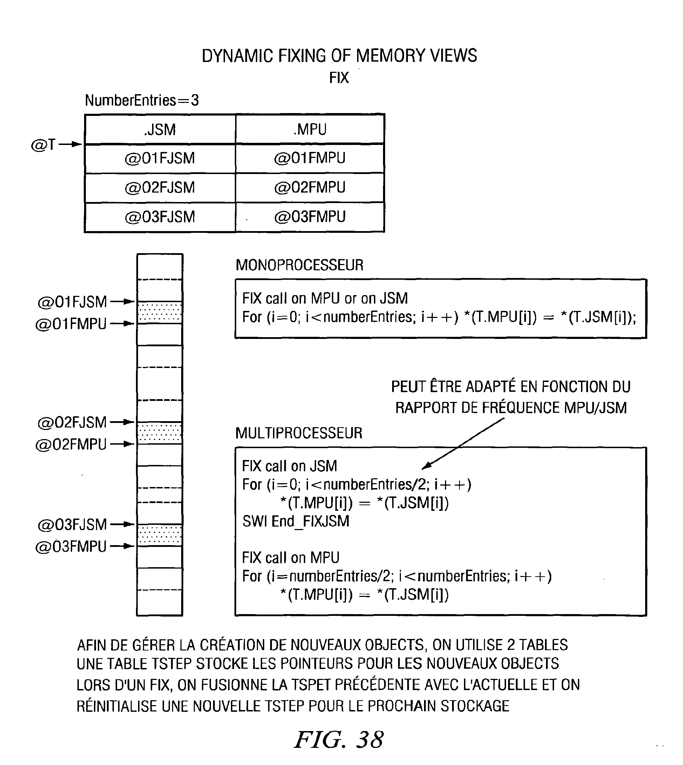

Reference is made to Figures 33 - 38. We propose a mechanism that can be used in a multiprocessor context using a virtual machine where each processor has a cache. We suppose the existence of a memory zone. That zone will be accessed in read/write by one processor, and several other processors could access to that zone in read. The objective of that mechanism is to provide a way to make a 'logical' fix of a memory zone at one moment. After our fix operation, only the owner processor continues to access in read or write to the memory zone. The others will see the values contained in the memory zone at the time the fix operator has been done. Thus, for parallel treatments that need to read a memory written by another processor and for treatments where the strong consistent state is not required, in the context of a multiprocessor architecture, the treatment can be done in parallel with the writer without any extra synchronization.

Our solution relies on a replication management scheme with a consistency management for a memory zone. That solution enables to create views using a FIX operator. We also propose that mechanism in the context of JSM processor system architecture. Moreover, in the context of memory zones attached to Java objects we propose a way to extend the Java opcode semantic to minimize the penalty in the execution of the Java virtual machine.

Comparing to traditional ways to make such feature our mechanism has several advantages: no extra control of caches and no pollution of caches. That impacts directly energy consumption and performance of applications. We already identified a lot of operating system or JVM mechanisms that could use that patent. For example: Garbage collector. Elimination of write barriers. Checkpoindserialization. Application capture. Transaction. Engaging, committing and aborting of a transaction. Code buffer generation. Our solution can be applied for two processors to any kind of shared data. In the context of JSM, no change of hardcoded opcodes are required to support that mechanism.

XIII. RE-EXECUTION OF A HARDCODED BC USEQUENCE

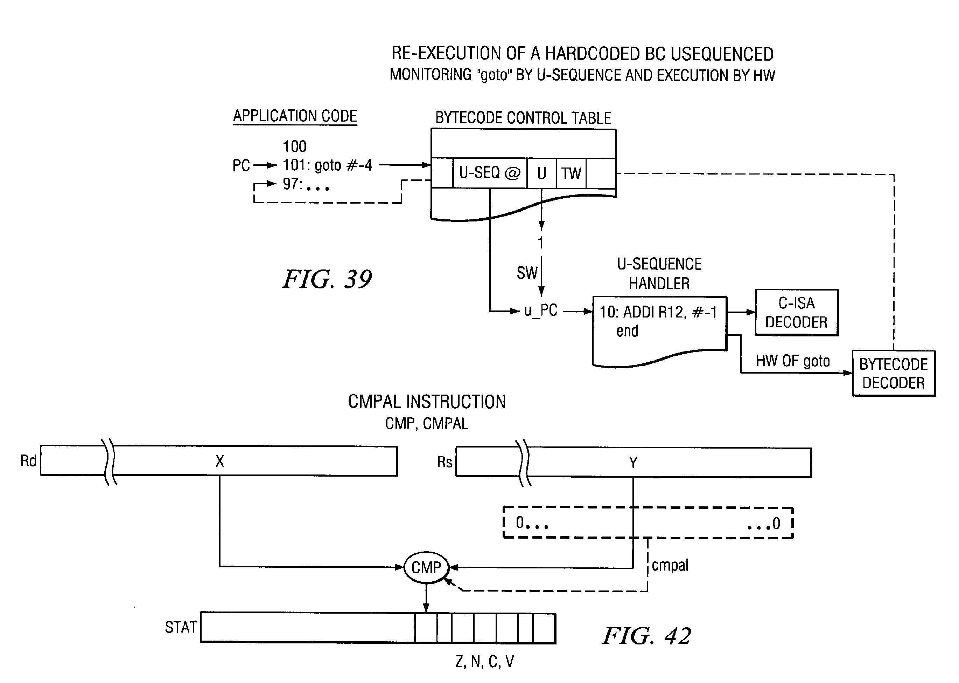

Reference is made to Figure 39. We describes the way to execute a hardcoded bytecode that has been micro-sequenced after the micro sequence execution. When executing a micro-sequence, it is impossible to use hard-coded Java JSM bytecodes because the microsequence is a pure JSM CISA instruction set code. Thus, if the bytecode that is microsequenced has to be executed, it has to be done in CISA inside the micro sequence. For example, if a monitoring of a goto opcode has to be done, the goto hardcoded bytecode is set to be a microsequence using the micro sequence table configuration. Inside that microsequence, the goto has to be done in CISA. Our solution provides a way to indicates to the hardware that after having executed the micro-sequence, the corresponding hard-coded JSM bytecode has to be executed.

We introduce in the micro-sequence configuration table a bit named 'twice' that indicates that case. Thus, for one bytecode if the microsequence bit is set, the microsequence is activated. If the twice bit is set, the hardcoded bytecode is executed after the micro-sequence execution, otherwise not. That mechanism avoids to code in microsequence in CISA an existing available JSM Java hardcoded bytecode. That means: no code expansion, hardware resource reuse, pipeline fetch simple integration, energy consumption reduced, memory usage reduced.

That mechanism avoids to code in microsequence in CISA an existing available JSM Java hardcoded bytecode. That means: no code expansion , hardware resource reuse, pipeline fetch simple integration, energy consumption reduced, memory usage reduced. Moreover that feature can be set or unset dynamically by reprogramming that provides a high flexibility for JSM.

XIV. PACK INSTRUCTION

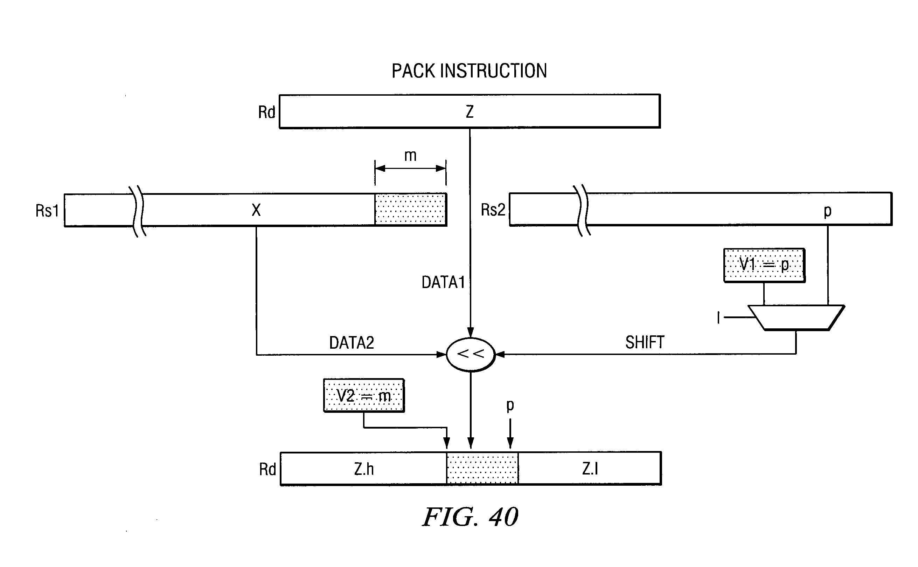

Reference is made to Figure 40. When processing a bit based addressable data in memory or through a stream, a lot of heavy computation operations have to be done to read or write data. These computations are done due to the byte addressable internal capacities of processors. Thus, a processor can handle byte addressable data. Considering the writing of the data, the computation bit address of the data is converted in a byte address with bit offsets. Then, after loading the data in a register, a shift of the register has to be done and an OR with the byte addressable data has to be done. So, for bit addressable memories, a huge work is required to write a data to memory of to a bit stream.

Our solution relies on a new instruction named 'PACK' that manages totally all the previous described computations. Pack instruction writes a bit field from a main register Rs1 of a defined width at a specified position in a main register Rd, without altering Rd bits outside this field. Either source and target registers can be specified. Width and the targeted position can also be specified, either by immediate value or by a register.

Our solution makes very easy the access to a bit addressable data. It avoids extra computations thus: Better energy consumption, Better performance, Memory code reductions. Moreover, thanks to its good understanding, a compiler can use it without troubles and complex backend.

XV. UNPACK INSTRUCTION

When processing a bit based addressable data in memory or through a stream, a lot of heavy computation operations have to be done to reading or writing data. These computations are done due to the byte addressable internal capacities of processors. Thus, for a processor can handle byte addressable data;

Considering the reading of the data, the computation bit address of the data is converted in a byte address with bit offsets. Then, after loading the byte addressable data in a register, a shift of the register has to be done and a AND with the byte addressable data has to be done on the unused bit fields. So, for bit addressable memories, a huge work is required to read a data to bit addressable memory or to a bit based stream.

Our solution relies on a new instruction named 'UNPACK' that manages totally all the previous described computations.

Unpack instruction extracts a bit field from a main register Rs1 of a defined width at a specified position and stores it in main register Rd, with least significant bit alignment and optional sign extension. Either source and target registers can be specified. Width and the targeted position can also be specified, either by immediate value or by a register.

Our solution makes very easy the access to a bit addressable data.

It avoids extra computations thus: Better energy consumption, Better performance, Memory code reductions. Moreover, thanks to its good understanding, a compiler can use it without troubles and complex backend. At last, conversion of data can be done during the read, thus extra computation required for type casting can be done.

XVI. CMPAL INSTRUCTION

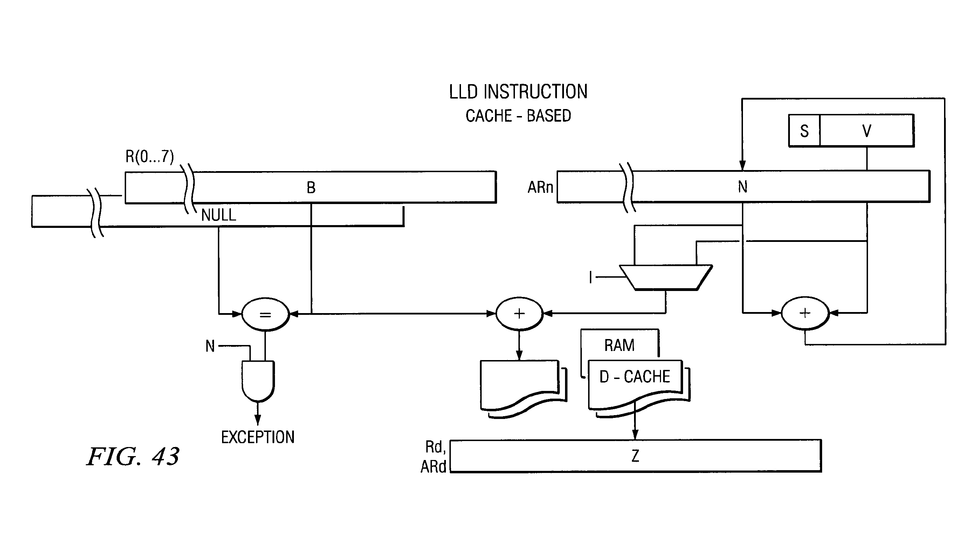

Reference is made to Figure 42. To access a Java Array, a object reference is used with conjunction of xASTORE or xALOAD based bytecodes. After the bytecode, the index of the array to read or write is indicated as an operand. Because each Java array has a maximum number of elements and because a Java array is an object, in two cases the access of the array must not be done: if the reference is NULL and if the index to access is greater than the maximum number of elements of that array. Thus, when implementing Java array bytecodes, a lot of computations (tests and conditional branches) are required to check either the null reference value and to check also the validity of the index.

We propose a CMPAL instruction that makes a comparison between two registers, and simultaneously between one register and zero. The result of these tests is in status register. Thus, in one instruction, two tests are made. For JSM, it Performs comparisons and positions status as follows:

$$C = (Rd >= Rs1) \text{ or } (Rd < 0)$$

$$Z = (Rd == Rs1)$$

$$N = (Rd < Rs1)$$

$$V = \text{overflow } (Rd - Rs1)$$

That mechanism minimizes the to code of Java array bytecodes. That means: code size reduction, energy and performance increased. Moreover that instruction could be use to make a software protection for data where a limit and a base exists.

## XVII. LLD INSTRUCTION

Reference is made to Figure 43. For all Java bytecodes working with an object reference, a test to the object null reference has to be done before making the access. For example Getfiled based or putfiled based bytecodes. So, a specific test to the null value has to be done and an exception has to be launched if the object null value is encountered, else a branch is done.

The LLD instruction read a byte, short or word from data memory to any of the main or auxiliary JSM registers with one of the 2 possible addressing modes using Rs as base address register. LLD also optionally performs NULL base address value check. Thus, extra computation code required to make the check of null reference is avoided.

Extra computation code required to make the check of null reference is avoided.

That means: code reduction, energy consumption reduced, performance increased.

## XVIII. DMA CONSTRUCTION

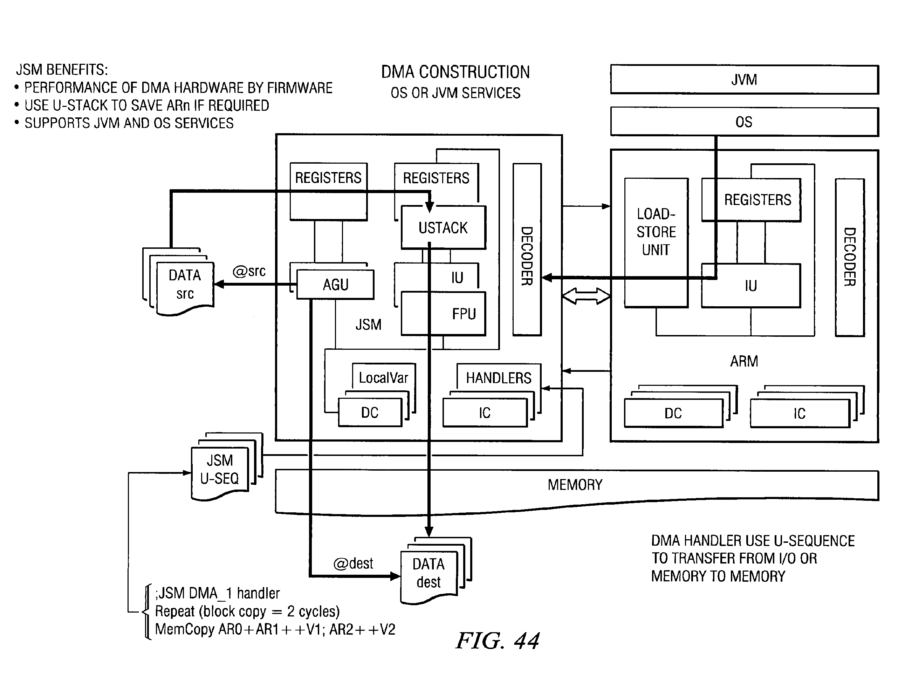

Reference is made to Figure 44. DMA required either hardware resources or software penalty in system execution. Moreover there are complex to integrate in a whole system. Using JSM we propose a new DMA Scheme. That DMA is done using micro-sequences and wrote using CISA instruction set, so, it doesn't required additional hardware, and uses the micro stack of JSM to manage the bus transfer penalty and load balancing.

The approach is to use a repeat instruction to repeat a block that makes a memory transfer using the MEMCOPY Instruction. MEMCOPY transfers one memory address content to another one. Each memory address is independent from each other and doesn't require any requirements on the memory zones address. Moreover, sophisticated address calculation like post increment can be used. No specific hardware to make a DMA.

A general purpose instruction MEMCOPY is used for solving the problem and enables the use of the sophisticated address computation. Implicit and automatic load balancing of memory transfers using the ustack of JSM. That means: code reduction, energy consumption reduced, performance increased.

## XIX. DYNAMIC COMPILER RESOLUTION

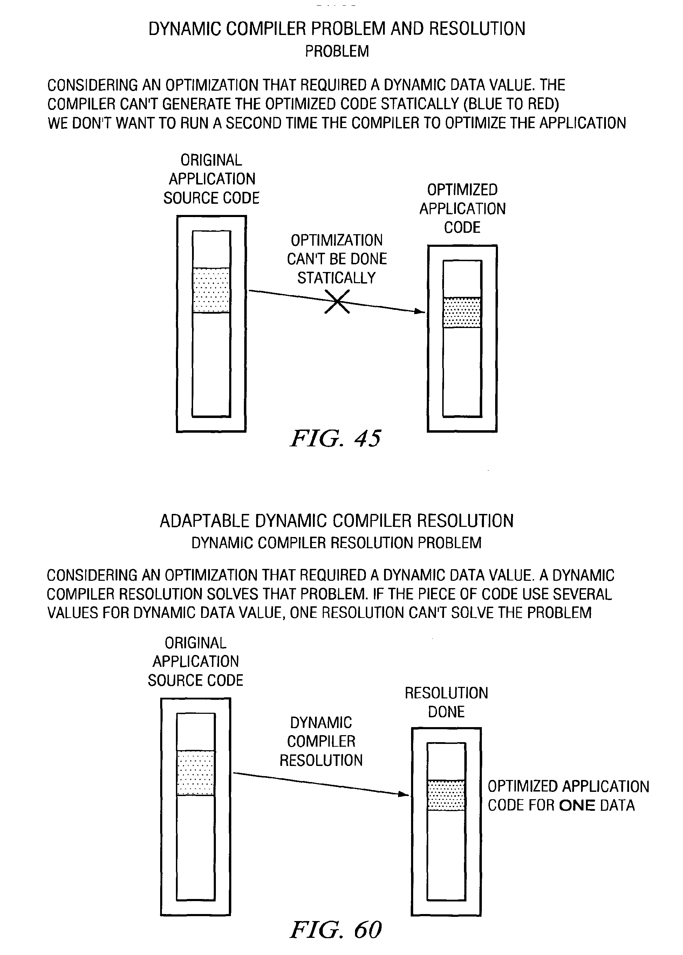

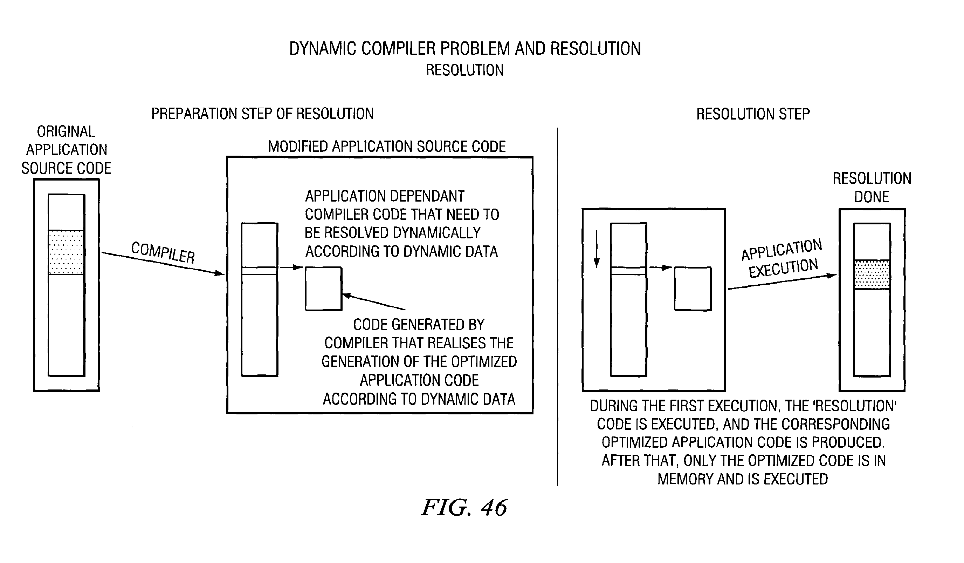

Reference is made to Figures 45 - 46. Compilation can be done either on static or in a dynamic program analysis. For dynamic compilers, they are necessary online and embedded on the platform. For static compilers they can be either online or offline. In the case of online static compilers for Java, a ahead in time compiler that runs during the loading of the class files, its execution time must be short to be compatible with user requirements. The problem is that due to execution time constraints, such online static or dynamic compilers can't do everything when compiling. If required, the runtime decides to compile some parts of code after the application loading and during its execution. But in that case, all the work of the compiler has to be done again from Zero.

Our approach is to define a way for compilers to make a dynamic resolution of a compiler work. In the context of Java applications, that provides a way to reuse efficiently work that can be done by the online compiler during the loading of the application. It can be generalized to a generic method for compilers not only for embedded platforms, but for any kind of compilation software that requires a dynamic data to solve the compilation scheme.

Let's take an example. Suppose that the ahead in time compiler identifies a loop inside a method. Suppose that that loop uses an object field value as number of time the loop need to be executed. Even if the compiler can detects that the object filed if wrote only one time by the program, it can't knows the final value that is computed during the execution of the application and that depends on the application running. That's really too bad because if the compiler knew that data it could optimise more aggressively the application.

Our approach can solve that problem easily. During the ahead in time compilation, the compilers identifies the loop. Then, it generates a code that can generate itself the aggressive optimisation taking in entry the required dynamic data. The ahead in time modifies the application code source by inserting in the original code a call to the compiler code. That can be a micro sequence code or a branch to a piece of code. The first execution of the code takes the input data and generates the optimised code for the application.

XX. DATA AND RUNTIME MONITORING AND ANALYSIS FOR COMPILATION

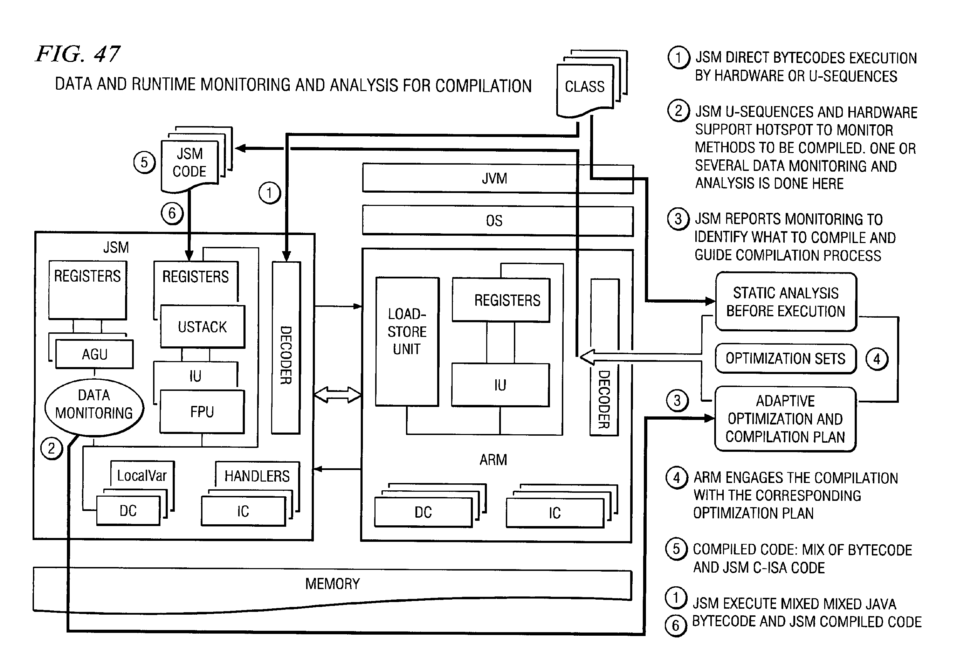

Reference is made to Figure 47. A DAC compiler relies on a hotspot detection method that identifies critical code sections to be compiled. Thus, a DAC hotspot detection algorithm should detect the only the few best methods to compile. Nevertheless, today existing detection algorithms are too approximated. They are generally based on a very simple control flow analysis with lot of inexact and approximate computations. For example to support loop detection, they consider each goto with a negative offset as the end of a loop. When such goto are executed, a counter that is used to characterize each code segment is decremented or incremented by a value that is arbitrary fixed and that does not correspond to a real value for the application. At the end, the compilers do not detect the 'real' critical methods to compile. Because all the DAC generated code is put inside a fixed size memory buffer, the side effect of the compiler is that a lot of eviction and recompilation due to the buffer size limitation occurs and the performance in the context of multiple applications is dramatically down.

Our solution relies on a data and runtime monitoring and analysis for compilation. Instead of focusing on the instruction flow analysis, we propose to use two other information: runtime monitoring thanks to hardware counters or internal JVM monitoring and data monitoring. For example, we could monitor specific events with data opcodes and benefits of them to identify potential code sections where a specific optimization can be applied: Nb of aload_0 executed inside a code, to substitute them by aload_0, dup. Getfield and miss rate to identify a code that introduces a big memory penalty access.

We introduce the method CPO (Cycles per Opcode) as a very good indication to identify the 'system cost' of a method. That method CPO will use a set of hardware events and bytecode events and operands (dynamic or static ones) to identify precisely that a method is important to be compiled. Worse is a CPO, worse than method is good for a program. A main benefit of our solution is to provide a way to realize an accurate identification of what methods need to be compiled. That identification is done using hardware events, runtime events, bytecode events and data events. By making an accurate identification: the overall performance will be increased, and energy consumption reduced. Moreover, a precise detection for compiler means than they will be less eviction and recompilation due to the code size buffer limitation. Thus a lot of performance is provided, and that makes possible the use of a DAC in the context of multi-applications.

XXI. OS TREATMENT ACTIVATION

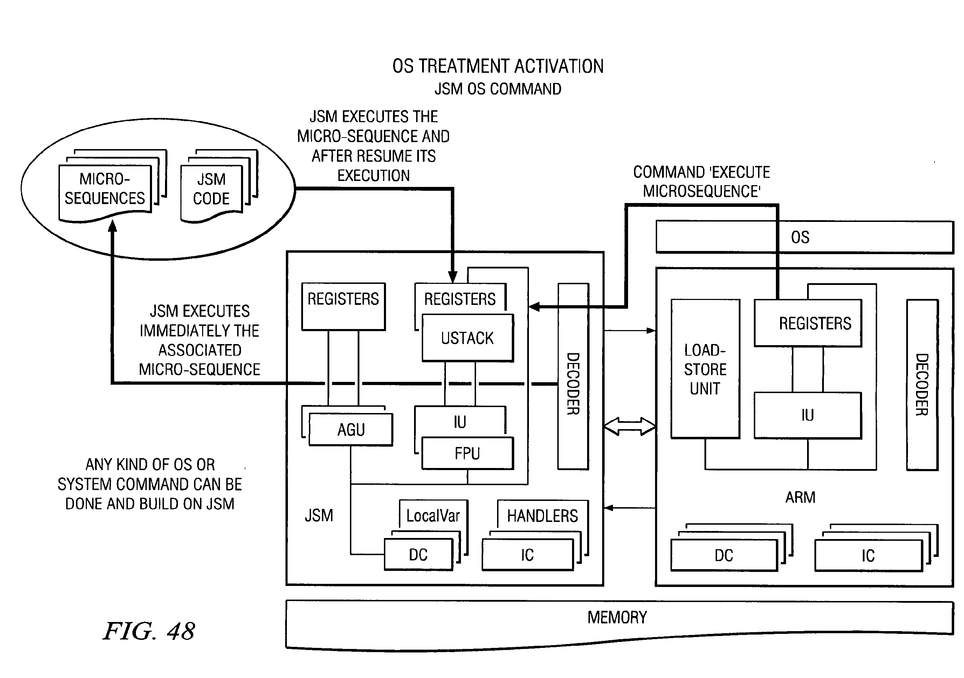

Reference is made to Figure 48. A hardware coprocessor connected to a HOST processor is generally hard to program. If it can be programmed, its use requires a lot of pieces of code on the Host processor to take into account if previous jobs are already running on the coprocessor, what's its state, engage the new action, wait for completion, get results, restore previous state and reengage the coprocessor. All these actions takes time and are complex.

Our solution provides a very simple way to enable the use of JSM as a generic coprocessor for operating system, runtimes, or any kind of software needing JSM for having a good system performance. We designed a command that can be used by a HOST processor to execute a treatment on JSM inside a micro-sequence. That command has one parameter: the address of the micro sequence to execute. When JSM receives that host command, an immediate preemption of the current process running on JSM is done and the micro-sequence is executed. After the end of that micro-sequence, JSM continues automatically its work. The only requirement on the micro-sequence is to manage at the beginning and at the end of the sequence the save and restoration of the registers use inside the sequence. That way, any kind of commands can be done using JSM.

A main benefit of our solution is to provide a very simple way to realize a treatment using a JSM command. Because that command realizes automatically the peremption and the restoration of the active treatment running on JSM, less code is required on MPU. Because the micro sequence can be set dynamically and are not hard-coded, our method does not impose any restrictions on the treatment to make. The simplicity of that solution provides a very natural way to use JSM as a generic hardware programmable coprocessor.

XXII. JSM AND MPU INTERRUPT MANAGEMENT

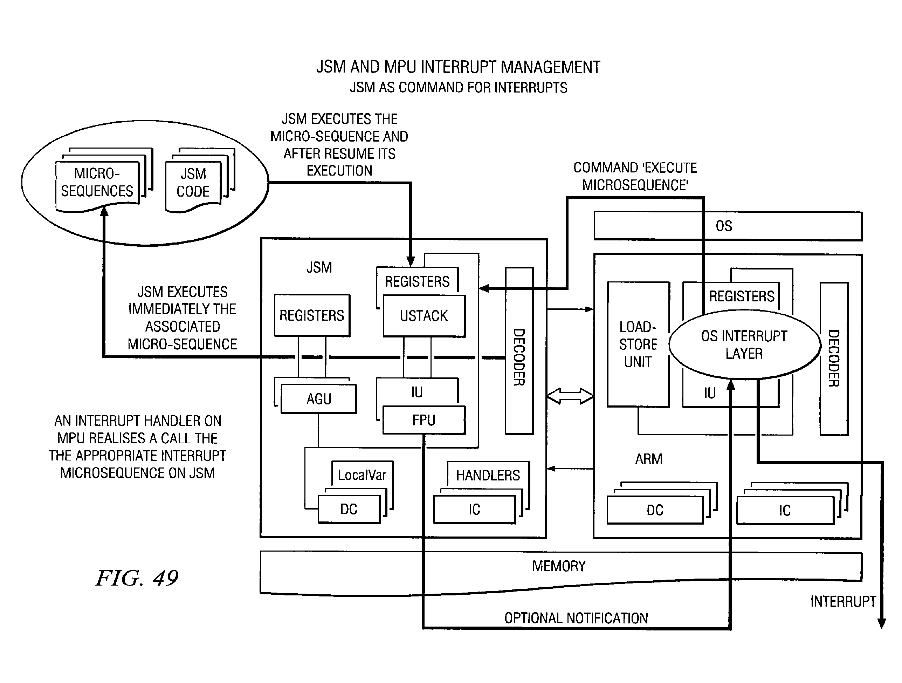

Reference is made to Figures 49 - 50. In a hardware platform where a coprocessor is present, hardware interruptions are received on the host processor and it executes. The treatment is done on the host processor. Sometimes some instructions (like floating point computations) are done using a coprocessor, but it is not the whole interrupt treatment. Thanks to the JSM command to execute a treatment on JSM with preemption of running treatments (see OS treatment activation), we can easily use JSM to realize the interrupt handlers.

As shown in the Figure 49, when an interrupt occurs, the interrupt layer running on MPU executes the JSM command with the corresponding micro sequence address that contains the interrupt handler. After that point, the JSM executes automatically the handler by preempting the process running on JSM. After the interrupt micro sequenced handler execution, and eventual asynchronous or synchronous notification is sent to the interrupt layer if required to set correctly the state of the interrupts, and at last the process that was preempted us restored. For nested interrupts, there are no problem because if an interrupt handler is running on JSM and a higher priority interrupt occurs, the JSM command will preempt the less priority interrupt handler.

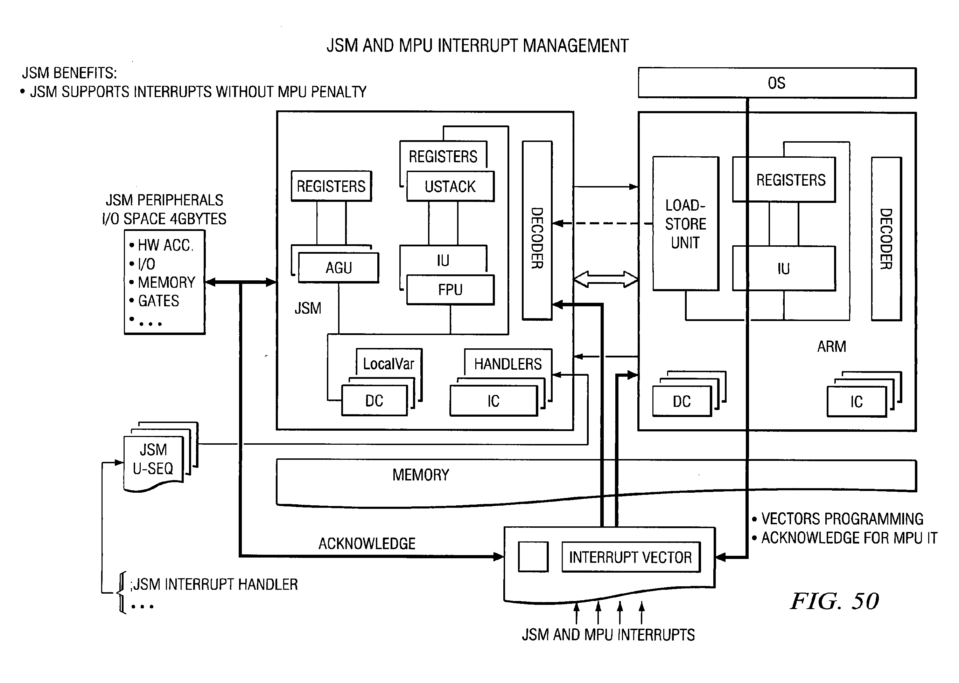

Thanks to the access of the Full Input/Output memory system access on JSM, device interrupts can be supported. More than that, as shown in Figure 50, if the hardware interrupt vector block is shared by MPU or JSM, it can be configured to launch directly the handler on JSM, or on MPU. That is done by a extended interrupt vector table in which the name of the processor is indicated. The launching of the JSM interrupt handler is done by making a hardware JSM command described previously. If additional synchronizations are required to manage correctly the interrupts, they can be done thanks to notification between the processors.

Our solution makes very easy the use of JSM for interrupts. That possibility is flexible and according to the system conception trade off. The system designer can choose to use JSM or not for interrupt management. Our approach is simple and makes its integration in a system very easily. Any kind of interrupts can be supported, synchronous, asynchronous, or nested ones.

Thanks to the access of the Full Input/Output memory system access on JSM, device interrupts can be supported. Thanks to the sharing of the interrupt vector, the MPU is not pre-empted at each interrupts and the JSM is able to perform its interrupt handlers without introducing execution overhead on the MPU. That means in an increase of performance and a decrease of energy. At last, if the MPU is suspended for a specific amount of time, it is not necessary to wake it up to support interrupts.

XXIII. JAVA THREAD ABSTRACTION

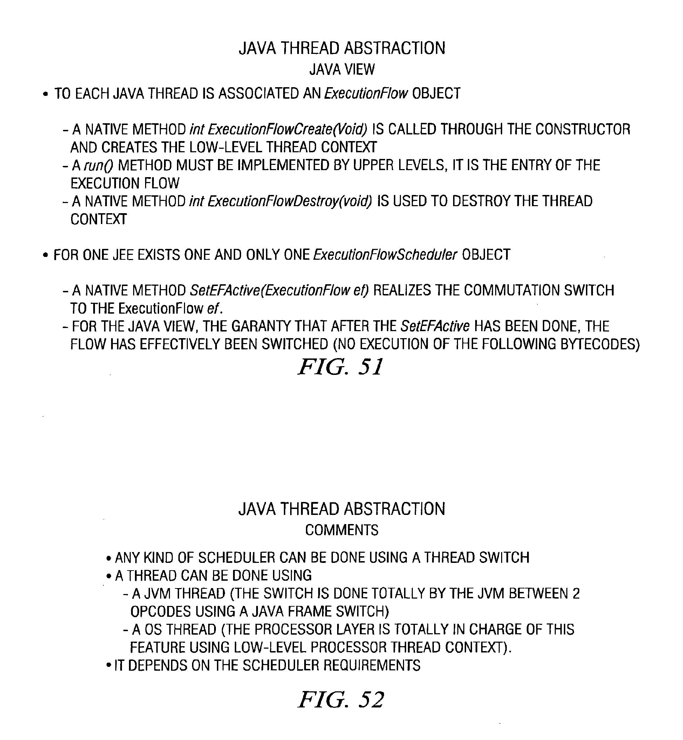

Reference is made to Figures 51 - 52. The problem is that schedulers of Java runtime are written (in native language or in Java) using operating system threads abstraction. The problem is that the Java thread scheduler relies on the low level operating system scheduler behavior.

Our solution is to use an abstraction of an execution flow that enables a construction of a high level scheduler fully written in Java that manages Java threads. Our method enables any kind of scheduling policies from hard and soft real-time scheduling, to non real-time scheduling policies, or embedded specific ones. So, simple, complex or dedicate strategy can be done like negotiated multimedia strategy, round robin, priority based policies, and so on.

We designed an object that represents the context of an execution flow. We called that object ExecutionFlow. To represent a user or a kernel thread, the Java scheduler must associate one thread object to one execution flow. Thus, the creation of execution flow object is possible dynamically. When the execution flow is not used anymore by the application and by the scheduler, the garbage collector will destroy that object. Nevertheless, we add an method to the Execution flow object called destroy that indicates to the low level runtime that the execution context used by that thread is not used anymore. That could solve easily the management of a static fixed number of available contexts for embedded real-time systems.

To switch from one execution flow to another, a method named Switch() realizes the low level commutation of the execution flow atomically. The active execution flow context is saved and the new one is restored. For the initialization of the execution flow: To identify the code entry of an execution flow, an abstract method run() must be implemented by the thread API. The data segment of the execution flow is set by the JVM. That interface must be implemented on the low level runtime system. Thus native OS thread can be used, or basic processor register context. We don't suppose any kind of requirements, except the indivisibility and atomic implementation of the switch method. Moreover, it is easy to implement a Java thread, and its scheduler, that is in reality share among several processors like it is the case on JSM hardware.

We already implement an interface on a basic kernel to demonstrate that our methodology is valid. The interface is shown in the figures.

Our solution provides a way to build a Java thread Scheduler in Java language; is fully compatible with Java language concepts, abstractions, tools and runtimes. Any kind of Scheduler policies can be designed form non real-time, specific, soft real-time or hard real-time ones. The 'real' low level architecture execution flow context is fully masked, thus complex execution flow context representation can be managed. We enable the downloading of a scheduler dynamically according the application requirements. Our solution can also be implemented on an operating system thread with respect of the 'switch' method atomicity and/or indivisibility requirement. We can restrict the thread design to the implementation of the execution flow design.

## XXIV. SUPPORTING INTERRUPTS IN JAVA

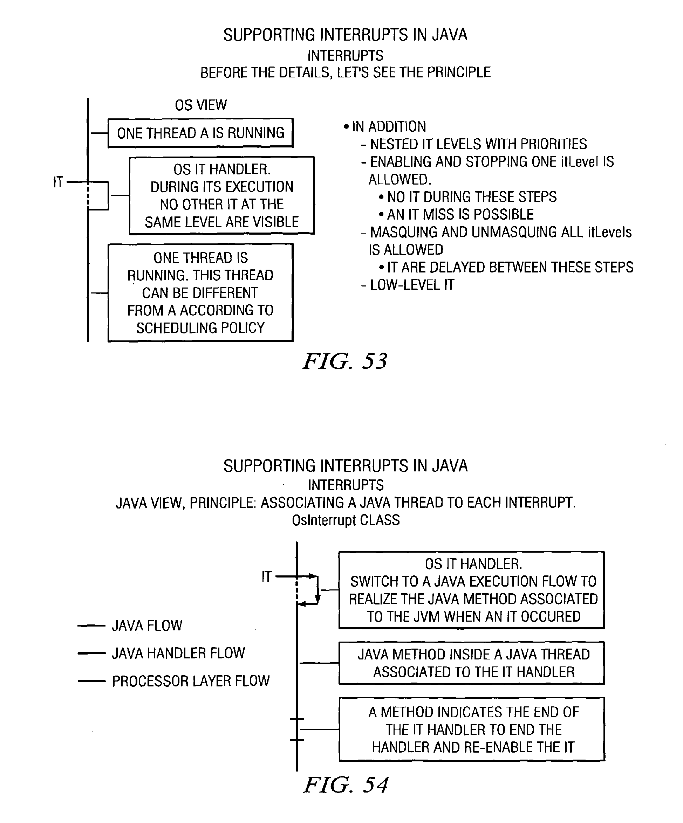

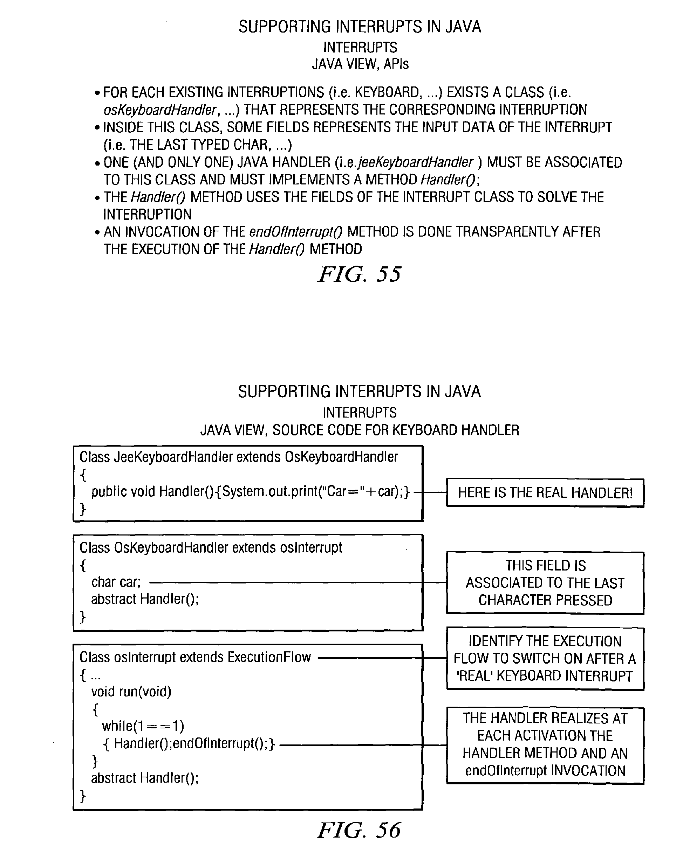

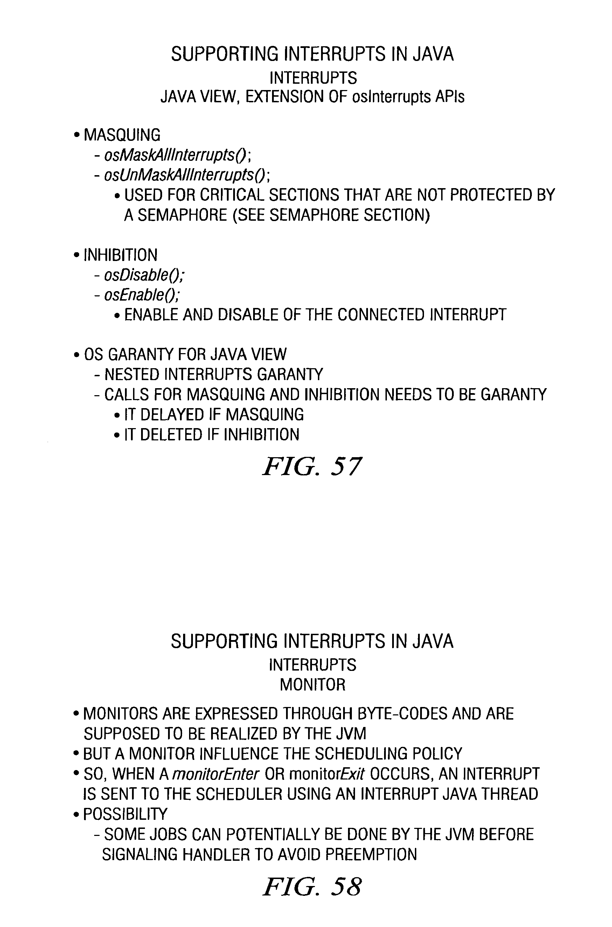

Reference is made to Figures 53 - 58. In Java language, interrupts does not exist. So, the design of software handlers are done using specific APIs that are written in native way. Our solution is to propose an abstraction of an interrupt execution flow that enables a construction of an interrupt handler fully written in Java and fully compatible with Java threads. Our method enables any kind of handlers to be written. It can be either interrupts or exception hardware handlers.

We designed an object that represents an interrupt execution flow. We called that object osInterrupt. That class is an extension of an object that represents and execution flow (see Java Thread discussion). A method handier() that is abstract must be implemented by the Java handler. At the end of the handler, an invocation to endOfInterrupt() method must be done. But it is not necessary the case according to the JVM behavior.

When a low level hardware interrupt is raised, a native handler realizes a call to the JVM that preempt the current execution flow, switches to the execution flow associated with the corresponding handler and invoke the method handler(). An optimization of that activation can be done by a software specific implementation where a non ending loop is done inside the handler, which avoids making an invocation. Then, the handler written in Java is executed. At the end, the invocation of the endOfInterrupt method restores the Execution flow that was preempted.

We propose a native interrupt layer coupled with a JVM to support the full implementations of interrupt management in Java: nested, inhibition and restoration, masking and unmasking. We also propose a way to use that method to build in Java monitor management (monitorEnter and monitorExit Java Bytecodes). That interface must be implemented on the low level runtime system. Thus native OS thread can be used or basic processor register context. We don't suppose any kind of requirements, except the indivisibility and atomic implementation of the switch method. More over, it is easy to implement a Java interrupts. We already implement an interface on a basic kernel to demonstrate that our proposal is valid. The interface and an example of use are shown in the figures.

Our solution provides a way to build Java interrupt handlers in Java language. It is fully compatible with Java language concepts, abstractions, tools and runtimes. Any kind of Interrupts policies can be designed from hardware interrupts to hardware exceptions. The 'real' low level architecture execution flow context of the interrupt is fully masked, thus complex execution flow context representation can be managed. The interruption could run on several JSM systems. Our approach enables the downloading of an interrupt handler dynamically according the application requirements. It can be implemented on an existing operating system interrupt support or can be done directly on the hardware thanks to the JVM implementation. It can restrict the interrupt handler native design to the implementation of the osInterrupt class implementation. Full management of ISRs can be done: nested, inhibition, and/or masking.

## XXV. WIDE SUPPORT FOR MICROSEQUENCES

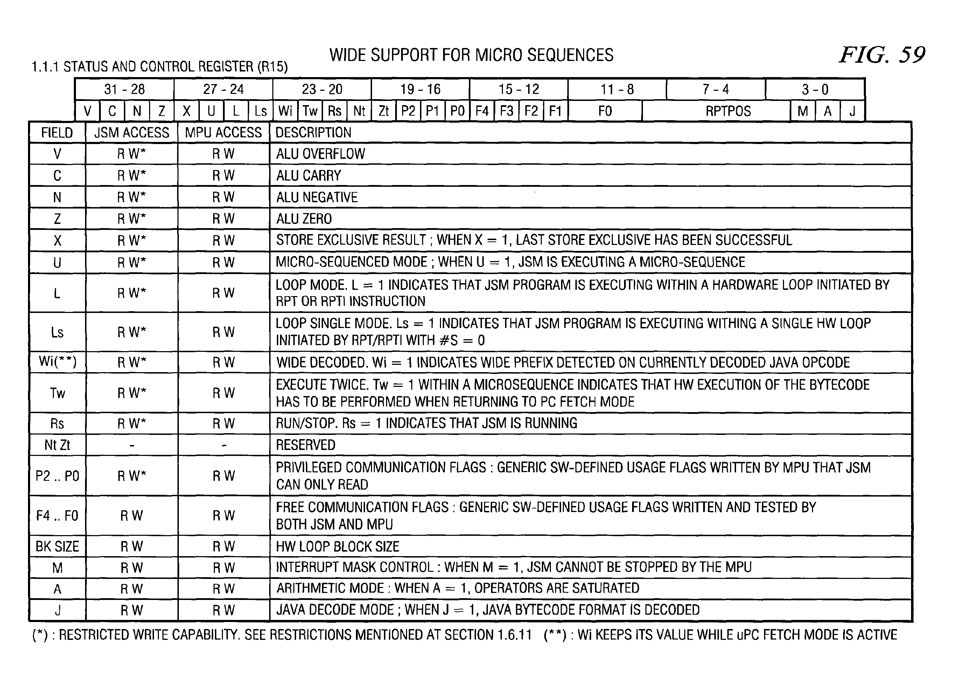

Reference is made to Figure 59. Some Java byte codes behave differently when preceded by a WIDE Java bytecode, than when not. For example ILOAD Java byte code uses an operand of 16 bits, and WIDE ILOAD uses an operand of 32 bits. Considering the JSM, each Java bytecode can be micro sequenced. For example, suppose that the ILOAD is micro sequenced. The problem is that the ILOAD microsequenced must know if a WIDE is before the ILOAD opcode. The way to do that is for the microsequence to access from a data access the instruction flow to make an explicit access to the code before the ILOAD. Due to possible operands that could have the same value than the WIDE bytecode, a deep searching and identification must be done. This is not reasonable in an environment where the execution time and the energy are elementary requirements.

Our solution is a way for a microsequence to know if a WIDE was before the opcode that is microsequenced.

To do that, if a WIDE is decoded, a bit is set in a register, otherwise the bit is cleared. In one example, the register is the status and control register R15 and bit is named Wi.

During the microsequence, a simple test value on that bit will solve the initial problem, and the microsequence knows if a WIDE is present before easily.

Our solution provides an easy way to identify if a WIDE precedes a bytecode. That feature is used in micro sequences. The solution avoids heavy computations and searching code inside micro sequence by replacing that code by a test bit computation. Thus the solution increases the performance; decreases the energy; and minimizes the code size.

## XXVI. ADAPTABLE DYNAMIC COMPILER RESOLUTION

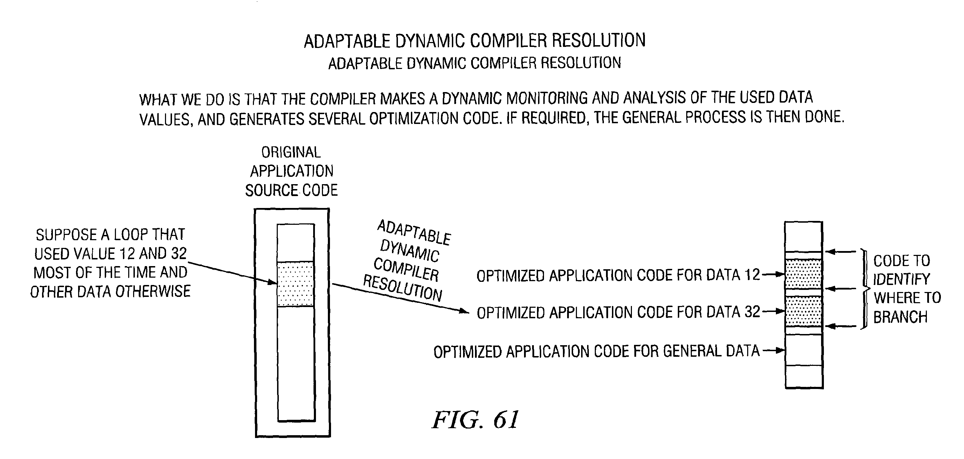

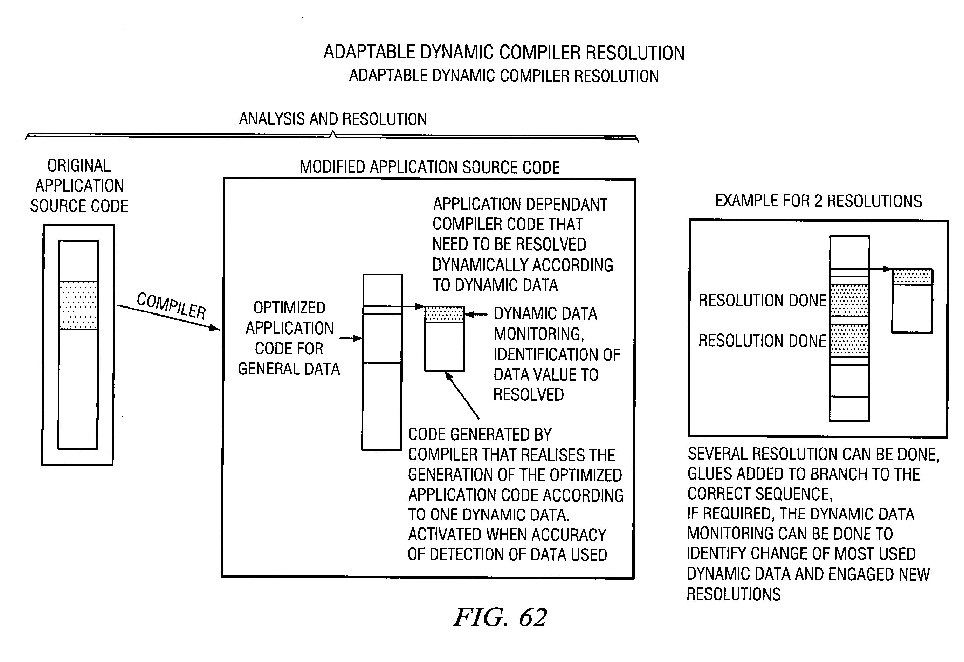

Reference is made to Figures 60 - 62. We propose a solution to define a way for compilers to make a dynamic resolution of a compiler work. In the context of Java applications, that provides a way to reuse efficiently work that can be done by the online compiler during the loading of the application. It can be generalized to a generic method for compilers not only for embedded platforms, but for any kind of compilation software that requires a dynamic data to solve the compilation scheme.

Our approach can solve that problem easily. During the ahead in time compilation, the compilers identifies a piece of code like a loop. Then, it generates a code that can generate itself, the aggressive optimisation taking in entry the required dynamic data. The ahead in time modifies the application code source by inserting in the original code a call to the compiler code. That can be a micro sequence code or a branch to a piece of code. The first execution of the code takes the input data and generates the optimised code for the application.

The problem of such technique is when the dynamic data change according to application requirements and regularity behavior. For example, suppose a loop that uses value 12 and then, value 32, then again 12, then again 32. Our previous solution solves the problem for the first used dynamic data, and the optimisation of the compiler can't be done for other used data. Moreover, if another data is used only one time, it doesn't work.

We propose a way to use the dynamic compiler resolution, which is a solution that requires only one dynamic data value, for a set of data. We call that adaptable dynamic compiler resolution. As shown on the figures, the approach is to introduce a basic monitoring in the resolution treatment. The compiler reserves the memory space for a number of possible resolutions and keeps in memory the original treatment.

For example, suppose an application that has a loop that most of the time uses value 12 and 32 and sometimes another value. The adaptable resolution will be to resolve the code for 12 and 32 and place the general code of the loop for other data. Thus, for most used values, the optimisation is fully done.

The compiler must take care of the available memory and also of the time penalty required to make the identification of the most use data. Several ways can be used to achieve that like making a kind of hotspot, or by generating the first used values. We will describe fully these strategies.

Thanks to that technique, a general resolution scheme can be applied by compilers.

That technique can also be applied to other pieces of software where dynamic data are used.

At last, that technique supports fully the dynamic change of the data used by the application. For example, if a loop uses 12 and 32 for ten minutes and then 64 and 48 after, the adaptable resolution could identifies that 12 and 32 are not used anymore by the application and that 64 and 48 must be resolved. That's due because our technique is done dynamically. A brief description of the solutions is described in the technical description.

A main benefit of a dynamic resolution is that the compiler has not to be launched again for making a dynamic compilation and supports multiple range of value of data used by making a dynamic identification of what are the best dynamic data to use for resolution. Thanks to that technique, a general resolution scheme can be applied by compilers. That technique can also be applied to other pieces of software where dynamic data are used. At last, that technique supports fully the dynamic change of the data used by the application. It can be applied to any kind of resolution. We introduce a small overhead of the application for the executions where the monitoring of data is engaged, but after that the application code is more efficient and the performance can be increased significantly. That means energy consumption is reduced and overall performance is increased.

## XXVII. MICRO STACK SOFTWARE USE

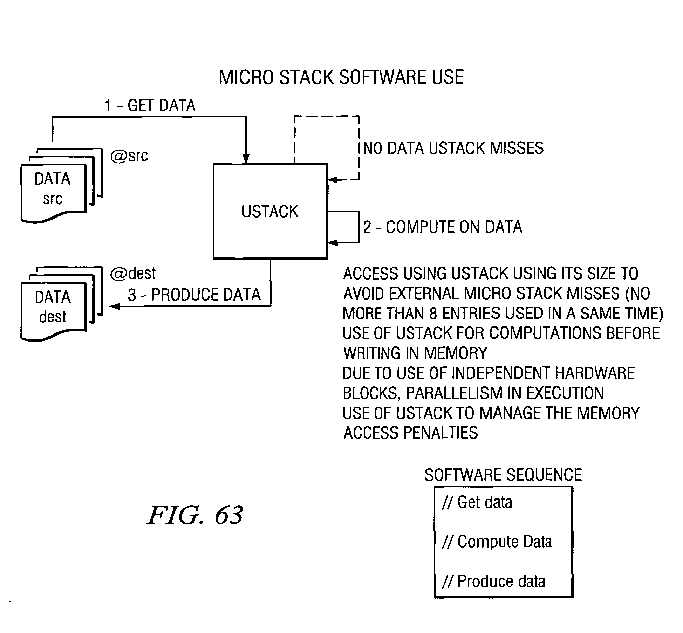

Reference is made to Figure 63. A lot of media processing software realizes loading of data, transformation of data and storing the resulting data in memory. For example, sound rate conversions, mpeg decoding, and so forth. But general system software has the same need as DMA transfer (no manipulation). That method can also be used for basic samples analysis.

That piece of software is done using a temporary memory zone to store the data during the computation and the memory transfer. Because the registers are used to do the computation, it most cases these routines used data memory zones.

Thus, data misses and memory penalty execution time are introduced on these piece of code.

Our solution is a general way to use the micro stack of JSM to make such software routines. Our solution relies on three actions: 1) Data are loaded in the micro stack. It can be done by multiple loads, with respect to the size of the micro stack to avoid micro stack misses. 2) Data are manipulated inside the micro stack. Thanks to the use of Java byte codes supported on JSM, the micro stack is used naturally to make the computations. To take the most important advantage of the micro stack, the size of the micro stack must be taken into account to avoid micro stack misses. 3) Lastly, data are stored, eventually by packets to the destination memory. No assumption is made on the source and target memory.

Thanks to our method, to the micro stack access penalty which is low, and to the elimination of micro stack misses, the performance of the software is increased and the energy is decreased. At last it is easy to code such a routine. Thanks to that method, to the micro stack access penalty witch is low, and to the avoid of micro stack misses, the performance of the software is increased and the energy is decreased. At last it is easy to code such a routine. Thus that solution increases the performance and decreases the energy.

## XXVIII. MULTIPLE OBJECT REPRESENTATION

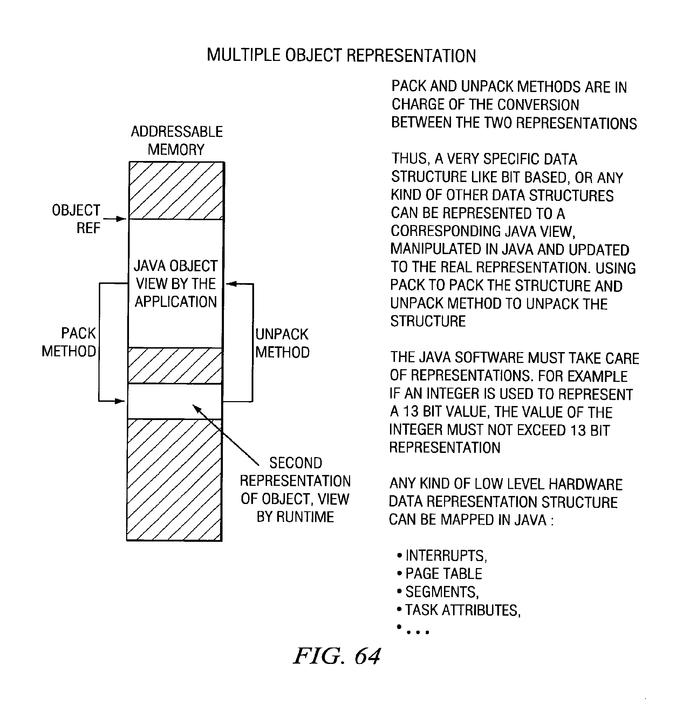

Reference is made to Figure 64. When using Java, only Java object field structures can be used -- integers, long, double, float. In Java, there is no way to declare a structure of 5 bits that corresponds physically to 5 bits in memory. Thus, bit based structures or complex structures can't be expressed in Java objects directly.

Our solution is a general way to manage multiple representation of an object. That can be used to access low-level data structure used by the hardware in Java like page table entries, registers, interrupts table configuration, task structure. Thus, that features enables the access to any kind of non represented structure in Java. This is done in several steps: 1) Identify the low level data structure to be represented in Java. 2) Design a corresponding Java class where the representation of Java is higher than the low level one (for example use an integer for a 13 bit field). 3) Design in native two methods : PACK that reads the Java fields and update the low level representation. UNPACK that reads the low level representation and update the Java fields. Thus, any kind of data structure can be manipulated in Java. Each time the update of the values are required, a call to PACk method must be done. At the opposite, to get the last value of the low level representation (if the hardware updates it) a UNPACK method must be done. Of course, if only one of PACK or UNPACK method is required; the other one has not to be implemented.

Pack and Unpack can be named differently. These methods can be optimized to make only updates if fields have been modified. If an allocation of a low level structure must be done, it can be done inside the constructor of the object. The Java object that has the method PACK and UPACK can have nested objects that don't necessary have PACK and UNPACK method. For example, an array of descriptors can be: a Java object comprised of one array with a PACK method that pack all descriptors during the call, and several Descriptor objects which have a PACK method to pack only the corresponding descriptor used. At last, several hierarchies of representation can be used. From 2 to any kind of levels according to the implementation of one PACK and UNPACK method for each representation level.

Thanks to that method, any kind of data structure can be represented in Java language and used in Java. Complex objects can be used in Java for one low-level structure. No restrictions are made. It enables the access to low level data structures used by drivers or operating systems. That enables the building of new kind of software for Java. More than two representations can be used if required. That can be used to make some kind of protection where each representation is attached to one level of protection.

## XXIX. VIRTUAL MEMORY IN JAVA

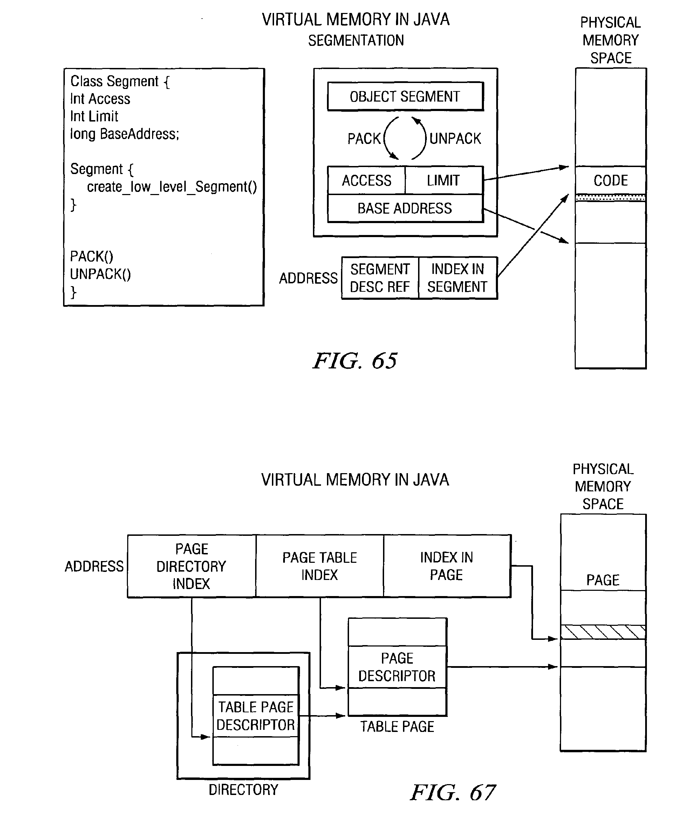

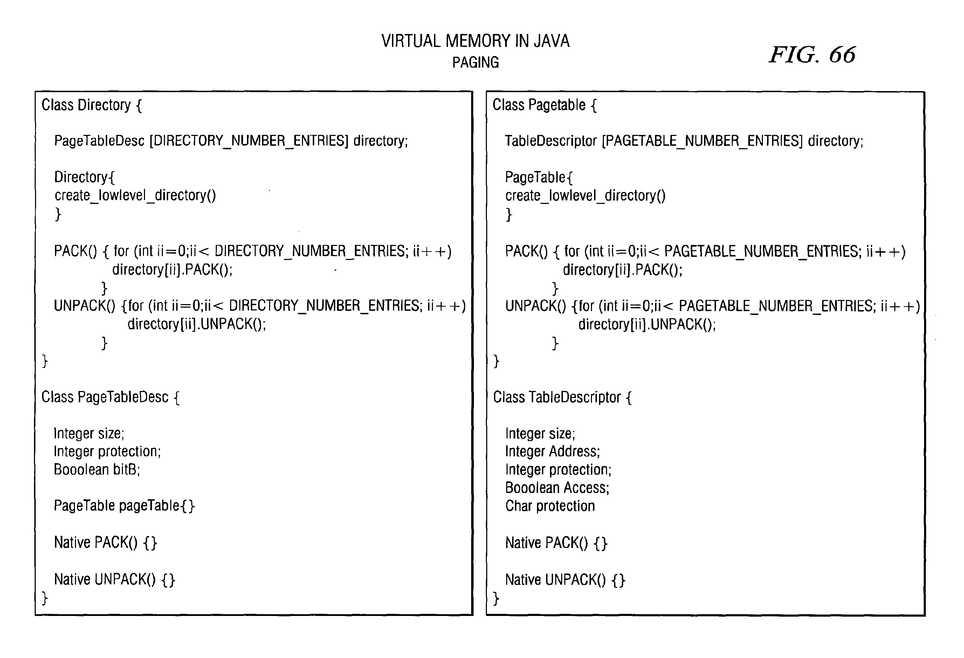

Reference is made to Figures 65 - 67. To build an operating system, Java language could be used to increase the stability of the system. One of the problems not solved today is how to build and manage in Java the virtual memory space.

Our solution is a way to design any kind of virtual memory space form segmentation, paging, paging with swapping, segmentation and paging together. To do that, we assume that some of the objects are designed using the double object representation proposed. For segmentation, the solution relies on an-object that represents the segment descriptor. During the pack method, the corresponding low-level descriptor is updated. Inside that object any kind of additional data can be added according to the MMU architecture requirements. For Paging, the solution is to design in Java the low level structure required for the paging using: a directory which is an array of page table descriptors with specific data and a page table constituted with an array of page descriptor. After that, creating a new page in the page table comprises creating an object Page, initi the correct fields, making a PACK and sets the reference in the page table array and making a PACK call. So, the control of the virtual space is fully done by Java and can be of any kind. For swapping, the reference of a page identifies the real content of a page. So, an method 'putpageondisk' can be designed to transfer in Java the content of a page on disk. About the LRU algorithm, anything can be done.

Another use of this method is with cache control. For a Smart Cache, the base address is used to identify the fast memory access pages stored inside the Smart Cache. In our case, the smart cache can be represented by an object that has a page reference and a PACK method. When setting a new page reference and making a PACK, the smart cache loads automatically the new page content in its fast memory access. Because our approach comprises representing the low level structures of the architecture in Java, any kind of OS strategy can be implemented, making possible the virtual memory management in Java language thanks to the object double representation solution. Because our approach comprises representing the low level structures of the architecture in Java, any kind of OS memory strategy can be implemented, making possible the full virtual memory management in Java language thanks to the object double representation solution. Makes possible the dynamic download of the allocator or a virtual memory low level operating system strategy in Java Language. Thus, the stability of the overall platform is increased.

XXX. ISR DESIGN IN JAVA

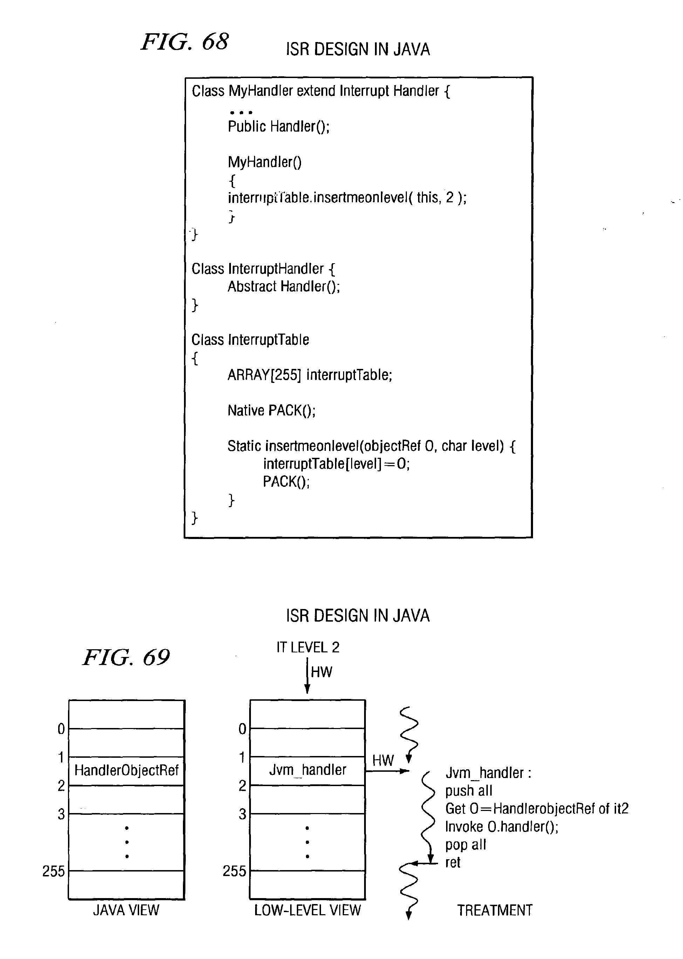

Reference is made to Figures 68 - 69. To build an operating system, Java language could be used to increase the stability of the system and the download of the OS. One of the problems not solved today is how to build and manage in Java the Interrupts.

Our solution is a way to design any kind of interrupt service routine management in Java. To do that, we assume that some of the objects are designed using the double object representation patent we already proposed. With reference to the figures, we suppose the existence of an object that represents the low-level of interrupts. Inside that object, there is an array of other object references that need to have a mandatory interface (in our example a method handler must be implemented). When inserting a new object reference in that array, and after making a PACK, the JVM can find when the interrupt is raised the corresponding object and invoke the corresponding handler method. Thus, any kind of code can be added or designed between the real handler invocation like control.

Because our approach comprises representing the low level structures for interrupts of the architecture in Java, any kind of interrupt service routine strategy can be implemented, making possible the full ISR management in Java language thanks to the object double representation solution. This makes possible the dynamic download of the ISR. Thus, the stability and security of the overall platform is increased.

XXXI. SYSTEM CALL DESIGN IN JAVA

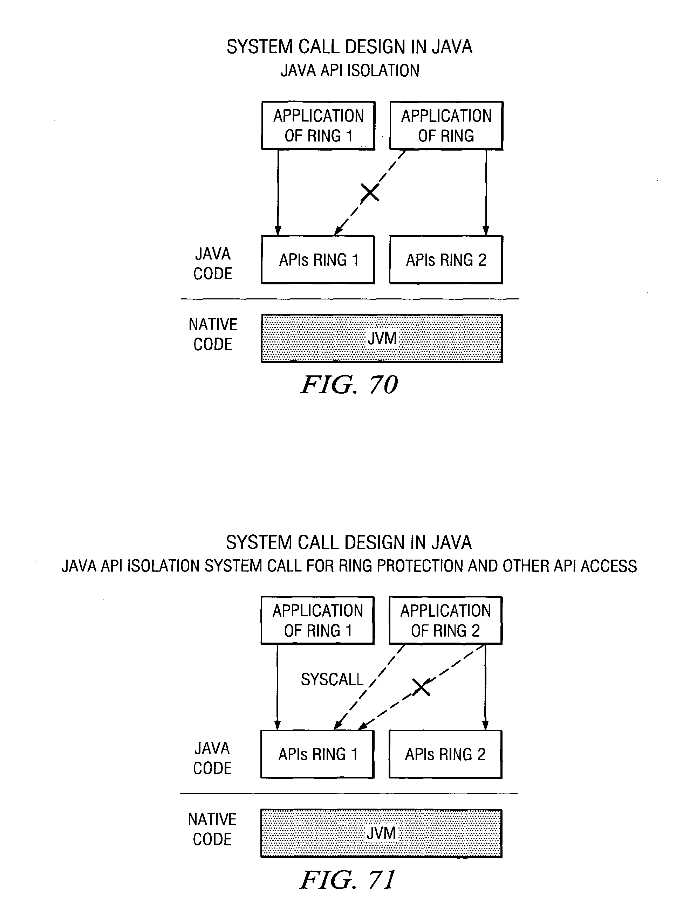

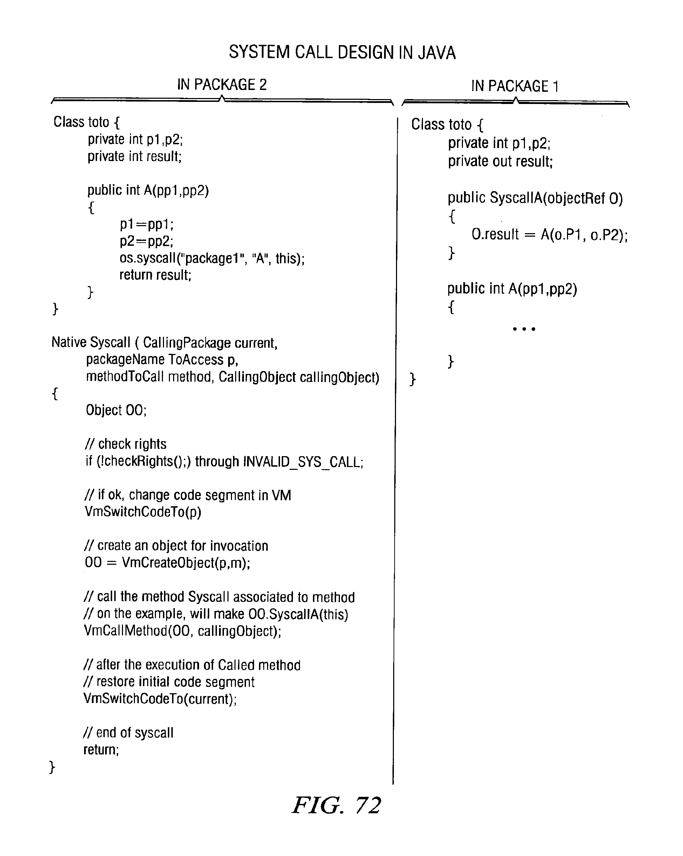

Reference is made to Figures 70 - 72. We provide a set of solutions that enable the design of some parts of an operating system in Java. At last, some applications could have like in traditional existing embedded systems, the way to access different code section. For a Java application and for Java point of view, the code segment of the application is represented by the set of accessible APIs. Operating systems of processor like Intel provides the way for an application to authorize or not the access to a higher privilege application. This can be the ring assumption, or the user/supervisor code abstraction. Today, these abstractions don't exist in Java and can't be implemented for code segment point of view. We provide a solution to make a Java system call to enable access with security policy checking of a higher privilege code section. Because the compiler ensures the isolation between the code section APIs, an application 2 made using APIs set 2 can't access APIS set 1 made for application 1. To do that, we suppose that for each method needed to be accessed (exactly that traditional system call interface) we insert a system call interface in Java.

For example, suppose that a method A() of object toto() is available in package 1. package 1 provides a toto object for package 2. In that object, there is a method A() with the corresponding signature. Inside the A() method, first, there is a copy of the parameters in object fields of the toto object. After, there is an invocation to the method syscall("set1","A()", this). That method is in native. Check rights according to current thread attributes. If authorized then, the JVM changes the code segment API of the calling thread and build a new frame that use the fields of object toto of package 1 and then invoke the method A(). Method A() is executed. After its execution, the output parameters are wrote in object toto() then the VM is called through the native call endSysCall. Then the VM switches to the calling code segment (package 2) and copies toto fields for output parameters. Thus, a system call is made. This method enables the use of JSM system command calls to build a Java system call. Data structure used in the slides can be adapted to the system requirements and the vm requirements, but all the steps described need to be done.

We provide a solution to make a Java system call to enable access with security policy checking of a higher privilege code section. When building a operating system, that feature is required to ensure the correct isolation of the code segment. Our solution doesn't impose the way to realize the checking of rights to enable the call. It can be a capacity based, rings, or any kind of security strategy. Moreover, the security policy can be done outside the VM runtime, in a policy module. Our solution can be adapted using JSM system commands to realize a workable system call for Java.

## XXXII. NESTED OBJECT APPROACH

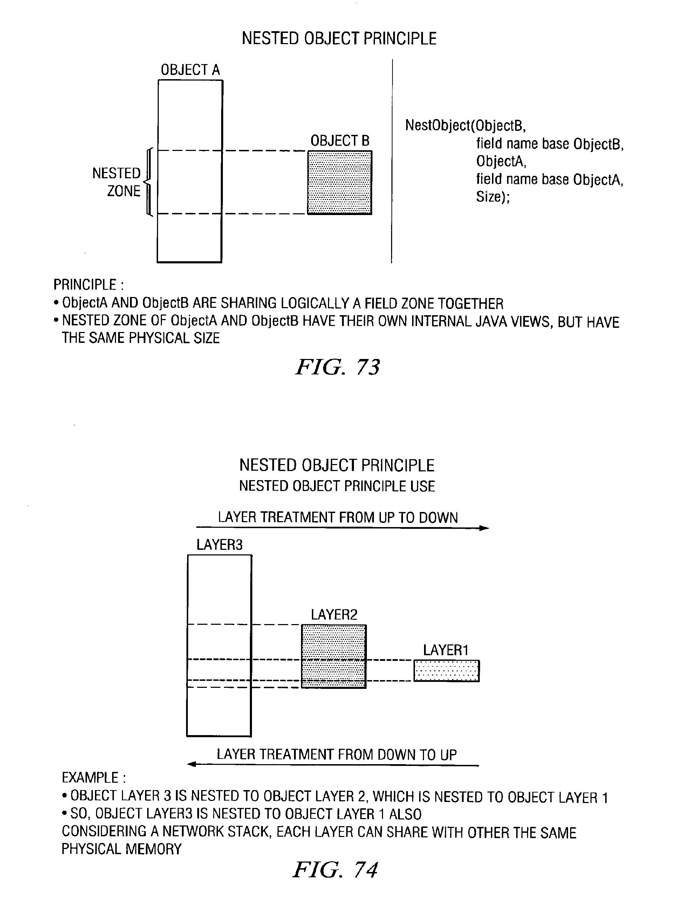

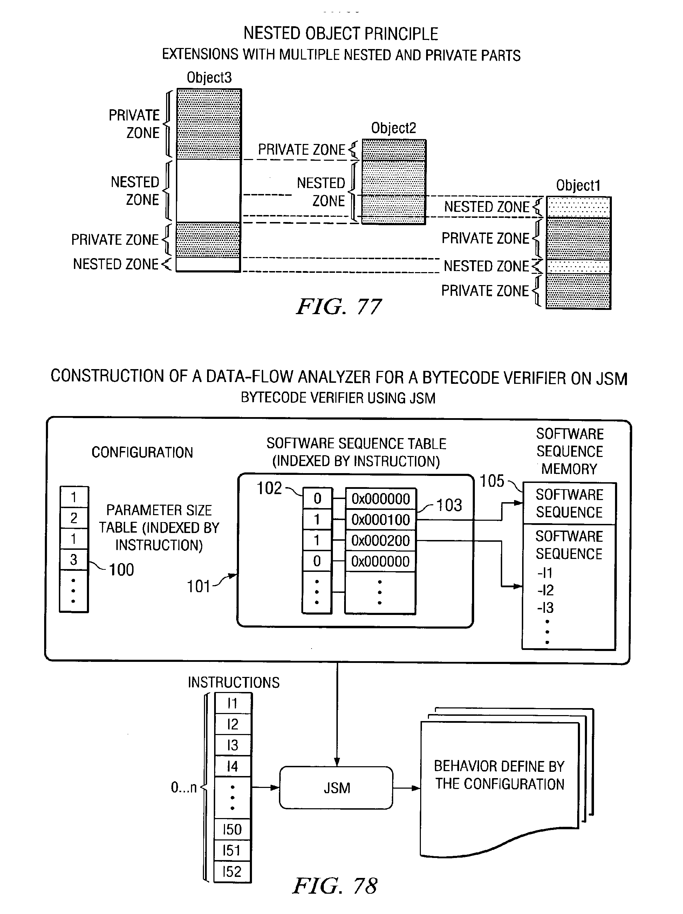

Reference is made to Figures 73 - 77. Objects are independent from each and supposes that each object has its own private memory. The problem is that no sharing of parts of objects can be done by the object runtime.

We introduce the notion of nested object that enables the logical sharing of a part of an object with another one. We define an operator named NestedObject that must be support by the object runtime. That operator takes five parameters: 1) First Object; 2) Base of nested zone identified by the field name of First Object; 3) Second object; 4) Base of nested zone identified by the field name of Second Object; and 5) Size of nested zone. At the end, the First Object and Second Object share a nested zone that starts from the field name of First Object and Second Object for a specific size. Thus, the nested zone must have the same physical size. The zone can be just one field. These features can be used in many ways.

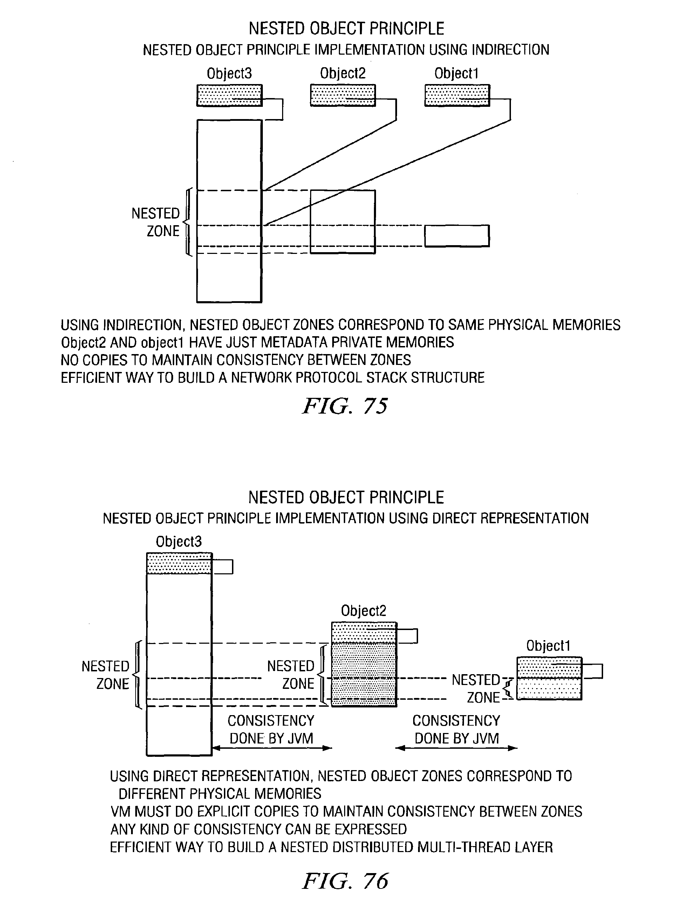

With reference to Figure 74, considering an encoding or a decoding of a network protocol stack, object structures can be nested to avoid explicit copies of objects in applications. That can be used for encoding or decoding, so up to down, or down to up. In the context of a runtime indirect object representation (Figure 75), the nested zones are very simple to do in any cases because the object runtime can map directly the nested object zone to one an only one physical memory space, making very efficient the use of that zone because no copies are required by the runtime to maintain the consistency of the nested part. The disadvantage of that solution is that no specific consistency scheme can be used to control the nested consistency.

We can also use a direct representation of Objects (see Figure 76). In this case, the nested zone can't be done using same physical memories. Thus, the object runtime is in charge of maintaining the consistencies by making copies and controlling the memory subsystem (i.e. cache) if required. This scheme authorized a dedicated consistency scheme on the nested zones and enables its use in a distributed multi-thread environment. Thanks to the consistency policy that can be designed according to the object runtime constraints and application requirements, this technique can be used to achieve a way to make intra object fine grain protection. This can be done by introducing inside the consistency scheme a security policy to give or not access to the nested zone, dynamically or statically. An extension of that approach is to enable multiple nested parts in an object with managing private zones. Using that scheme, all copies are managed by the system runtime. In the case of direct object representation, it is possible to support that scheme. For indirect representation, strong hypothesis on object fields representation are required. Another point is that if the runtime required a garbage collector, in the context of indirect representation, a specific treatment has to be done to ensure that if one of the two nested objects is in the root context (root or reached from a root), the other one has also to be considered as in roots. A simple table has to be maintained by the runtime to ensure that point.

This approach can be used in any object runtimes, including Java runtime. It is compatible with Java object runtimes, and tools and language. That technique can be used in any kind of application where a sharing of a part of an object can be done. In the case of indirect representation, no copies for maintaining the consistency are required, making that technique very efficient for software stacks (protocols, multimedia decoding, sound generation, packet extractions, packets encoding, streaming, etc).

That solution can be used to other kind of applications multi-threaded. Thanks to the ability to introduce a specific consistency scheme for managing the nested parts of objects, dedicated of general purpose consistency can be designed. At last, no hypothesis is done on the underlying architecture that can be comprised of one, or several processors, with none, one or multiple cache hierarchy. That technique can be used to make fine grain security control according to the object runtime and application requirements. It can also be used to enable the parameter passing between several security rings for example to build an efficient system call between two rings. That technique could be extended to a general API to make a sophisticated, non fixed, and specific object global mapping policy that could be done outside the object runtime itself. At last, it is compatible with double object representation (see other corresponding section herein).

## XXXIII. CONSTRUCTION OF A DATA-FLOW ANALYZER FOR A BYTECODE VERIFIER ON JSM

After the loading of a Java classfile, a verification stage must be done before executing the Java bytecode. In this verification stage, an essential step is a data-flow analysis, in order to check that the code is correctly typed and so to check it is not possible that the code will execute untrusted operation like arbitrary memory accesses or executing part of protected API by turning around the Java bytecode semantic. The execution of this mandatory analysis consumes time and consequently penalizes the application start-up time.

Our solution provides a new way to do the data-flow analysis with a close integration of software and hardware features in order to check in one or several passes the type correctness of a bytecode. Our solution comprises using JSM specific resources (pipeline, PC management, $\mu$-sequences, $\mu$-stack and local RAM) to do the data-flow analysis. Our solution is to have a particular $\mu$-sequences configuration with their code to make this analysis. Our solution can be applied with any processor supporting $\mu$-sequences.

To simplify, a bytecode data-flow analysis algorithm is principally comprised of two major processes: (i) decoding bytecodes to browse all instructions and execute a process associated with each opcodes; and (ii) building a stack of type and a local variables map by tracking write operations issued by the execution of each opcode and checking that every value read from stack or local variables by the execution of each opcodes are of the right type. Our solution is to overload all opcodes (hardcoded and $\mu$-sequences) with $\mu$-sequences which do the data-flow analysis. So, the hardware will do the decoding and the branching and the $\mu$-sequence code the building of the stack of type and the local variables map of type. For example, the normal execution of the Java opcode IADD adds the two values (each must be of integer type) at the top of the stack and push back the result (of type integer). In our solution, a $\mu$-sequence overloads the normal execution of the IADD opcode. Instead of performing an addition, the code of the IADD $\mu$-sequence check that the two values at the top of the stack represent an integer type, and push back the value representing an integer type. So the stack, instead of representing value, represents the type of this value. By extension, all opcodes are overloaded with such $\mu$-sequence codes which check type correctness of the bytecode. So, the instruction decoding in hardware as well as hardware features like hardware stack management (to build a stack of types) and fast local RAM (to build a local variables map of type) improve performances of the data-flow analysis in term of time and energy consumption.

Other solutions are based on a pure software approach that uses an interpretation loop to scan the program in a linear way and use a software management of the stack of type. Our solution uses the JSM hardware resources to do this analysis, thus the analysis step is more per formant. Thanks to the use of JSM Hardware resources, in particular the instruction hardware decoding of JSM, we obtain a significant improvement of performance by integrating a hardware and software approach. Using our solution the execution time of the data-flow analysis is minimal for JSM and provides more CPU for other tasks in the system. Thanks to the hardware and software deep integration, the energy consumption during the data-flow analysis building is minimal for JSM. We show that we can use JSM not only to execute bytecodes but also in other ways thanks to $\mu$-sequences concept. In the context of JSM, we can support a data-flow analysis of any 8 bit machine code. Our solution can be applied with any processor supporting $\mu$sequences (that can be more or less than 8 bits machine code).

## XXXIV. Merge of compiler and VM actions in one instruction

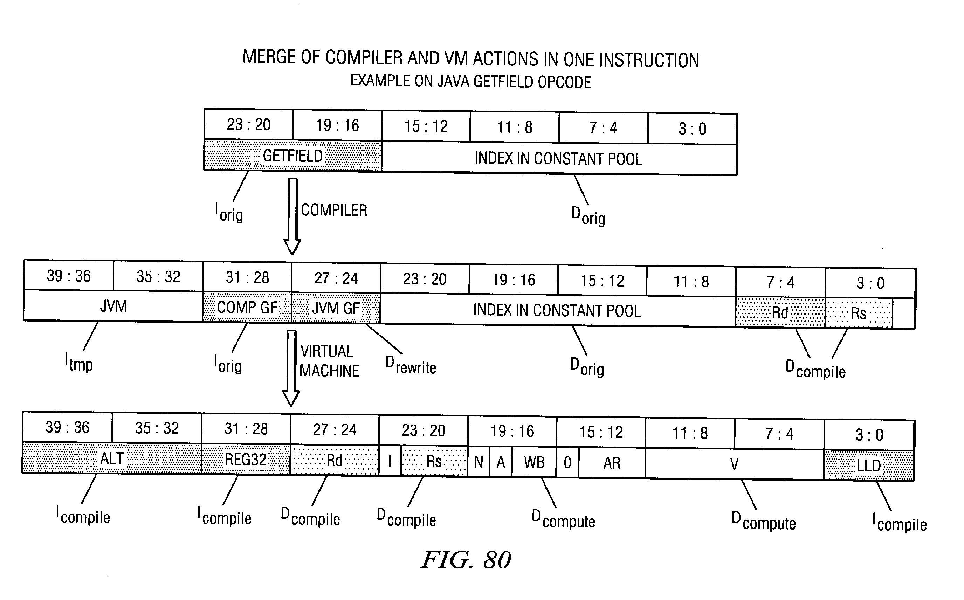

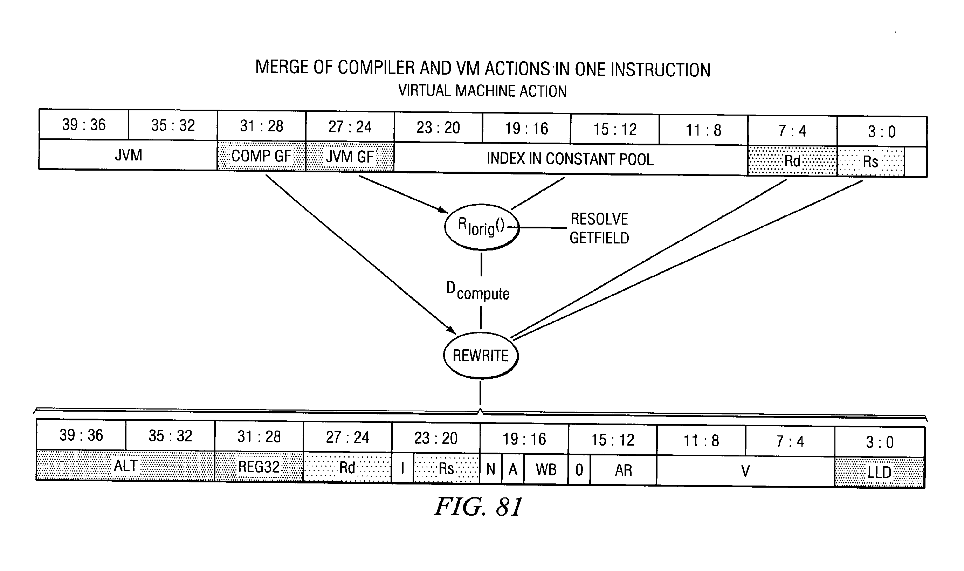

Reference is made to Figures 80 - 81. In a Java runtime, or any runtime with an intermediate code, an on-line compiler (like Ahead-in-time Compiler or Dynamic Adaptive Compiler) needs some information to perform special optimizations, especially to rewrite intermediate code into native code. But, this information is the responsibility of another part of the runtime, most of the time a VM. A simple API or common data structure between compiler and VM could be sufficient. But within a runtime which support dynamic linking at first use, like in most of Java runtime, these information are not ready at the right moment, for example during a Ahead-in-time compilation. So, the compiler cannot do the optimization.

Our solution relies on a new instruction allowing the compiler to emit optimized code despite of information not known at this time. When this new instruction is executed, it gets missing data and rewrites itself to the final optimized instruction(s).

For comprehension, here follow some definitions: 1) In the intermediate code, there is an instruction $I_{orig}$. 2) $I_{orig}$ contains information $D_{orig}$ to perform its semantic. 3) The compiler, in order to optimize $I_{orig}$, need processed information $D_{compute}$ from the runtime and information $D_{compile}$ from the compiler itself. 4) The runtime compute $D_{compute}$ by applying a function $R_{Iorig}()$ with $D_{orig}$. 5) $I_{compile}$ is the instruction, or a sequence of instructions, which replace $I_{orig}$ in the optimize code.

As an example, if we consider the optimization of the Java opcode GETFIELD into a single native instruction LD (load from memory), $I_{orig}$ is the Java opcode GETFIELD, $D_{orig}$, the index in the Java constant pool (as defined by the Java Virtual Machine Specification), the function $R_{Iorig}()$ a function which resolve symbolic reference to a field into numeric information, $D_{compute}$ the offset at which the field is placed into the object layout, $I_{compile}$ the LD instruction, $D_{compile}$ register numbers of the source and the destination of the LD instruction.

Our solution relies on an instruction $I_{tmp}$ in the intermediate code. With this instruction, the compiler can generate an optimized code without knowing information $D_{compute}$. For that, the new instruction contains: 1) $I_{orig}$, or a derived form, which point, directly or indirectly, to the right $R_{Iorig}()$ for this instruction. 2) $D_{orig}$, or a derived form, to compute $D_{compute}$ by the runtime. 3) $D_{compile}$ which contains compiler information like register numbers. 4) $D_{rewrite}$ which point, directly or indirectly, to a pattern or a function to correctly rewrite this instruction $I_{tmp}$ into the final native instruction $I_{compile}$.

When the compiler needs to generate an optimized code to replace $I_{orig}$ but do not have some information yet, it generate the instruction $I_{tmp}$ describe above instead of the $I_{compile}$. When the Java runtime (VM or processor) execute this instruction $I_{tmp}$, it decodes the instruction and executes four steps: 1) With $I_{orig}$, it find the right $R_{Iorig}()$. 2) With $D_{orig}$, it applied the runtime transformation $R_{Iorig}(D_{orig})$ and obtains $D_{comput}$. 3) With $D_{rewrite}$, it locate a process to obtain the final instruction(s) $I_{compile}$, by applying a function $F_{Drewrite}(D_{rewrite}, D_{compiler}, D_{compute})$. 4) It replace the instruction $I_{tmp}$ with the final instruction(s) $I_{compile}$ obtain in step 3. It is not necessary, but greatly recommended, that the length of the

instruction $I_{tmp}$ is lower or equal to the length of the instruction(s) $I_{compile}$ to avoid code relocation during execution of $I_{tmp}$.

In other solutions, compiler must (i) partially optimize code, (ii) emit a function call which rewrite $I_{orig}$ or (iii) apply $R_{Iorig}()$ function earlier. Solution (i) disallows full optimization. Solution(ii) must manage a memory to store $I_{orig}$, $D_{orig}$ and $D_{compile}$ (allocation and de-allocation) whereas our solution store all this information in the new instruction $I_{tmp}$ and so do not require costly management. Solution (iii) could implied useless and costly (time and energy consumption) operations like class loading and initializing. Solution (iii) is especially inadequate in Ahead-in-time compiler technology, but could be inappropriate in other compiler technology. The compiler is able to fully optimize all part of code, despite that some information are not available. The compiler support is very easy because emitting instruction is a very common operation for it. In addition, emitting this new instruction is the same complexity as emitting the final instruction if all information would be available. The compiler could easily manage this new instruction like a real instruction in order to use it in input code, allowing multi-pass compiler, or multi compilers to work transparently with this technology (for example an Ahead-in-time compiler with a Dynamic Adaptive Compiler). The support in the runtime or VM is only the support of a new virtual instruction. Because the mechanism relies on a new instruction, it is possible to limit at the strict minimum the number of cases when a code relocation during execution is necessary. Because all data specific to an instance of this instruction ($I_{orig}$, $D_{orig}$ and $D_{compile}$) is contained in the instruction itself, there is no need to manage memory allocation and de-allocation for these data. Only permanent data is stored outside the instruction (data pointed, directly or indirectly, by $D_{rewrite}$) and so do not require memory management

## XXXV. SYSTEM TO DISABLE WIDE HARDWARE DECODING BYTECODE PREFIX

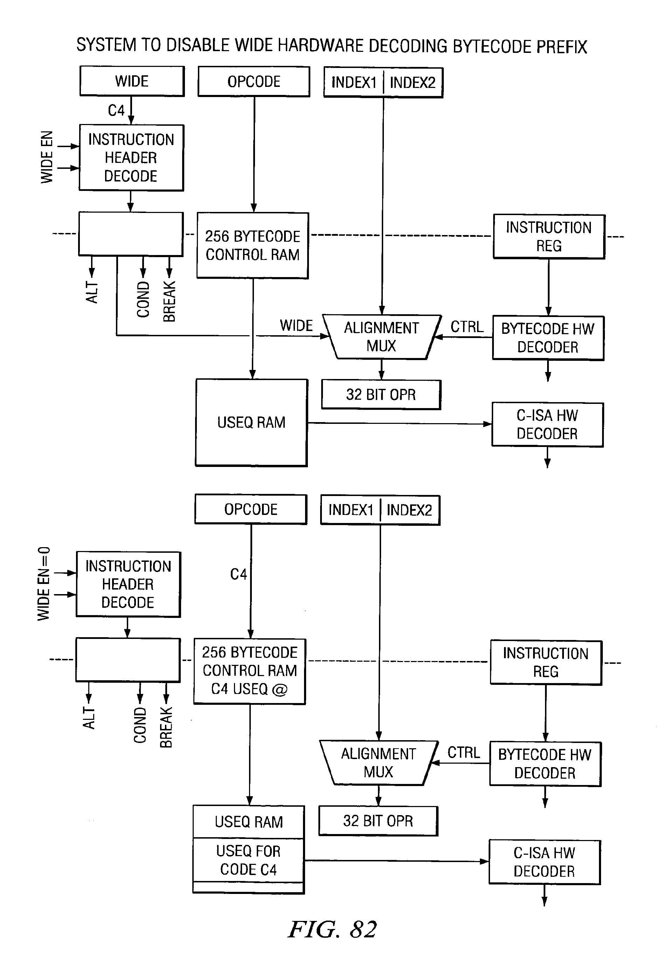

Reference is made to Figure 82. Our approach allows the reuse of the same JSM for other interpreted languages. The Wide code is fixed by Java bytecode specification and decoded by hardware. This system permits one to disable the wide decoding in order to re-map the code. Other solutions require a different hardware decoder to support other interpreted languages because the Wide code cannot be moved or removed. We achieve flexibility because the same hardware can be used for Java bytecode from SUN or DotNet CLR from MS.

Java Bytecode has 256 Opcode capability. One of the Opcode -- the Wide, Opcode value C4, permits to extend from 1 byte to 2 bytes or from 2 bytes to 4 bytes. However, this position is hard coded. As shown in first view in Figure 82 , the Wide prefix is decoded by the instruction header decode. When Wide is present, the original alignment control provided by the bytecode HW decoder is modified by the Wide signal. In this solution, the Wide code "C4" cannot be moved or disabled. The position C4 of the bytecode control RAM and bytecode HW decoder are empty. The second view in Figure 82 shows that, by disabling Wide En=0 , the instruction header decode does not recognize Wide and the Opcode C4 can be used as an opcode. The alignment logic that loads the indexes into the OPR register is controlled only by the bytecode decoded and eventually corrected by the content of the control RAM. The system allows the reuse of JSM for other interpreted languages besides Java bytecode.

## XXXVI. WIDE MICRO SEQUENCE SYSTEM

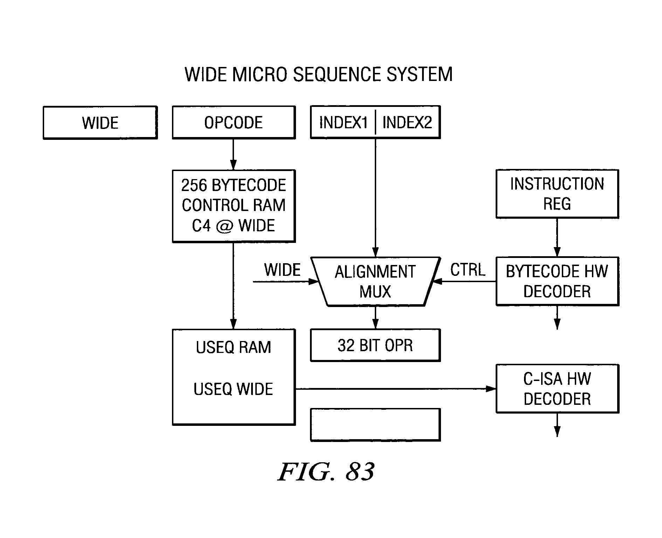

Reference is made to Figure 83. This system allows to execute the functionality of Wide bytecode in a micro sequence. The Wide code "C4" is a micro sequence that set the W bit of the status. For the next Opcode the alignment mux will be controlled by W to do store a large index to the OPR register. Other decode the wide by hardware and it is not possible to micro sequence the wide. This permit to monitor or hotspot any bytecode providing better flexibility. Wide Opcode uses 2 bytes index instead of one. This system allows to execute a Wide Opcode in two steps. The Wide (Opcode C4) is executed as a micro sequence that set the bit W of the status register. The position C4 of the bytecode control RAM contain the address of the micro-sequence Wide into the Useq RAM that set the bit W. The next cycle the Opcode is decoded by the bytecode HW decoder that generate the control for the alignment Mux. If Wide status bit has been set before Index 1 and 2 are aligned in OPR. If W=0 there is only one index and Index 1 is aligned in OPR. The Opcode can be a micro-sequence as well.

## XXXVII. SPLITTING EXECUTION OF FLOATING POINT ARITHMETIC OPERATIONS BETWEEN HARDWARE AND SOFTWARE

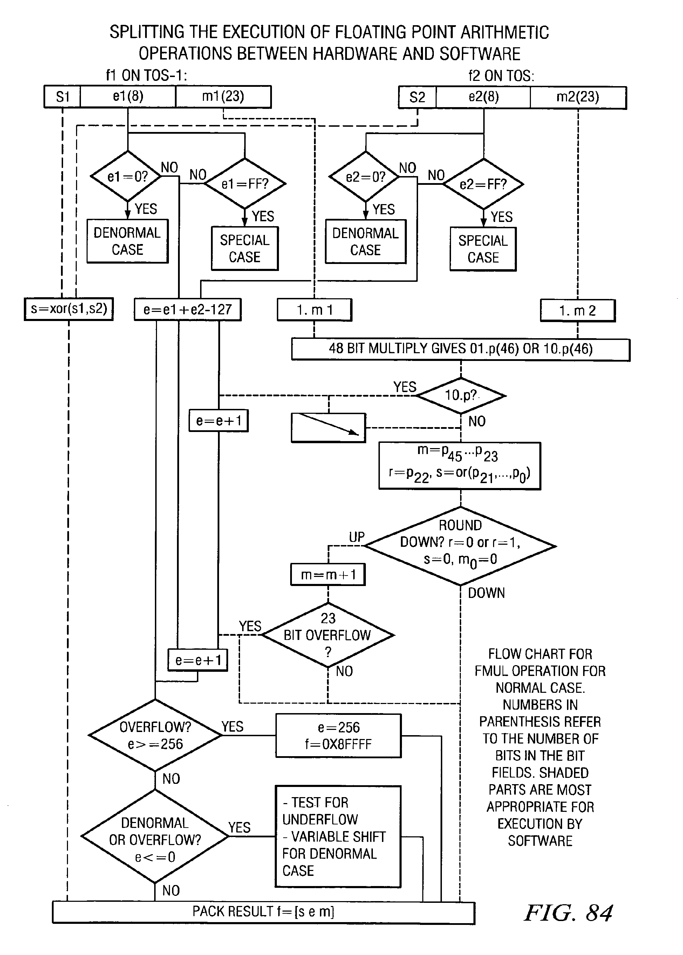

Reference is made to Figures 84-85. Executing the arithmetic operations for the IEEE 754 standard compliant floating point numbers is complicated and consequently expensive for both hardware and software implementations, in particular because the numbers include several special representations (not-a-number NaN, two infinities, denormal numbers) for which the execution flow differs from that of the most currently encountered normal case. This leads to either a large-area floating point unit implemented in hardware and capable of fast execution, or a slow software implementation lacking the performance for floating point critical applications such as graphics.

Our approach provides a new way of splitting the execution of floating point operations between hardware and software. The hardware part includes the detection of special cases needing exceptional execution flow as well as part or all of the execution for the frequent case. The hardware starts while the processor prepares for the execution of the software part which runs partly in parallel with the hardware (HW) part and completes the arithmetic operation. A scheme for the synchronization of the two execution parts is vital. Floating point units that are completely implemented in hardware demand large silicon area. This is avoided in our solution, since part of the execution is done in software. On the other hand, the average execution latency is still small - much smaller that in a pure software solution.

There are some solutions that trap when denormalized numbers are encountered. Executing the software trap requires larger delay than our solution, where execution is partly in parallel, no context switch is required and the handling of denormalized cases can benefit from the results of the hardware execution part. Ours represents an attractive trade-off between hardware complexity and the execution latency. We describe the organization of the floating point arithmetic operations planned for Java Stack Machine (JSM). They comprise a subset of the IEEE 754 standard as required for appropriate Java bytecodes. The objective is to achieve a good trade-off between the hardware complexity and the latency of producing the results by dividing the work between hardware and software which will partly execute in parallel.

JSM Floating Point Operations:

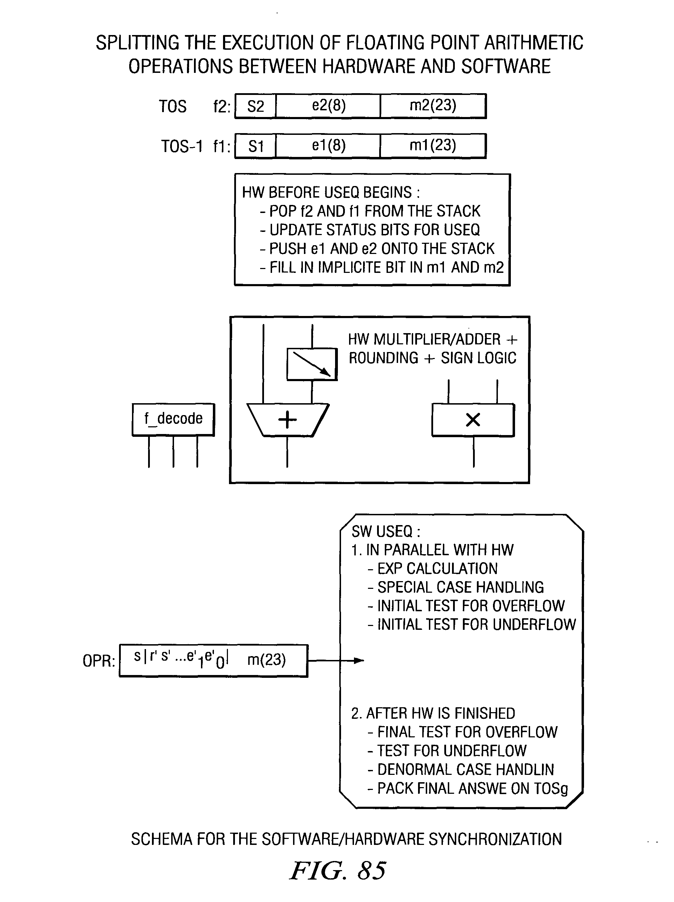

JSM implements the floating point Java bytecodes either as micro-sequences or, for a number of bytecodes that are considered critical for performance, as a combination of a micro-sequence and complementary hardware execution. Bytecodes most suitable for a shared hardware/software (HW/SW) execution are fmul for multiplication and fadd and fsub for addition and subtraction. We use fmul as an example to illustrate the approach. Figure 85 outlines the execution for the fmul operation in the most frequently uncounted case. The essential parts are as follows: Extract the sign, exponent and mantissa fields from the arguments saved on the top of the stack. Test for special cases: not-a-number (NaN) or infinities (+/- Inf) as arguments. Test for denormalized arguments. Insert the implicit bit in the mantissas. Carry out a 48 bit multiplication of mantissas, align and round the result according to IEEE 754 standard's towards-the-nearest rounding rule. Add exponents and subtract the bias value. One may need to adjust the exponent by adding 1 or 2 depending on the alignment and rounding operations needed for the mantissa. Test for overflow, denormalized result and underflow. Find the sign bit of the result. Form the final result by packing the sign, exponent and mantissa fields.

This execution flow differs somewhat if one of the arguments is denormalized. In that case the implicit bit is 0, appropriate exponents must be replaced by 1 and the alignment of the result and the corresponding adjustment in the exponent may involve a variable shift larger than the shift of one for normalized arguments. For special values, Nan and +/- Inf, the results are determined directly by the IEEE 754 standard.

The division of the execution between hardware and software can be done in various ways. Here is one plausible division: 1) Software execution includes all shaded boxes in Figure 84: special case execution, basic exponent calculation as well as testing and subsequent action for overflow, underflow and denormalized result. 2) Hardware execution includes extracting the bit fields, testing for special cases, setting the status flags for the SW, determining the sign and carrying out the multiplications, alignment and rounding of the mantissa for the result. 3) Communication and synchronization issues: In order for the schema outlined above to work, it is essential to guarantee the transfer of information and the synchronization between the software and the hardware executions.

Normally in JSM the micro-sequences receive their arguments by two mechanisms: the arguments in the bytecode flow are passed in the Opcode Operand Register and the top of the stack (TOS) is used to pass context dependent arguments such as the arguments for fmul, fadd and fsub. Thus the two floating point numbers to be operated on are places on the TOS by the preceding bytecodes. When the JSM decoder detects a micro-sequenced bytecode, it proceeds to launch the appropriate micro-sequence. It takes 2 cycles before the micro-sequence is ready to start. In case of the floating point operations whose execution is shared between SW and HW, the hardware part can start during this preparation phase. In particular, this first hardware portion will pop the arguments f2 and f1 from the stack; update status bits for sign, e1=0, e1=0xFF, m1=0, e2=0, e2=0xFF, m2=0 (used by SW); place e1 and e2 on TOS (if e=0, place 1) so that the micro-sequence can access them; and fill in implicit bit (1 if e!=0, else 0 ) in m1 and m2 and direct the 24 bit mantissas for the multiplier.

Thus the micro-sequence will find the exponents on the stack (either aligned on bit 0 or on bit 23) and the information it needs for executing the special cases (arguments include NaN or Inf) in the status register bits. The micro-sequence then either executes the special case or computes the first estimate for the exponent. While this is done the second hardware phase, number of cycles, after which the HW places its result into the Opcode Operand Register OPR, as shown below:

$$OPR = [s(1) \mid \text{up to 6 status bits} \mid \text{2 exponent adjustment bits} \mid m(23)\,].$$

The micro-sequence will read this register and finish the execution. The exponent adjustment bits give the exponent increment (0, 1 or 2) due to alignment and rounding. The extra status bits allow fine-tuning the split between hardware and software in different ways. For example, to do the final alignment of a denormalized result (requiring a shift right in the mantissa) in software calls for 1 bit to indicate if initial rounding was done upwards and 1 bit to give the 'sticky' bit for the lowest order bits of the result.

The case, where one of the arguments is denormalized, can be executed either completely in software (in this case, the micro-sequence should read f1 and f2 from the stack) or with the same software/hardware schema as the most frequent case. In this case, however, the hardware should include the variable shift left needed to align the most significant bit to bit 46 of the product and the exponent status bits in the OPR should take into account the shift amount.

XXXVIII. JSM INSTRUCTION SET AND SYSTEM TO ACCELERATE JAVA AND MEDIA APPLICATIONS

The Java programming language provides a lot of valuable advantages that makes it preferred by SW developers to other usual high level development languages used in embedded application environments (such as C or C++), particularly in wireless multimedia appliances.

However, the key issue encountered in executing Java today is the poor performance and high energy consumption obtained on state-of-the-art platforms. Although different approaches to accelerate Java are being deployed in products, such as simple HW interpretation or compilation techniques on RISC ISA, none of these provide sufficient performance and energy gains to bring a complete Java application environment to the performance level achieved in current C or C++ environments, particularly in multimedia and signal processing applications.

The JSM concept combines an instruction set architecture (ISA) optimized for Java and media processing together with a hardware and software system architecture, where JSM is implemented as a processor attached to a main processor unit (MPU), typically a RISC. JSM is a parallel processing approach, that adds an optimized processing engine with its own first level of caches to a main processing unit (it does not translate Java bytecode into native MPU code nor reuses MPU pipeline resources to process Java bytecodes). JSM and the MPU operate under a single operating system operated by the MPU. The JSM system combines HW and SW optimizations; JSM ISA features provide important flexibility to adapt to different virtual machines, and implement a wide variety of cost / performance tradeoffs. The JSM instruction set combines typical features of stack-based, RISC and DSP instruction sets. JSM improves performance in both interpreted and compiled Java approaches.

JSM ISA combines the benefits of a stack-based ISA well fit for most Java bytecodes, a RISC ISA for more complex control-oriented operations, and a DSP-like ISA for memory-based operands accesses and arithmetic often encountered in media processing. As a result, JSM is able to interpret autonomously simple and most of complex Java bytecodes without MPU assistance than current state of the art HW acceleration solution, letting more time to the MPU to process its native tasks, such as operating system kernel tasks or garbage collection for instance. JSM processor is operated by a virtual machine, itself scheduled by the (single) MPU operating system. Although JSM is attached to an MPU, it has its own level-1 memory system (caches and/or RAM), separate from MPU caches. Also, these level-1 architecture can be tuned to optimize Java & media application flows performance as per their locality properties, and the related data structures do not collide with MPU tasks data structures in shared caches. As a result, significant performance and energy gain can be achieved.

On the top of interpreted Java performance gain achieved by JSM, compilation techniques can be advantageously used on a JSM-based platform: the high bottom (interpreted) level of performance allows dynamic compilers to explore a wide range of complexity vs perf tradeoffs (such as simpler registers coloring than for a RISC, etc.), and the compilation job can be performed concurrently on the MPU, which reduces drastically the latency drawback experienced on state-of-the art Java environments that use compilation.

Although a primary target for JSM is Java performance improvement, JSM flexibility makes it usable in other SW execution environments (interpreted or compiled), such as C, C++ or .net/C#.

**Claims**

1. The methods and apparatus, substantially as shown and described.

2. The matter herein contained, or part thereof, in any novel or inventive combination.

ACCESSING INDIRECT
MEMORIES IN JAVA
LANGUAGE

DIRECT MEMORIES

ADDRESSABLE
MEMORY

[0xC000]

A

10 [0xC040]

Ptr=[0xC040]
*Ptr=10;

B

*FIG. 1*

ACCESSING INDIRECT MEMORIES
IN JAVA LANGUAGE

INDIRECT MEMORIES

DATA USED
TO ACCESS
MEMORY

A

INDIRECT
MEMORY

D

DATA USED TO
ACCESS
MEMORY BLOCK

B

E

15

MEMORY ELEMENT

F

Make_Read_Access(memoryId e)
{
// code sequence to access one indirect memory element e
// return e
}

*FIG. 2*

## ACCESSING INDIRECT MEMORIES IN JAVA LANGUAGE
### ACCESSING INDIRECT MEMORY IN JAVA USING NATIVE APIs

IndirectMemory CLASS    A

```
Class IndirectMemory
{
    static native int Read (int memoryId) ;

    static native Write (int memoryId, char value)
}
```

EXAMPLE OF JWM NATIVE APIs FOR IO MEMORY    C

```
static native int Read (int memoryId)
{
    return(IN(portAddress));
}

static native Write (int portAddress, char value)
{
    OUTportAddress, value);
}
```

USER CLASS    B

```
Class User
{
    method Toto()
    {       char c;
            c= IndirectMemory.read(element1Id);        // read indirect element1Id
            IndirectMemory.write(element2Id. c+1);     // write indirect element2Id
    }
}
```

*FIG. 3*

EP 1 622 009 A1

ACCESSING INDIRECT MEMORIES IN JAVA LANGUAGE
ACCESSING INDIRECT MEMORY ELEMENTS USING JAVA FIELDS

IndirectMemory CLASS

```
Class IndirectMemory
{
        public volatile char element1;
        public volatile char element2;

        static
        {
                mapFieldOnport(element1,elementId1)
                mapFieldOnport(element2,elementId2)
        }
}
```

A

USER CLASS

```
Class User
{
        IndirectMemory indirectMemory;

        method Toto()
        {       int c;
                indirectMemory = new IndirectMemory()
                c = indirectMemory .element1;           // read indirect elementId1
                IndirectMemory .element2 = c+1;         // write indirect elementId2
        }
}
```

B

*FIG. 4*

*FIG. 5*

A

B

C

JAVA FIELD
ARRAYS

DATA USED
TO ACCESS
MEMORY

INDIRECT
MEMORY

15

IndirectMemory CLASS

```
Class IndirectMemory
{
        public volatile char [] IndirectMemory;

        static
        {
                mapArrayOn(memoryIdBase);
        }
}
```

D

USER CLASS

```
Class User
{
        method Toto()
        {        char c;
                c= IndirectMemory[element1Id];
                IndirectMemory[element2Id]=c+1;
        }
}
```

E

## FIG. 6

### CONTROL FLOW GRAPH CONSTRUCTION USING JSM PROCESSOR

CONFIGURATION

SOFTWARE SEQUENCE TABLE
(INDEXED BY INSTRUCTION)

SOFTWARE
SEQUENCE
MEMORY

PARAMETER SIZE
TABLE (INDEXED BY
INSTRUCTION)
~100

| | |
|---|---|
| 1 | |
| 2 | |
| 1 | |
| 3 | |
| ⋮ | |

101

102

| | |
|---|---|
| 0 | 0x000000 |
| 1 | 0x000100 |
| 1 | 0x000200 |
| 0 | 0x000000 |
| ⋮ | ⋮ |

103

105

SOFTWARE
SEQUENCE

SOFTWARE
SEQUENCE
-I1
-I2
-I3
⋮

INSTRUCTIONS

| |
|---|
| I1 |
| I2 |
| I3 |
| I4 |
| ⋮ |
| I50 |
| I51 |
| I52 |

0...n

JSM

BEHAVIOR DEFINE BY
THE CONFIGURATION
(EXECUTION, CFG
CREATION, BYTECODE
VERIFIER, ETC.)

203

JSM CONFIGURATION

HARD-CODED
OR NOT (HC)

μ-SEQUENCE
TABLE

| | | |
|---|---|---|
| nop | 1 | 0x000050 |
| astore | 1 | 0x000050 |
| goto | 1 | 0x000150 |
| if_icmpge | 1 | 0x000300 |
| ifge | 1 | 0x000300 |

**μ-SEQUENCE WRITE IN CISA**
if pc start a catch block in exception table
    leaderList.add(pc)
~200

**μ-SEQUENCE WRITE IN CISA**
offset = instruction operand
targetPc = pc + offset
leaderList.add(targetPc)
~201

**μ-SEQUENCE WRITE IN CISA**
offset = instruction operand
targetPc = offset + pc
followingPc = pc + instruction size
leaderList.add(targetPc)
leaderList.add(followingPc)
~202

μ-SEQUENCE ALLOWING LEADER INSTRUCTION DETECTION

# CONTROL FLOW GRAPH CONSTRUCTION USING JSM PROCESSOR
## $\mu$-SEQUENCES ALLOWING CFG CREATION

THE RESULT OF THE FIRST CONFIGURATION APPLICATION IS DEPICTED BY THE FIGURE BELOW; ALL RED INSTRUCTIONS ARE IDENTIFIED AS LEADER AND MUST START BASIC BLOCKS. THE CFG OBTAINED AFTER THE SECOND CONFIGURATION IS DESCRIBE BY THE .

| | |
|---|---|
| 0 bipush 10 | 31 inconst 3 |
| 2 iload 2 | 32 imul |
| 3 idiv | 33 istore 1 |
| 4 istore 1 | |
| 5 goto 19 | 34 iload 1 |
| 8 astore 3 | 35 iload 2 |
| 9 getstatic java.lang.System::java.io.PrintStream out | 36 idiv |
| 12 aload 3 | 37 istore 2 |
| 13 invokevirtual java.lang.Exception::java.lang.String toString() | 38 iconst 0 |
| 16 invokevirtual jave.io.PrintStream::void println(java.lang.String) | 39 istore 3 |
| 19 iload 1 | 40 iload 3 |
| 20 ifge 30 | 41 iload 2 |
| 23 iload 1 | 42 if_icmpge 53 |
| 24 iconst 3 | 45 iload 3 |
| 25 isub | 46 istore 1 |
| 26 istore 1 | 47 iinc 3 1 |
| 27 goto 34 | 50 goto 40 |
| 30 iload 1 | 53 iload 2 |
| | 54 ireturn |

## FIG. 7

CONTROL FLOW GRAPH CONSTRUCTION USING JSM PROCESSOR
RESULT OF CFG CREATION

```
bipush 10
iload 2
idiv
istore 1
goto 19
```

```
astore 3
getstatic java.lang.System::java.io.PrintStream out
aload 3
invokevirtual java.lang.Exception::java.lang.String toString()
invokevirtual jave.io.PrintStream::void println(java.lang.String)
```

```
iload 1
ifge 30
```

```
iload 1
iconst 3
isub
istore 1
goto 34
```

```
iload 1
inconst 3
imul
istore 1
```

```
iload 1
iload 2
idiv
istore 2
iconst 0
istore 3
```

```
iload 3
iload 2
if_icmpge 53
```

```
iload 3
istore 1
iinc 3 1
goto 40
```

```
iload 2
ireturn
```

*FIG. 8*

# DYNAMIC MEMORY TRANSLATION ALGORITHM
## SOFTWARE DYNAMIC MEMORY ADDRESS TRANSLATION
### GENERAL PRINCIPLE OF TRANSLATION ALGORITHM

*FIG. 9*

EP 1 622 009 A1

**VIRTUAL ADDRESS SPACE** [A]

| | |
|---|---|
| [0xA000] | 0 |
| [0xA001] | 0 |
| [0xA002] | 0 |
| [0xA003] | 10 |
| [0xA004] | 0 |
| [0xA005] | 0 |
| [0xA006] | 0 |
| [0xA007] | 27 |
| [0xA008] | 0 |
| [0xA009] | 0 |
| [0xA00A] | 0 |
| [0xA00B] | 16 |
| [0xA00C] | 0 |
| [0xA00D] | 0 |
| [0xA00E] | 0 |
| [0xA00F] | 12 |
| [0xA010] | 0 |
| [0xA011] | 0 |
| [0xA012] | 0 |
| [0xA013] | 20 |

VIRTUAL ADDRESSABLE UNIT

**PHYSICAL ADDRESS SPACE** [B]

| | |
|---|---|
| [0x0C00] | 0 |
| [0x0C01] | 0 |
| [0x0C02] | 0 |
| [0x0C03] | 10 |
| [0x0C04] | 0 |
| [0x0C05] | 0 |
| [0x0C06] | 0 |
| [0x0C07] | 27 |
| [0x0C08] | 0 |
| [0x0C09] | 0 |
| [0x0C0A] | 0 |
| [0x0C0B] | 16 |
| [0x0C0C] | 0 |
| [0x0C0D] | 0 |
| [0x0C0E] | 0 |
| [0x0C0F] | 12 |
| [0x0C10] | 0 |
| [0x0C11] | 0 |
| [0x0C12] | 0 |
| [0x0C13] | 20 |

PHYSICAL ADDRESSABLE UNIT

TRANSLATION ALGORITHM ⇒

**COMPRESSED REAL PHYSICAL ADDRESS SPACE** [C]

| | |
|---|---|
| [0x0C00] | 10 |
| [0x0C01] | 27 |
| [0x0C02] | 16 |
| [0x0C03] | 12 |
| [0x0C04] | 20 |

INPUTS:
- VS = 0xA000
- PS = 0x0C00
- V_UNIT_SIZE = 16 BITS
- P_UNIT_SIZE = 8 BITS
- DATA_SIZE = 5 BYTES

## DYNAMIC MEMORY TRANSLATION ALGORITHM
### SOFTWARE DYNAMIC MEMORY ADDRESS TRANSLATION
### TRANSLATION WITH COMPRESSION (1)

**VIRTUAL ADDRESS SPACE**

| | | | | | | | | |
|---|---|---|---|---|---|---|---|---|
| [0xA000] | 0 | 0 | 0 | 0 | 0 | 0 | 0 | 0 |
| [0xA001] | 0 | 0 | 0 | 0 | 0 | 1 | 0 | 1 |
| [0xA002] | 0 | 0 | 0 | 0 | 0 | 0 | 0 | 0 |
| [0xA003] | 0 | 0 | 0 | 0 | 1 | 1 | 0 | 1 |
| [0xA004] | 0 | 0 | 0 | 0 | 0 | 0 | 0 | 0 |
| [0xA005] | 0 | 0 | 0 | 0 | 1 | 0 | 1 | 0 |
| [0xA006] | 0 | 0 | 0 | 0 | 0 | 0 | 0 | 0 |
| [0xA007] | 0 | 0 | 0 | 0 | 1 | 0 | 0 | 0 |
| [0xA008] | 0 | 0 | 0 | 0 | 0 | 0 | 0 | 0 |
| [0xA009] | 0 | 0 | 0 | 0 | 0 | 0 | 1 | 1 |
| [0xA00A] | 0 | 0 | 0 | 0 | 0 | 0 | 0 | 0 |
| [0xA00B] | 0 | 0 | 0 | 0 | 0 | 1 | 1 | 0 |
| | 0 | 0 | 0 | 0 | 0 | 0 | 0 | 0 |
| | 0 | 0 | 0 | 0 | 1 | 1 | 1 | 1 |

**PHYSICAL ADDRESS SPACE**

| | | | | | | | | |
|---|---|---|---|---|---|---|---|---|
| [0x0C00] | 0 | 1 | 0 | 1 | 1 | 1 | 0 | 1 |
| [0x0C01] | 1 | 0 | 1 | 0 | 1 | 0 | 0 | 0 |
| [0x0C02] | 0 | 0 | 1 | 1 | 0 | 1 | 1 | 0 |
| [0x0C03] | 1 | 1 | 1 | 1 | | | | |

TRANSLATION ALGORITHM ⇨

*FIG. 10*

```
INPUTS:
• VS          = 0xA000
• PS          = 0x0C00
• V_UNIT_SIZE = 16 BITS
• P_UNIT_SIZE = 4 BITS
• DATA_SIZE   = 14 BYTES
```

DYNAMIC MEMORY TRANSLATION ALGORITHM
SOFTWARE DYNAMIC MEMORY ADDRESS TRANSLATION
TRANSLATION WITH COMPRESSION (2)

PHYSICAL ADDRESS SPACE

VIRTUAL
ADDRESS SPACE

| [0xA000] | 0 | 0 | 0 | 0 | 0 | 0 | 0 | 0 |
| [0xA001] | 0 | 0 | 0 | 1 | 1 | 1 | 0 | 0 |
| [0xA002] | 0 | 0 | 0 | 0 | 0 | 0 | 0 | 0 |
| [0xA003] | 0 | 0 | 0 | 1 | 0 | 1 | 0 | 1 |
| [0xA004] | 0 | 0 | 0 | 0 | 0 | 0 | 0 | 0 |
| [0xA005] | 0 | 0 | 0 | 0 | 1 | 0 | 1 | 1 |
| [0xA006] | 0 | 0 | 0 | 0 | 0 | 0 | 0 | 0 |
| [0xA007] | 0 | 0 | 0 | 1 | 0 | 0 | 1 | 0 |
| [0xA008] | 0 | 0 | 0 | 0 | 0 | 0 | 0 | 0 |
| [0xA009] | 0 | 0 | 0 | 1 | 1 | 0 | 1 | 1 |
| [0xA00A] | 0 | 0 | 0 | 0 | 0 | 0 | 0 | 0 |
| [0xA00B] | 0 | 0 | 0 | 0 | 0 | 1 | 1 | 0 |
| | 0 | 0 | 0 | 0 | 0 | 0 | 0 | 0 |
| | 0 | 0 | 0 | 1 | 0 | 1 | 1 | 1 |

| [0x0C00] | 1 | 1 | 1 | 0 | 0 | 1 | 0 | 1 |
| [0x0C01] | 0 | 1 | 0 | 1 | 0 | 1 | 1 | 1 |
| [0x0C02] | 0 | 0 | 1 | 0 | 1 | 1 | 0 | 1 |
| [0x0C03] | 1 | 0 | 0 | 1 | 1 | 0 | 1 | 0 |
| [0x0C04] | 1 | 1 | 1 | | | | | |

TRANSLATION
ALGORITHM

FIG. 11

INPUTS:
- VS           = 0xA000
- PS           = 0x0C00
- V_UNIT_SIZE  = 16 BITS
- P_UNIT_SIZE  = 5 BITS
- DATA_SIZE    = 14 BYTES

DYNAMIC MEMORY TRANSLATION ALGORITHM
SOFTWARE DYNAMIC MEMORY ADDRESS TRANSLATION
TRANSLATION WITH EXPANSION

PHYSICAL ADDRESS SPACE

VIRTUAL
ADDRESS SPACE

SHIFT
RIGHT

| | | | | | | | | |
|---|---|---|---|---|---|---|---|---|
| [0xA000] | 1 | 1 | 0 | 1 | 1 | 1 | 0 | 1 |
| [0xA001] | 1 | 0 | 0 | 1 | 0 | 1 | 0 | 0 |
| [0xA002] | 0 | 1 | 0 | 1 | 0 | 1 | 0 | 1 |
| [0xA003] | 1 | 0 | 0 | 1 | 0 | 1 | 0 | 1 |
| [0xA004] | 0 | 1 | 0 | 0 | 1 | 0 | 0 | 0 |
| [0xA005] | 0 | 0 | 0 | 0 | 1 | 0 | 1 | 1 |
| [0xA006] | 1 | 1 | 0 | 1 | 0 | 0 | 0 | 1 |
| [0xA007] | 1 | 0 | 1 | 1 | 0 | 0 | 1 | 0 |
| [0xA008] | | | | | | | | |
| [0xA009] | | | | | | | | |
| [0xA00A] | | | | | | | | |
| [0xA00B] | | | | | | | | |

| | | | | | | | | |
|---|---|---|---|---|---|---|---|---|
| [0x0C00] | 0 | 0 | 1 | 1 | 0 | 1 | 1 | 1 |
| [0x0C01] | 0 | 1 | 0 | 0 | 1 | 0 | 0 | 1 |
| [0x0C02] | 0 | 0 | 1 | 0 | 0 | 0 | 0 | 1 |
| [0x0C03] | 0 | 1 | 0 | 1 | 0 | 1 | 0 | 0 |
| [0x0C04] | 1 | 0 | 0 | 1 | 0 | 1 | 0 | 1 |
| | 0 | 0 | 0 | 1 | 0 | 0 | 1 | 0 |
| | 0 | 0 | 0 | 0 | 0 | 0 | 0 | 0 |
| | 1 | 0 | 1 | 1 | 0 | 0 | 1 | 1 |
| | 0 | 1 | 0 | 0 | 0 | 1 | 0 | 0 |
| | 1 | 0 | 1 | 1 | 0 | 0 | 1 | 0 |

TRANSLATION
ALGORITHM

INPUTS:
- VS = 0xA000
- PS = 0x0C00
- V_UNIT_SIZE = 8 BITS
- P_UNIT_SIZE = 10 BITS
- DATA_SIZE = 8 BYTES

FIG. 12

# AUTOMATIC BYTECODE OPERAND LOAD IN A REGISTER FOR USEQUENCE
## OPERAND LOAD PROBLEM

**INSTRUCTION CACHE**

| | BCi | OP | | ICACHE LINE |

**USEQUENCE TABLE**

| BCi | | B | ADDRi |

**USEQUENCE CODE**

ADDRi →

1: ACCESS TO OPERAND VIA DATA ACCESS

```
// load of the followed 32 bits in a register
Load AR4, *(PC+1)

// Set of new PC according to operand size
. . .

// Usequence action
. . .
```

**DATA CACHE**

2: MISS   3: LOADING

| | BCi | OP | | DCACHE LINE |

*FIG. 13*

EP 1 622 009 A1

AUTOMATIC BYTECODE OPERAND LOAD IN A REGISTER FOR USEQUENCE
AUTOMATIC BYTECODE OPERAND LOAD IN A REGISTER FOR USEQUENCE

INSTRUCTION CACHE

| | BCi | OP | | ICACHE LINE

USEQUENCE TABLE

| BCi | | B | ADDRi | SIZE |

SIZE CAN BE :
- NONE
- BYTE
- SHORT
- WORD

ACTION DONE BY HARDWARE ENTERING USEQUENCE

If (SIZE==Byte) loads one Byte from PC and loads it to a register; then PC=PC+1;
If (SIZE==Short) loads 2 Bytes from PC and loads it to a register; then PC=PC+2;
If (SIZE==Word) loads 4 Bytes from PC and loads it to a register; then PC=PC+4;

USEQUENCE CODE

ADDRi →

// Usequence action using register as operand
...

*FIG. 14*

AUTOMATIC BYTECODE OPERAND
MANIPULATION IN A REGISTER FOR USEQUENCE
OPERAND LOAD PROBLEM

INSTRUCTION CACHE

| | BCi | OP | | ICACHE LINE

USEQUENCE TABLE

| BCi | | B | ADDRi | SIZE |

USEQUENCE CODE

ADDRi →

// manipulation of register to adapt the representation
...
...

// Usequence action
...

SIZE CAN BE :
- NONE
- BYTE
- SHORT
- WORD

*FIG. 15*

## AUTOMATIC BYTECODE OPERAND MANIPULATION IN A REGISTER FOR USEQUENCE
### AUTOMATIC BYTECODE OPERAND LOAD IN A REGISTER FOR USEQUENCE

SIGN CAN BE :
- SIGNED
- UNSIGNED

INSTRUCTION CACHE

| | BCi | OP | |
| --- | --- | --- | --- |

ICACHE LINE

USEQUENCE TABLE

| BCi |
| --- |

| B | ADDRi | SIZE | SIGN | SHIFT |
| --- | --- | --- | --- | --- |

SHIFT CAN BE :
- NO
- YES

### ACTION DONE BY HARDWARE ENTERING USEQUENCE

If (SIZE==Byte) and (SIGN=Unsigned) loads one Byte from PC and loads to register with zero extension; PC=PC+1;

If (SIZE==Byte) and (SIGN=Signed) loads one Byte from PC and loads to register with sign extension; PC=PC+1;

If (SIZE==Short) and (SIGN=Unsigned) loads one Byte from PC and loads to a register with zero extension; PC=PC+2;

If (SIZE==Short) and (SIGN=Signed) loads one Byte from PC and loads to a register with sign extension; PC=PC+2;

If (SIZE==Word) and (SIGN=Unsigned) loads one Byte from PC and loads to register with zero extension; PC=PC+4;

If (SIZE==Word) and (SIGN=Signed) loads one Byte from PC and loads to register with sign extension; PC=PC+4;

If SHIFT = Yes then register<<2

### USEQUENCE CODE

ADDRi ⟶

| // Usequence action using register as operand |
| --- |
| . . . |

*FIG. 16*

EP 1 622 009 A1

RAMSET OSCILLATIONS
MANAGEMENT ALGORITHM
FOR STACK BASED MEMORY
BLOCK ALGORITHMS

*FIG. 17*

RAMSET OSCILLATIONS
MANAGEMENT ALGORITHM
FOR STACK BASED MEMORY
BLOCK ALGORITHMS

*FIG. 18*

RAMSET OSCILLATIONS MANAGEMENT ALGORITHM
FOR STACK BASED MEMORY BLOCK ALGORITHMS

*FIG. 19*

## RAMSET OSCILLATIONS MANAGEMENT ALGORITHM
## FOR STACK BASED MEMORY BLOCK ALGORITHMS

*FIG. 20*

SAVE AND RESTORE CONTEXT WITH A STACK
BASED MEMORY BLOCKS MANAGEMENT

NOTATION

*FIG. 21*

EVENTS

↗ SAVE CONTEXT

↘ RESTORE CONTEXT

SAVE AND RESTORE CONTEXT WITH A STACK
BASED MEMORY BLOCKS MANAGEMENT

*FIG. 22*

SAVE AND RESTORE CONTEXT WITH A STACK
BASED MEMORY BLOCKS MANAGEMENT

IDENTICAL, BUT IN
DIFFERENT ROUND
(ODD STATE)

R.Set
I.Flush
CP

*FIG. 23*

## SAVE AND RESTORE CONTEXT WITH A STACK
## BASED MEMORY BLOCKS MANAGEMENT

IDENTICAL, BUT IN
DIFFERENT ROUND
(EVEN STATE)

R.Set
II.Flush
CP

### FIG. 24

## USING TEMPORARY SCRATCHPAD WITH A STACK
## BASED MEMORY BLOCKS MANAGEMENT

### NOTATION

• SCRATCHPAD > 1/2 PAGE → SEE SAVE/RESTORE CONTEXT
• SCRATCHPAD ≤ 1/2 PAGE → OPTIMIZED BY THIS MECHANISMS

### FIG. 25

EVENTS

CREATE TEMPORARY SCRATCHPAD
DELETE TEMPORARY SCRATCHPAD

USING TEMPORARY SCRATCHPAD WITH A STACK
BASED MEMORY BLOCKS MANAGEMENT

*FIG. 26*

USING TEMPORARY SCRATCHPAD WITH A STACK BASED MEMORY BLOCKS MANAGEMENT

FIG. 27

## M BIT INSTRUCTION SET SIZE MACHINE ON JSM
### DESIGN PROCESS TO SUPPORT AN INSTRUCTION SET MACHINE

THE PROCESS CONSISTS, ACCORDING
TO AN INSTRUCTION SET SEMANTIC
AND SIZE TO DETERMINE THE JSM
MICRO SEQUENCES CONFIGURATION
TABLE AND CODE TO REALIZE THE
NEW INSTRUCTION SET

MACHINE
INSTRUCTIONS
1

| SEMANTICS OF I1 |
| SEMANTICS OF I2 |
| SEMANTICS OF I3 |
| SEMANTICS OF I4 |
| ⋮ |
| SEMANTICS OF I50 |
| SEMANTICS OF I51 |
| SEMANTICS OF I52 |

INSTRUCTION SEMANTICS
OF THE LANGUAGE X

0

DESIGN
PROCESS

| I1 |
| I2 |
| I3 |
| I4 |
| ⋮ |
| I50 |
| I51 |
| I52 |

PARAMETER SIZE TABLE

μ-SEQUENCE TABLE

μ-SEQUENCE REALIZING
THE SEMANTICS OF X

*FIG. 28*

# M BIT INSTRUCTION SET SIZE MACHINE ON JSM
## INSTRUCTION SET MACHINE WITH SIZE <= 8BITS

a = SIZE OF NEW INSTRUCTION SET
THE INSTRUCTION SET IS ALIGNED ON AN EIGHT BIT
BOUNDARY

ALL CONFIGURATION BITS OF USEQUENCES ARE SET
TO TRUE (ALL INSTRUCTIONS ARE USEQUENCED)

AFTER PLACING THE NEW IS,
b ARE THE HIGHER UNUSED SIGNIFICANT BITS
C ARE THE LOWER UNUSED SIGNIFICANT BITS
IN ANY CASES a+b+c=8 BITS

ADVANTAGE:
- USEQUENCES REALIZE TOTALLY THE NEW IS, THE
INSTRUCTION DECODING IS DONE BY THE HARDWARE

CONSTRAINTS:
- NEW IS MUST BE ALIGNED ANYWAY ON 8 BITS TO
GARANTY THAT FOR ONE INSTRUCTION THERE IS ONE
CORRESPONDING USEQUENCE

*FIG. 29*

# M BIT INSTRUCTION SET SIZE MACHINE ON JSM
## NEW IS > 8BITS

a = SIZE OF NEW INSTRUCTION SET
THE INSTRUCTION SET IS ALIGNED ON AN EIGHT BIT BOUNDARY

ALL CONFIGURATION BITS OF USEQUENCES ARE SET TO TRUE (ALL INSTRUCTIONS ARE USEQUENCED)

THUS, THE FIRST EIGHT 8 BITS OF THE NEW INSTRUCTION CAN BE DECODED IN HARDWARE AND A MICROSEQUENCE IS CALLED. THE NEXT c OTHER BITS WILL BE DECODED BY THE USEQUENCE CODE TO DETERMINE THE INSTRUCTION

ADVANTAGE: THE DECODER IS MIXED HARDWARE AND SOFTWARE (IN USEQUENCED). THE LOAD AND TRANSFORMATION OF THE OPERAND ALSO HELPS THE PERFORMANCE. THE GLOBAL PERFORMANCE IS HIGH

CONSTRAINTS: CODE HAS TO BE ALIGNED ON AN 8 BIT BOUNDARY

*FIG. 30*

USE TRAMPOLINE TO REMOVE USEQUENCE LOCAL RAM SIZE LIMITATION
CODE TRAMPOLINE PRINCIPLE:
HOW TO BUILD A LARGE MICRO-SEQUENCE CODE

JSM
BYTECODE
INSTRUCTION
FLOW

· · ·

· · ·

BYTECODE MICROSEQUENCED ➝ USEQ:

JSM BYTECODE
OR CISA
INSTRUCTION
FLOW

· · ·
CONTEXT SAVE
BRANCH TO CODE SEGMENT ➝ · · ·

· · ·

· · ·

· · · ← ————————————————————RESTORE AND ADAPT CONTEXT

· · ·

*FIG. 31*

EP 1 622 009 A1

## THREAD CONTEXT SWITCH ALGORITHM ON JSM BASE ON SAVE AND RESTORE CONTEXT COMMANDS
### THREAD SWITCHING

JSM BENEFITS:
- SAVE ITS OWN CONTEXT TO STACK
- MINIMUM CONTROL FROM MPU
- SPECIFIC JSM INSTRUCTION FOR SELF CONTEXT SAVING AND RESTORE

U-SEQUENCE SAVE CONTEXT
SAVE JSM FULL CONTEXT TO STACK
CLEAN AND FLUSH RAM SET
SAVE RAM BASE ADDRESS TO STACK
CLEAN AND FLUSH U-STACK

U-SEQUENCE LOAD CONTEXT
LOAD RAM BASE FROM STACK
LOAD JSM FULL CONTEXT FROM STACK

ARM COMMANDS TO JSM:

STOP
TRAP SAVE CONTEXT
STORE STACK POINTER

LOAD NEW STACK POINTER
TRAP LOAD NEW CONTEXT
START

*FIG. 32*

EP 1 622 009 A1

**DYNAMIC FIXING OF MEMORY VIEWS**

OBJECTIF

*FIG. 33*

• ENTRE DEUX PROCESSEURS (P1 ET P2)

• RÉALISER LA FIXATION D'UNE VUE MÉMOIRE GÉNÉRÉE PAR P1 SUR P2 À UN INSTANT DONNÉ

• L'OBJECTIF EST QUE LES MÉCANISMES S'EXÉCUTENT EN // SUR P2 SANS SE SOUCIER DE l'ACTIVITÉ DE P1
    - PLUS DE CONTRÔLE DE CACHE
    - PLUS DE POLLUTION DE CACHE

• MECANISMES POUVANT UTILISER CETTE TECHNIQUE
    - GARBAGE COLLECTOR
      • SUPPRESSION DES WRITE BARRIERS
    - CHECKPOINT/SÉRIALISATION
      • CAPTURE DE l'ÉTAT DE l'APPLICATION SUR IE MPU
    - TRANSACTION
      • ACTIVATION / VALIDATION OU NON D'UNE TRANSACTION
      • JSM TRAVAILLE SUR LA VUE APRÈS ACTIVATION DE LA TANSACTION, SI VALIDATION ALORS ON FAIT COMME PRÉCÉDEMMENT, SINON, ON DIT À JSM DE REVENIR À LA VUE MÉMOIRE PRÉCÉDENTE -> UNFIX
    - VALIDATION DE CODE COMPILÉ SUR MPU
      • INVERSION DES RÔLES ENTRE MPU ET JSM

**DYNAMIC FIXING OF MEMORY VIEWS**

PRINCIPLE

*FIG. 35*

• FOR EACH OBJECT
    - EACH FIELD IS REPLICATED
    - FIRST ONE IS ACCESSED BY JSM ONLY IN READ/WRITE
    - SECOND ONE IS ACCESSED BY MPU ONLY IN READ ONLY

@01

NULL
NULL

• JSM IS THE ONLY ONE THAT UPDATES THE FIELD

• IF THE MPU WANTS TO ACCESS IN READ TO A CURRENT VIEW WE PROVIDES A FIX CALL THAT MAKES THE UPDATES OF THE TWO REPLICAS.

• LET'S SEE IN ACTION

OBJECT

NULL   ONE FIELD, ACCESSED BY JSM ONLY IN READ/WRITE

NULL   ONE FIELD, ACCESSED BY MPU IN READ

# DYNAMIC FIXING OF MEMORY VIEWS

O2 = new()
O1.f=O2;

O3 = new();
O3.f=O1.f;
O1.f=O3;

O1.f=NULL;

@1 → -------
@2
@2 → -------
NULL

@1 → -------
@3
@2 → -------
NULL
@3 → -------
@2

@1 → -------
NULL
@2 → -------
NULL
@3 → -------
@2

@1 → -------
NULL

O1 EST UNE RACINE DE
L'APPLICATION

FIELD    OBJECT

@1 → -------
@2
@2 → -------
NULL

@1 → -------
@3
@2 → -------
NULL
@3 → -------
@2

@1 → -------
NULL
@2 → -------
NULL
@3 → -------
@2

AFTER TRACING,
ROOT = O1,
HEAP= O2

AFTER TRACING,
ROOT = O1,
HEAP= O2, O3

AFTER TRACING,
ROOT = O1,
HEAP= NULL;
DELETE = O2, O3

*FIG. 34*

DYNAMIC FIXING OF MEMORY VIEWS

FIG. 36

## DYNAMIC FIXING OF MEMORY VIEWS

FIG. 37

## DYNAMIC FIXING OF MEMORY VIEWS
### FIX

NumberEntries=3

| .JSM | .MPU |
|------|------|
| @01FJSM | @01FMPU |
| @02FJSM | @02FMPU |
| @03FJSM | @03FMPU |

@T →

@01FJSM →
@01FMPU →

@02FJSM →
@02FMPU →

@03FJSM →
@03FMPU →

**MONOPROCESSEUR**

FIX call on MPU or on JSM
For (i=0; i<numberEntries; i++) *(T.MPU[i]) = *(T.JSM[i]);

PEUT ÊTRE ADAPTÉ EN FONCTION DU
RAPPORT DE FRÉQUENCE MPU/JSM

**MULTIPROCESSEUR**

FIX call on JSM
For (i=0; i<numberEntries/2; i++)
    *(T.MPU[i]) = *(T.JSM[i])
SWI End_FIXJSM

FIX call on MPU
For (i=numberEntries/2; i<numberEntries; i++)
    *(T.MPU[i]) = *(T.JSM[i])

AFIN DE GÉRER LA CRÉATION DE NOUVEAUX OBJECTS, ON UTILISE 2 TABLES
UNE TABLE TSTEP STOCKE LES POINTEURS POUR LES NOUVEAUX OBJECTS
LORS D'UN FIX, ON FUSIONNE LA TSPET PRÉCÉDENTE AVEC L'ACTUELLE ET ON
RÉINITIALISE UNE NOUVELLE TSTEP POUR LE PROCHAIN STOCKAGE

## FIG. 38

## RE-EXECUTION OF A HARDCODED BC USEQUENCED
### MONITORING "goto" BY U-SEQUENCE AND EXECUTION BY HW

APPLICATION CODE

BYTECODE CONTROL TABLE

```
        100
PC ──▶ 101: goto #-4
    ┌─▶ 97: ...
```

| U-SEQ @ | U | TW | |
|---------|---|----|--|

*FIG. 39*

SW

1

u_PC

U-SEQUENCE
HANDLER

10: ADDI R12, #-1
end

C-ISA
DECODER

HW OF goto

BYTECODE
DECODER

## CMPAL INSTRUCTION
### CMP, CMPAL

Rd [ X ]

Rs [ Y ]

[ 0...            ...0 ]

CMP ◀── cmpal

STAT [          ]

Z, N, C, V

*FIG. 42*

EP 1 622 009 A1

## PACK INSTRUCTION

*FIG. 40*

EP 1 622 009 A1

UNPACK INSTRUCTION

*FIG. 41*

LLD INSTRUCTION
CACHE - BASED

FIG. 43

EP 1 622 009 A1

JSM BENEFITS:
- PERFORMANCE OF DMA HARDWARE BY FIRMWARE
- USE U-STACK TO SAVE ARn IF REQUIRED
- SUPPORTS JVM AND OS SERVICES

DMA CONSTRUCTION
OS OR JVM SERVICES

```
;JSM DMA_1 handler
Repeat (block copy = 2 cycles)
MemCopy AR0+AR1++V1; AR2++V2
```

DMA HANDLER USE U-SEQUENCE
TO TRANSFER FROM I/O OR
MEMORY TO MEMORY

*FIG. 44*

EP 1 622 009 A1

## DYNAMIC COMPILER PROBLEM AND RESOLUTION
### PROBLEM

CONSIDERING AN OPTIMIZATION THAT REQUIRED A DYNAMIC DATA VALUE. THE
COMPILER CAN'T GENERATE THE OPTIMIZED CODE STATICALLY (BLUE TO RED)
WE DON'T WANT TO RUN A SECOND TIME THE COMPILER TO OPTIMIZE THE APPLICATION

ORIGINAL
APPLICATION
SOURCE CODE

OPTIMIZATION
CAN'T BE DONE
STATICALLY

OPTIMIZED
APPLICATION
CODE

*FIG. 45*

## ADAPTABLE DYNAMIC COMPILER RESOLUTION
### DYNAMIC COMPILER RESOLUTION PROBLEM

CONSIDERING AN OPTIMIZATION THAT REQUIRED A DYNAMIC DATA VALUE. A DYNAMIC
COMPILER RESOLUTION SOLVES THAT PROBLEM. IF THE PIECE OF CODE USE SEVERAL
VALUES FOR DYNAMIC DATA VALUE, ONE RESOLUTION CAN'T SOLVE THE PROBLEM

ORIGINAL
APPLICATION
SOURCE CODE

DYNAMIC
COMPILER
RESOLUTION

RESOLUTION
DONE

OPTIMIZED APPLICATION
CODE FOR **ONE** DATA

*FIG. 60*

DYNAMIC COMPILER PROBLEM AND RESOLUTION

RESOLUTION

RESOLUTION STEP

RESOLUTION DONE

APPLICATION EXECUTION

DURING THE FIRST EXECUTION, THE 'RESOLUTION' CODE IS EXECUTED, AND THE CORRESPONDING OPTIMIZED APPLICATION CODE IS PRODUCED. AFTER THAT, ONLY THE OPTIMIZED CODE IS IN MEMORY AND IS EXECUTED

PREPARATION STEP OF RESOLUTION

MODIFIED APPLICATION SOURCE CODE

APPLICATION DEPENDANT COMPILER CODE THAT NEED TO BE RESOLVED DYNAMICALLY ACCORDING TO DYNAMIC DATA

CODE GENERATED BY COMPILER THAT REALISES THE GENERATION OF THE OPTIMIZED APPLICATION CODE ACCORDING TO DYNAMIC DATA

ORIGINAL APPLICATION SOURCE CODE

COMPILER

*FIG. 46*

## FIG. 47

DATA AND RUNTIME MONITORING AND ANALYSIS FOR COMPILATION

① JSM DIRECT BYTECODES EXECUTION BY HARDWARE OR U-SEQUENCES

② JSM U-SEQUENCES AND HARDWARE SUPPORT HOTSPOT TO MONITOR METHODS TO BE COMPILED. ONE OR SEVERAL DATA MONITORING AND ANALYSIS IS DONE HERE

③ JSM REPORTS MONITORING TO IDENTIFY WHAT TO COMPILE AND GUIDE COMPILATION PROCESS

④ ARM ENGAGES THE COMPILATION WITH THE CORRESPONDING OPTIMIZATION PLAN

⑤ COMPILED CODE: MIX OF BYTECODE AND JSM C-ISA CODE

① JSM EXECUTE MIXED MIXED JAVA
⑥ BYTECODE AND JSM COMPILED CODE

OS TREATMENT ACTIVATION
JSM OS COMMAND

JSM EXECUTES THE
MICRO-SEQUENCE AND
AFTER RESUME ITS
EXECUTION

COMMAND 'EXECUTE
MICROSEQUENCE'

MICRO-SEQUENCES

JSM CODE

JSM EXECUTES
IMMEDIATELY THE
ASSOCIATED
MICRO-SEQUENCE

ANY KIND OF OS OR
SYSTEM COMMAND CAN BE
DONE AND BUILD ON JSM

REGISTERS

REGISTERS

USTACK

DECODER

OS

LOAD-
STORE
UNIT

REGISTERS

AGU

IU

FPU

IU

DECODER

JSM

LocalVar

HANDLERS

ARM

DC

IC

DC

IC

MEMORY

*FIG. 48*

EP 1 622 009 A1

# JSM AND MPU INTERRUPT MANAGEMENT
## JSM AS COMMAND FOR INTERRUPTS

JSM EXECUTES THE
MICRO-SEQUENCE AND
AFTER RESUME ITS
EXECUTION

COMMAND 'EXECUTE
MICROSEQUENCE'

MICRO-SEQUENCES  JSM CODE

JSM EXECUTES
IMMEDIATELY THE
ASSOCIATED
MICRO-SEQUENCE

AN INTERRUPT HANDLER ON
MPU REALISES A CALL THE
THE APPROPRIATE INTERRUPT
MICROSEQUENCE ON JSM

JSM

REGISTERS

REGISTERS

USTACK

AGU

IU

FPU

DECODER

LocalVar

DC

HANDLERS

IC

OS

LOAD-STORE UNIT

OS INTERRUPT LAYER

REGISTERS

IU

DECODER

ARM

DC

IC

MEMORY

*FIG. 49*

OPTIONAL NOTIFICATION

INTERRUPT

EP 1 622 009 A1

# JSM AND MPU INTERRUPT MANAGEMENT

JSM BENEFITS:
* JSM SUPPORTS INTERRUPTS WITHOUT MPU PENALTY

*FIG. 50*

JSM PERIPHERALS
I/O SPACE 4GBYTES

* HW ACC.
* I/O
* MEMORY
* GATES
* . . .

OS

REGISTERS

REGISTERS
USTACK

DECODER

LOAD-STORE UNIT

REGISTERS

DECODER

AGU

IU

FPU

IU

JSM

ARM

LocalVar

HANDLERS

DC

IC

DC

IC

JSM U-SEQ

MEMORY

ACKNOWLEDGE

INTERRUPT VECTOR

* VECTORS PROGRAMMING
* ACKNOWLEDGE FOR MPU IT

;JSM INTERRUPT HANDLER
. . .

JSM AND MPU INTERRUPTS

EP 1 622 009 A1

JAVA THREAD ABSTRACTION
JAVA VIEW

• TO EACH JAVA THREAD IS ASSOCIATED AN *ExecutionFlow* OBJECT

   - A NATIVE METHOD *int ExecutionFlowCreate(Void)* IS CALLED THROUGH THE CONSTRUCTOR
   AND CREATES THE LOW-LEVEL THREAD CONTEXT
   - A *run()* METHOD MUST BE IMPLEMENTED BY UPPER LEVELS, IT IS THE ENTRY OF THE
   EXECUTION FLOW
   - A NATIVE METHOD *int ExecutionFlowDestroy(void)* IS USED TO DESTROY THE THREAD
   CONTEXT

• FOR ONE JEE EXISTS ONE AND ONLY ONE *ExecutionFlowScheduler* OBJECT

   - A NATIVE METHOD *SetEFActive(ExecutionFlow ef)* REALIZES THE COMMUTATION SWITCH
   TO THE ExecutionFlow *ef*.
   - FOR THE JAVA VIEW, THE GARANTY THAT AFTER THE *SetEFActive* HAS BEEN DONE, THE
   FLOW HAS EFFECTIVELY BEEN SWITCHED (NO EXECUTION OF THE FOLLOWING BYTECODES)

## *FIG. 51*


JAVA THREAD ABSTRACTION
COMMENTS

  • ANY KIND OF SCHEDULER CAN BE DONE USING A THREAD SWITCH
  • A THREAD CAN BE DONE USING
    - A JVM THREAD (THE SWITCH IS DONE TOTALLY BY THE JVM BETWEEN 2
    OPCODES USING A JAVA FRAME SWITCH)
    - A OS THREAD (THE PROCESSOR LAYER IS TOTALLY IN CHARGE OF THIS
    FEATURE USING LOW-LEVEL PROCESSOR THREAD CONTEXT).
  • IT DEPENDS ON THE SCHEDULER REQUIREMENTS

## *FIG. 52*

## SUPPORTING INTERRUPTS IN JAVA
### INTERRUPTS
BEFORE THE DETAILS, LET'S SEE THE PRINCIPLE

OS VIEW

IT

ONE THREAD A IS RUNNING

OS IT HANDLER.
DURING ITS EXECUTION
NO OTHER IT AT THE
SAME LEVEL ARE VISIBLE

ONE THREAD IS
RUNNING. THIS THREAD
CAN BE DIFFERENT
FROM A ACCORDING TO
SCHEDULING POLICY

• IN ADDITION
  - NESTED IT LEVELS WITH PRIORITIES
  - ENABLING AND STOPPING ONE itLevel IS
   ALLOWED.
    • NO IT DURING THESE STEPS
    • AN IT MISS IS POSSIBLE
  - MASQUING AND UNMASQUING ALL itLevels
   IS ALLOWED
    • IT ARE DELAYED BETWEEN THESE STEPS
  - LOW-LEVEL IT

*FIG. 53*

## SUPPORTING INTERRUPTS IN JAVA
### INTERRUPTS
JAVA VIEW, PRINCIPLE: ASSOCIATING A JAVA THREAD TO EACH INTERRUPT.
OsInterrupt CLASS

IT

—— JAVA FLOW

—— JAVA HANDLER FLOW

—— PROCESSOR LAYER FLOW

OS IT HANDLER.
SWITCH TO A JAVA EXECUTION FLOW TO
REALIZE THE JAVA METHOD ASSOCIATED
TO THE JVM WHEN AN IT OCCURED

JAVA METHOD INSIDE A JAVA THREAD
ASSOCIATED TO THE IT HANDLER

A METHOD INDICATES THE END OF
THE IT HANDLER TO END THE
HANDLER AND RE-ENABLE THE IT

*FIG. 54*

SUPPORTING INTERRUPTS IN JAVA
INTERRUPTS
JAVA VIEW, APIs

- FOR EACH EXISTING INTERRUPTIONS (i.e. KEYBOARD, ...) EXISTS A CLASS (i.e. *osKeyboardHandler*, ...) THAT REPRESENTS THE CORRESPONDING INTERRUPTION
- INSIDE THIS CLASS, SOME FIELDS REPRESENTS THE INPUT DATA OF THE INTERRUPT (i.e. THE LAST TYPED CHAR, ...)
- ONE (AND ONLY ONE) JAVA HANDLER (i.e. *jeeKeyboardHandler* ) MUST BE ASSOCIATED TO THIS CLASS AND MUST IMPLEMENTS A METHOD *Handler()*;
- THE *Handler()* METHOD USES THE FIELDS OF THE INTERRUPT CLASS TO SOLVE THE INTERRUPTION
- AN INVOCATION OF THE *endOfInterrupt()* METHOD IS DONE TRANSPARENTLY AFTER THE EXECUTION OF THE *Handler()* METHOD

*FIG. 55*

SUPPORTING INTERRUPTS IN JAVA
INTERRUPTS
JAVA VIEW, SOURCE CODE FOR KEYBOARD HANDLER

```
Class JeeKeyboardHandler extends OsKeyboardHandler
{
    public void Handler(){System.out.print("Car="+car);}
}
```

HERE IS THE REAL HANDLER!

```
Class OsKeyboardHandler extends osInterrupt
{
    char car;
    abstract Handler();
}
```

THIS FIELD IS ASSOCIATED TO THE LAST CHARACTER PRESSED

```
Class osInterrupt extends ExecutionFlow
{ ...
    void run(void)
    {
        while(1==1)
        { Handler();endOfInterrupt();}
    }
    abstract Handler();
}
```

IDENTIFY THE EXECUTION FLOW TO SWITCH ON AFTER A 'REAL' KEYBOARD INTERRUPT

THE HANDLER REALIZES AT EACH ACTIVATION THE HANDLER METHOD AND AN endOfInterrupt INVOCATION

*FIG. 56*

SUPPORTING INTERRUPTS IN JAVA
INTERRUPTS
JAVA VIEW, EXTENSION OF osInterrupts APIs

- MASQUING
  - *osMaskAllInterrupts()*;
  - *osUnMaskAllInterrupts()*;
    - USED FOR CRITICAL SECTIONS THAT ARE NOT PROTECTED BY A SEMAPHORE (SEE SEMAPHORE SECTION)

- INHIBITION
  - *osDisable()*;
  - *osEnable()*;
    - ENABLE AND DISABLE OF THE CONNECTED INTERRUPT

- OS GARANTY FOR JAVA VIEW
  - NESTED INTERRUPTS GARANTY
  - CALLS FOR MASQUING AND INHIBITION NEEDS TO BE GARANTY
    - IT DELAYED IF MASQUING
    - IT DELETED IF INHIBITION

*FIG. 57*

SUPPORTING INTERRUPTS IN JAVA
INTERRUPTS
MONITOR

- MONITORS ARE EXPRESSED THROUGH BYTE-CODES AND ARE SUPPOSED TO BE REALIZED BY THE JVM
- BUT A MONITOR INFLUENCE THE SCHEDULING POLICY
- SO, WHEN A *monitorEnter* OR monitor*Exit* OCCURS, AN INTERRUPT IS SENT TO THE SCHEDULER USING AN INTERRUPT JAVA THREAD
- POSSIBILITY
  - SOME JOBS CAN POTENTIALLY BE DONE BY THE JVM BEFORE SIGNALING HANDLER TO AVOID PREEMPTION

*FIG. 58*

*FIG. 59*

1.1.1 STATUS AND CONTROL REGISTER (R15)

| 31 - 28 | | | | 27 - 24 | | | | 23 - 20 | | | | 19 - 16 | | | | 15 - 12 | | | | 11 - 8 | 7 - 4 | 3 - 0 | | |
|---|---|---|---|---|---|---|---|---|---|---|---|---|---|---|---|---|---|---|---|---|---|---|---|---|
| V | C | N | Z | X | U | L | Ls | Wi | Tw | Rs | Nt | Zt | P2 | P1 | P0 | F4 | F3 | F2 | F1 | F0 | RPTPOS | M | A | J |

| FIELD | JSM ACCESS | MPU ACCESS | DESCRIPTION |
|---|---|---|---|
| V | R W* | R W | ALU OVERFLOW |
| C | R W* | R W | ALU CARRY |
| N | R W* | R W | ALU NEGATIVE |
| Z | R W* | R W | ALU ZERO |
| X | R W* | R W | STORE EXCLUSIVE RESULT ; WHEN X = 1, LAST STORE EXCLUSIVE HAS BEEN SUCCESSFUL |
| U | R W* | R W | MICRO-SEQUENCED MODE ; WHEN U = 1, JSM IS EXECUTING A MICRO-SEQUENCE |
| L | R W* | R W | LOOP MODE. L = 1 INDICATES THAT JSM PROGRAM IS EXECUTING WITHIN A HARDWARE LOOP INITIATED BY RPT OR RPTI INSTRUCTION |
| Ls | R W* | R W | LOOP SINGLE MODE. Ls = 1 INDICATES THAT JSM PROGRAM IS EXECUTING WITHING A SINGLE HW LOOP INITIATED BY RPT/RPTI WITH #S = 0 |
| Wi(**) | R W* | R W | WIDE DECODED. Wi = 1 INDICATES WIDE PREFIX DETECTED ON CURRENTLY DECODED JAVA OPCODE |
| Tw | R W* | R W | EXECUTE TWICE. Tw = 1 WITHIN A MICROSEQUENCE INDICATES THAT HW EXECUTION OF THE BYTECODE HAS TO BE PERFORMED WHEN RETURNING TO PC FETCH MODE |
| Rs | R W* | R W | RUN/STOP. Rs = 1 INDICATES THAT JSM IS RUNNING |
| Nt Zt | - | - | RESERVED |
| P2 .. P0 | R W* | R W | PRIVILEGED COMMUNICATION FLAGS : GENERIC SW-DEFINED USAGE FLAGS WRITTEN BY MPU THAT JSM CAN ONLY READ |
| F4 .. F0 | R W | R W | FREE COMMUNICATION FLAGS : GENERIC SW-DEFINED USAGE FLAGS WRITTEN AND TESTED BY BOTH JSM AND MPU |
| BK SIZE | R W | R W | HW LOOP BLOCK SIZE |
| M | R W | R W | INTERRUPT MASK CONTROL : WHEN M = 1, JSM CANNOT BE STOPPED BY THE MPU |
| A | R W | R W | ARITHMETIC MODE : WHEN A = 1, OPERATORS ARE SATURATED |
| J | R W | R W | JAVA DECODE MODE ; WHEN J = 1, JAVA BYTECODE FORMAT IS DECODED |

(*) : RESTRICTED WRITE CAPABILITY. SEE RESTRICTIONS MENTIONED AT SECTION 1.6.11   (**) : Wi KEEPS ITS VALUE WHILE uPC FETCH MODE IS ACTIVE

## ADAPTABLE DYNAMIC COMPILER RESOLUTION

ADAPTABLE DYNAMIC COMPILER RESOLUTION

WHAT WE DO IS THAT THE COMPILER MAKES A DYNAMIC MONITORING AND ANALYSIS OF THE USED DATA VALUES, AND GENERATES SEVERAL OPTIMIZATION CODE. IF REQUIRED, THE GENERAL PROCESS IS THEN DONE.

ORIGINAL
APPLICATION
SOURCE CODE

SUPPOSE A LOOP THAT USED VALUE 12 AND 32 MOST OF THE TIME AND OTHER DATA OTHERWISE

ADAPTABLE DYNAMIC COMPILER RESOLUTION

OPTIMIZED APPLICATION CODE FOR DATA 12

OPTIMIZED APPLICATION CODE FOR DATA 32

CODE TO IDENTIFY WHERE TO BRANCH

OPTIMIZED APPLICATION CODE FOR GENERAL DATA

*FIG. 61*

# ADAPTABLE DYNAMIC COMPILER RESOLUTION
ADAPTABLE DYNAMIC COMPILER RESOLUTION

ANALYSIS AND RESOLUTION

ORIGINAL APPLICATION SOURCE CODE

MODIFIED APPLICATION SOURCE CODE

EXAMPLE FOR 2 RESOLUTIONS

COMPILER

OPTIMIZED APPLICATION CODE FOR GENERAL DATA

APPLICATION DEPENDANT COMPILER CODE THAT NEED TO BE RESOLVED DYNAMICALLY ACCORDING TO DYNAMIC DATA

DYNAMIC DATA MONITORING, IDENTIFICATION OF DATA VALUE TO RESOLVED

CODE GENERATED BY COMPILER THAT REALISES THE GENERATION OF THE OPTIMIZED APPLICATION CODE ACCORDING TO ONE DYNAMIC DATA. ACTIVATED WHEN ACCURACY OF DETECTION OF DATA USED

RESOLUTION DONE

RESOLUTION DONE

SEVERAL RESOLUTION CAN BE DONE, GLUES ADDED TO BRANCH TO THE CORRECT SEQUENCE, IF REQUIRED, THE DYNAMIC DATA MONITORING CAN BE DONE TO IDENTIFY CHANGE OF MOST USED DYNAMIC DATA AND ENGAGED NEW RESOLUTIONS

*FIG. 62*

EP 1 622 009 A1

MICRO STACK SOFTWARE USE

1 - GET DATA

@src

DATA
src

NO DATA USTACK MISSES

USTACK

2 - COMPUTE ON DATA

@dest

DATA
dest

3 - PRODUCE DATA

ACCESS USING USTACK USING ITS SIZE TO
AVOID EXTERNAL MICRO STACK MISSES (NO
MORE THAN 8 ENTRIES USED IN A SAME TIME)
USE OF USTACK FOR COMPUTATIONS BEFORE
WRITING IN MEMORY
DUE TO USE OF INDEPENDENT HARDWARE
BLOCKS, PARALLELISM IN EXECUTION
USE OF USTACK TO MANAGE THE MEMORY
ACCESS PENALTIES

SOFTWARE SEQUENCE

*FIG. 63*

// Get data

// Compute Data

// Produce data

MULTIPLE OBJECT REPRESENTATION

PACK AND UNPACK METHODS ARE IN CHARGE OF THE CONVERSION BETWEEN THE TWO REPRESENTATIONS

THUS, A VERY SPECIFIC DATA STRUCTURE LIKE BIT BASED, OR ANY KIND OF OTHER DATA STRUCTURES CAN BE REPRESENTED TO A CORRESPONDING JAVA VIEW, MANIPULATED IN JAVA AND UPDATED TO THE REAL REPRESENTATION. USING PACK TO PACK THE STRUCTURE AND UNPACK METHOD TO UNPACK THE STRUCTURE

THE JAVA SOFTWARE MUST TAKE CARE OF REPRESENTATIONS. FOR EXAMPLE IF AN INTEGER IS USED TO REPRESENT A 13 BIT VALUE, THE VALUE OF THE INTEGER MUST NOT EXCEED 13 BIT REPRESENTATION

ANY KIND OF LOW LEVEL HARDWARE DATA REPRESENTATION STRUCTURE CAN BE MAPPED IN JAVA :

- INTERRUPTS,
- PAGE TABLE
- SEGMENTS,
- TASK ATTRIBUTES,
- . . .

ADDRESSABLE MEMORY

OBJECT REF

JAVA OBJECT VIEW BY THE APPLICATION

PACK METHOD

UNPACK METHOD

SECOND REPRESENTATION OF OBJECT, VIEW BY RUNTIME

*FIG. 64*

VIRTUAL MEMORY IN JAVA
SEGMENTATION

PHYSICAL
MEMORY
SPACE

```
Class Segment {
Int Access
Int Limit
long BaseAddress;

Segment {
    create_low_level_Segment()
}


PACK()
UNPACK()
}
```

OBJECT SEGMENT

PACK ( ) UNPACK

| ACCESS | LIMIT |
| BASE ADDRESS | |

CODE

ADDRESS

| SEGMENT DESC REF | INDEX IN SEGMENT |

*FIG. 65*

VIRTUAL MEMORY IN JAVA

PHYSICAL
MEMORY
SPACE

ADDRESS

| PAGE DIRECTORY INDEX | PAGE TABLE INDEX | INDEX IN PAGE |

PAGE

TABLE PAGE DESCRIPTOR

PAGE DESCRIPTOR

TABLE PAGE

DIRECTORY

*FIG. 67*

*FIG. 66*

```
Class Directory {

    PageTableDesc [DIRECTORY_NUMBER_ENTRIES] directory;

    Directory{
    create_lowlevel_directory()
    }

    PACK() { for (int ii=0;ii< DIRECTORY_NUMBER_ENTRIES; ii++)
            directory[ii].PACK();
        }
    UNPACK() {for (int ii=0;ii< DIRECTORY_NUMBER_ENTRIES; ii++)
            directory[ii].UNPACK();
        }
}

Class PageTableDesc {

    Integer size;
    Integer protection;
    Booolean bitB;

    PageTable pageTable{}

    Native PACK() {}

    Native UNPACK() {}
}
```

```
Class Pagetable {

    TableDescriptor [PAGETABLE_NUMBER_ENTRIES] directory;

    PageTable{
    create_lowlevel_directory()
    }

    PACK() { for (int ii=0;ii< PAGETABLE_NUMBER_ENTRIES; ii++)
            directory[ii].PACK();
        }
    UNPACK() {for (int ii=0;ii< PAGETABLE_NUMBER_ENTRIES; ii++)
            directory[ii].UNPACK();
        }
}

Class TableDescriptor {

    Integer size;
    Integer Address;
    Integer protection;
    Booolean Access;
    Char protection

    Native PACK() {}

    Native UNPACK() {}
}
```

EP 1 622 009 A1

## *FIG. 68*    ISR DESIGN IN JAVA

```
Class MyHandler extend Interrupt Handler {
        • • •
        Public Handler();

        MyHandler()
        {
        interruptTable.insertmeonlevel( this, 2 );
        }
}

Class InterruptHandler {
        Abstract Handler();
}

Class InterruptTable
{
        ARRAY[255] interruptTable;

        Native PACK();

        Static insertmeonlevel(objectRef O, char level) {
                interruptTable[level] = O;
                PACK();
        }
}
```

## ISR DESIGN IN JAVA

## *FIG. 69*

IT LEVEL 2
| HW

```
Jvm_handler :
push all
Get O=HandlerobjectRef of it2
Invoke O.handler();
pop all
ret
```

JAVA VIEW    LOW-LEVEL VIEW    TREATMENT

SYSTEM CALL DESIGN IN JAVA
JAVA API ISOLATION

APPLICATION
OF RING 1

APPLICATION
OF RING

JAVA
CODE

APIs RING 1

APIs RING 2

NATIVE
CODE

JVM

*FIG. 70*

SYSTEM CALL DESIGN IN JAVA
JAVA API ISOLATION SYSTEM CALL FOR RING PROTECTION AND OTHER API ACCESS

APPLICATION
OF RING 1

APPLICATION
OF RING 2

SYSCALL

JAVA
CODE

APIs RING 1

APIs RING 2

NATIVE
CODE

JVM

*FIG. 71*

## SYSTEM CALL DESIGN IN JAVA

| IN PACKAGE 2 | IN PACKAGE 1 |

```
Class toto {
      private int p1,p2;
      private int result;

      public int A(pp1,pp2)
      {
            p1=pp1;
            p2=pp2;
            os.syscall("package1", "A", this);
            return result;
      }
}

Native Syscall ( CallingPackage current,
      packageName ToAccess p,
      methodToCall method, CallingObject callingObject)
{
      Object OO;

      // check rights
      if (!checkRights();) through INVALID_SYS_CALL;

      // if ok, change code segment in VM
      VmSwitchCodeTo(p)

      // create an object for invocation
      OO = VmCreateObject(p,m);

      // call the method Syscall associated to method
      // on the example, will make OO.SyscallA(this)
      VmCallMethod(OO, callingObject);

      // after the execution of Called method
      // restore initial code segment
      VmSwitchCodeTo(current);

      // end of syscall
      return;
}
```

```
Class toto {
      private int p1,p2;
      private out result;

      public SyscallA(objectRef O)
      {
            O.result = A(o.P1, o.P2);
      }

      public int A(pp1,pp2)
      {
            . . .
      }
}
```

*FIG. 72*

## NESTED OBJECT PRINCIPLE

OBJECT A

OBJECT B

NESTED
ZONE

NestObject(ObjectB,
        field name base ObjectB,
        ObjectA,
        field name base ObjectA,
        Size);

PRINCIPLE :
• ObjectA AND ObjectB ARE SHARING LOGICALLY A FIELD ZONE TOGETHER
• NESTED ZONE OF ObjectA AND ObjectB HAVE THEIR OWN INTERNAL JAVA VIEWS, BUT HAVE
THE SAME PHYSICAL SIZE

### *FIG. 73*

## NESTED OBJECT PRINCIPLE
### NESTED OBJECT PRINCIPLE USE

LAYER TREATMENT FROM UP TO DOWN

LAYER3

LAYER2

LAYER1

LAYER TREATMENT FROM DOWN TO UP

EXAMPLE :
• OBJECT LAYER 3 IS NESTED TO OBJECT LAYER 2, WHICH IS NESTED TO OBJECT LAYER 1
• SO, OBJECT LAYER3 IS NESTED TO OBJECT LAYER 1 ALSO
CONSIDERING A NETWORK STACK, EACH LAYER CAN SHARE WITH OTHER THE SAME
PHYSICAL MEMORY

### *FIG. 74*

## NESTED OBJECT PRINCIPLE
### NESTED OBJECT PRINCIPLE IMPLEMENTATION USING INDIRECTION

Object3          Object2          Object1

NESTED
ZONE

USING INDIRECTION, NESTED OBJECT ZONES CORRESPOND TO SAME PHYSICAL MEMORIES
Object2 AND object1 HAVE JUST METADATA PRIVATE MEMORIES
NO COPIES TO MAINTAIN CONSISTENCY BETWEEN ZONES
EFFICIENT WAY TO BUILD A NETWORK PROTOCOL STACK STRUCTURE

*FIG. 75*

## NESTED OBJECT PRINCIPLE
### NESTED OBJECT PRINCIPLE IMPLEMENTATION USING DIRECT REPRESENTATION

Object3

Object2

Object1

NESTED
ZONE

NESTED
ZONE

NESTED
ZONE

CONSISTENCY
DONE BY JVM

CONSISTENCY
DONE BY JVM

USING DIRECT REPRESENTATION, NESTED OBJECT ZONES CORRESPOND TO
DIFFERENT PHYSICAL MEMORIES
VM MUST DO EXPLICIT COPIES TO MAINTAIN CONSISTENCY BETWEEN ZONES
ANY KIND OF CONSISTENCY CAN BE EXPRESSED
EFFICIENT WAY TO BUILD A NESTED DISTRIBUTED MULTI-THREAD LAYER

*FIG. 76*

## NESTED OBJECT PRINCIPLE
### EXTENSIONS WITH MULTIPLE NESTED AND PRIVATE PARTS

*FIG. 77*

## CONSTRUCTION OF A DATA-FLOW ANALYZER FOR A BYTECODE VERIFIER ON JSM
### BYTECODE VERIFIER USING JSM

*FIG. 78*

## CONSTRUCTION OF A DATA-FLOW ANALYZER FOR A BYTECODE VERIFIER ON JSM
### BYTECODE VERIFIER USING JSM

HARD-CODED OR NOT (HC) | μ-SEQUENCES TABLE

| | | |
|---|---|---|
| iadd | 1 | 0x000050 |
| imul | 1 | 0x000050 |
| iload | 1 | 0x000150 |
| Goto | 1 | 0x000300 |

**μ-SEQUENCE**
```
if ( stackPop == Integer &&
    stackPop == Integer )
  stackPush(Integer)
else
  error();
```

**μ-SEQUENCE**
```
if ( localVar(operand) == Intger )
  stackPush(Integer)
else
  error();
```

**μ-SEQUENCE**
```
mergeStackLocVar(pc, pc+operand);
...
```

PROVIDE USEQUENCE CONFIGURATION AND USEQUENCE CODE TO USE JSM FOR REALIZING A BYTECODE VERIFIER

HARDWARE DECODER USED

EFFICIENT BYTECODE VERIFIER

SUPPORT FUTURE EXTENSIONS BY ADAPTING MICRO SEQUENCES CODE

*FIG. 79*

EP 1 622 009 A1

MERGE OF COMPILER AND VM ACTIONS IN ONE INSTRUCTION
EXAMPLE ON JAVA GETFIELD OPCODE

| 23 : 20 | 19 : 16 | 15 : 12 | 11 : 8 | 7 : 4 | 3 : 0 |
|---------|---------|---------|--------|-------|-------|
| GETFIELD | | INDEX IN CONSTANT POOL | | | |

$I_{orig}$   COMPILER   $D_{orig}$

| 39 : 36 | 35 : 32 | 31 : 28 | 27 : 24 | 23 : 20 | 19 : 16 | 15 : 12 | 11 : 8 | 7 : 4 | 3 : 0 |
|---------|---------|---------|---------|---------|---------|---------|--------|-------|-------|
| JVM | | COMP GF | JVM GF | INDEX IN CONSTANT POOL | | | | Rd | Rs |

$I_{tmp}$   $I_{orig}$   VIRTUAL MACHINE   $D_{rewrite}$   $D_{orig}$   $D_{compile}$

| 39 : 36 | 35 : 32 | 31 : 28 | 27 : 24 | 23 : 20 | 19 : 16 | 15 : 12 | 11 : 8 | 7 : 4 | 3 : 0 |
|---------|---------|---------|---------|---------|---------|---------|--------|-------|-------|
| ALT | | REG32 | Rd | I  Rs | N A WB 0 AR | | V | | LLD |

$I_{compile}$   $I_{compile}$   $D_{compile}$   $D_{compile}$   $D_{compute}$   $D_{compute}$   $I_{compile}$

*FIG. 80*

EP 1 622 009 A1

MERGE OF COMPILER AND VM ACTIONS IN ONE INSTRUCTION
VIRTUAL MACHINE ACTION

| 39 : 36 | 35 : 32 | 31 : 28 | 27 : 24 | 23 : 20 | 19 : 16 | 15 : 12 | 11 : 8 | 7 : 4 | 3 : 0 |
|---------|---------|---------|---------|---------|---------|---------|--------|-------|-------|
| JVM | | COMP GF | JVM GF | INDEX IN CONSTANT POOL | | | | Rd | Rs |

$R_{Iorig}()$ — RESOLVE GETFIELD

$D_{compute}$

REWRITE

| 39 : 36 | 35 : 32 | 31 : 28 | 27 : 24 | 23 : 20 | 19 : 16 | 15 : 12 | 11 : 8 | 7 : 4 | 3 : 0 |
|---------|---------|---------|---------|---------|---------|---------|--------|-------|-------|
| ALT | | REG32 | Rd | I \| Rs | N \| A \| WB | 0 \| AR | V | | LLD |

*FIG. 81*

EP 1 622 009 A1

SYSTEM TO DISABLE WIDE HARDWARE DECODING BYTECODE PREFIX

*FIG. 82*

WIDE MICRO SEQUENCE SYSTEM

| WIDE | | OPCODE | | INDEX1 | INDEX2 |
|---|---|---|---|---|---|

256 BYTECODE
CONTROL RAM
C4 @ WIDE

INSTRUCTION
REG

WIDE → ALIGNMENT
MUX ← CTRL BYTECODE HW
DECODER

USEQ RAM

USEQ WIDE

32 BIT OPR

C-ISA HW
DECODER

*FIG. 83*

## SPLITTING THE EXECUTION OF FLOATING POINT ARITHMETIC
## OPERATIONS BETWEEN HARDWARE AND SOFTWARE

FLOW CHART FOR FMUL OPERATION FOR NORMAL CASE. NUMBERS IN PARENTHESIS REFER TO THE NUMBER OF BITS IN THE BIT FIELDS. SHADED PARTS ARE MOST APPROPRIATE FOR EXECUTION BY SOFTWARE

*FIG. 84*

# SPLITTING THE EXECUTION OF FLOATING POINT ARITHMETIC OPERATIONS BETWEEN HARDWARE AND SOFTWARE

TOS    f2:

| S2 | e2(8) | m2(23) |
|----|-------|--------|

TOS-1   f1:

| S1 | e1(8) | m1(23) |
|----|-------|--------|

HW BEFORE USEQ BEGINS :
- POP f2 AND f1 FROM THE STACK
- UPDATE STATUS BITS FOR USEQ
- PUSH e1 AND e2 ONTO THE STACK
- FILL IN IMPLICITE BIT IN m1 AND m2

f_decode

HW MULTIPLIER/ADDER + ROUNDING + SIGN LOGIC

$+$      $\times$

SW USEQ :
1. IN PARALLEL WITH HW
   - EXP CALCULATION
   - SPECIAL CASE HANDLING
   - INITIAL TEST FOR OVERFLOW
   - INITIAL TEST FOR UNDERFLOW

OPR:

| s\|r' s' ...e'$_1$e'$_0$\|   m(23) |
|---|

2. AFTER HW IS FINISHED
   - FINAL TEST FOR OVERFLOW
   - TEST FOR UNDERFLOW
   - DENORMAL CASE HANDLIN
   - PACK FINAL ANSWE ON TOSg

SCHEMA FOR THE SOFTWARE/HARDWARE SYNCHRONIZATION

## FIG. 85

**European Patent Office**

**DECLARATION**
which under Rule 45 of the European Patent Convention
shall be considered, for the purposes of subsequent
proceedings, as the European search report

**Application Number**
EP 04 29 1918

| The Search Division considers that the present application, does not comply with the provisions of the EPC to such an extent that it is not possible to carry out a meaningful search into the state of the art on the basis of all claims | CLASSIFICATION OF THE APPLICATION (Int.Cl.7) |
|---|---|
| Reason: | G06F9/44 |

The present European patent application does not comply with the provisions of the EPC to such an extent that it is not possible to carry out a meaningful search into the state of the art on the basis of all the claims (Rule 45 EPC), the reason therefor being that this is a clear case of claims lacking support and insufficient disclosure. The present set of claims is made up of two independent claims, each of them being a broad claim supported by no disclosure covering any part of the scope of the claim. The broadness and the unclarity of the claims is such as to render a meaningful search over the whole of the claim impossible (see the Guidelines, B-VIII, 3 (1)).
Furthermore, the present application does not comply with Rule 27 EPC (a), (b) and (c).

The applicant's attention is drawn to the fact that a search may be carried out during examination following a declaration of no search under Rule 45 EPC, should the problems which led to the declaration being issued be overcome (see EPC Guideline C-VI, 8.5).

-----

| Place of search | Date | Examiner |
|---|---|---|
| Munich | 3 December 2004 | Lo Turco, S |

EPO FORM 1504 (P04C37)